# EUROPÄISCHE PATENTSCHRIFT

(11) **EP 3 362 407 B1**
(45) Veröffentlichungstag und Bekanntmachung des Hinweises auf die Patenterteilung: **23.07.2025**
(21) Anmeldenummer: 16762743.9
(22) Anmeldetag: 24.08.2016
(51) Int. Cl.: C01B 32/366, C01B 32/336, C01B 32/39, B01J 20/20, A62D 5/00, B01J 20/28

(54) **VERFAHREN ZUR HERSTELLUNG VON AKTIVKOHLE UND AUF DIESE WEISE HERGESTELLTE AKTIVKOHLE SOWIE DEREN VERWENDUNG**
METHOD FOR PRODUCING ACTIVATED CARBON AND ACTIVATED CARBON OBTAINED IN THIS WAY, AND USE THEREOF
PROCÉDÉ DE FABRICATION DE CHARBON ACTIF ET CHARBON ACTIF OBTENU PAR CE PROCÉDÉ, AINSI QUE SON UTILISATION

(30) Priorität: 10.12.2015 DE 102015015860; 25.01.2016 DE 102016101215
(43) Veröffentlichungstag der Anmeldung: 22.08.2018
(73) Patentinhaber: Blücher GmbH, 40699 Erkrath (DE)
(72) Erfinder: MODROW, Antje, Dr., 40699 Erkrath (DE); BÖHRINGER, Bertram, Dr., 40699 Erkrath (DE); GIEBELHAUSEN, Jann-Michael, 40699 Erkrath (DE)
(74) Vertreter: Von Rohr Patentanwälte Partnerschaft mbB
(86) Internationale Anmeldenummer: PCT/EP2016/069946
(87) Internationale Veröffentlichungsnummer: WO 2017/097447

(56) Entgegenhaltungen:
- EP-A1- 1 801 072
- WO-A1-01/83368
- WO-A1-2005/016819
- WO-A1-2014/183927
- WO-A1-99/28234
- DE-U1- 202009 010 612
- HASEGAWA G ET AL: "Fabrication of activated carbons with well-defined macropores derived from sulfonated poly(divinylbenzene) networks", CARBON, ELSEVIER, OXFORD, GB, vol. 48, no. 6, 1 May 2010 (2010-05-01), pages 1757 - 1766, XP026926482, ISSN: 0008-6223, [retrieved on 20100118], DOI: 10.1016/J.CARBON.2010.01.019

## Beschreibung

Die vorliegende Erfindung betrifft das technische Gebiet der Adsorptionsmaterialien und insbesondere der Herstellung von Aktivkohle.

Insbesondere betrifft die vorliegende Erfindung ein Verfahren zur Herstellung von Aktivkohle, insbesondere partikulärer Aktivkohle, mit erhöhtem Meso- bzw. Makroporenvolumenanteil, vorzugsweise mit erhöhtem Mesoporenvolumenanteil.

Darüber hinaus betrifft die vorliegende Erfindung auch eine gemäß dem erfindungsgemäßen Verfahren erhältliche Aktivkohle, insbesondere partikuläre Aktivkohle, bzw. eine Aktivkohle als solche, wobei die Aktivkohle nach der Erfindung einen erhöhten Meso- bzw. Makroporenvolumenanteil, vorzugsweise einen erhöhten Mesoporenvolumenanteil aufweist.

Die vorliegende Erfindung betrifft auch die Verwendungen der Aktivkohle nach der Erfindung.

Darüber hinaus betrifft die vorliegende Erfindung Schutzausrüstungen bzw. Schutzgegenstände aller Art, welche unter Verwendung der Aktivkohle nach der Erfindung hergestellt sind bzw. welche die erfindungsgemäße Aktivkohle aufweisen.

Schließlich betrifft die vorliegende Erfindung auch Filter und Filtermaterialien aller Art, welche unter Verwendung der Aktivkohle nach der Erfindung hergestellt sind bzw. welche die erfindungsgemäße Aktivkohle aufweisen.

Aktivkohle weist üblicherweise einen hohen Gehalt an Kohlenstoff auf bzw. besteht zumindest im Wesentlichen aus Kohlenstoff, wobei Aktivkohle im Allgemeinen eine poröse Struktur mit großer innerer Oberfläche aufweist. Dabei sind die Poren der Aktivkohle untereinander verbunden, so dass es sich bei Aktivkohle insbesondere um ein offenporiges System handelt, bei welchem der Kohlenstoff sozusagen als Gerüst- bzw. Matrixmaterial zur Ausbildung des Porensystems mit der entsprechend hohen inneren Oberfläche dient. Aufgrund ihrer Porosität weist Aktivkohle als solche im Allgemeinen recht unspezifische adsorptive Eigenschaften auf, so dass Aktivkohle als Adsorptionsmittel in zahlreichen technischen Bereichen zum Einsatz kommt, wie im Bereich der Chemie, Medizin, Wasser- und Abwasserbehandlung, Lüftungstechnik sowie im Bereich des Schutzes vor nuklearen, biologischen und/oder chemischen Gift- bzw. Schadstoffen, wie Kampfstoffen.

Aktivkohle zeichnet sich somit durch das Vorhandensein eines speziellen Porensystems mit einer zugrundeliegenden Porengrößenverteilung (d. h. dem jeweiligen Anteil an Mirko-, Meso- sowie Makroporen am Gesamtporenvolumen) aus, welches für die adsorptiven Eigenschaften maßgeblich ist, wobei die das Porensystem ausbildenden Poren im Allgemeinen in Abhängigkeit von ihrer Größe klassifiziert bzw. eingeteilt werden. So wird die Porengröße und die Porengrößenverteilung in drei Größenordnungen unterteilt, wobei es sich hierbei um Mikroporen, welche im Allgemeinen einen Durchmesser von weniger als 2 nm aufweisen, um Mesoporen, welche im Allgemeinen einen Durchmesser von 2 nm (einschließlich) bis 50 nm (einschließlich) aufweisen, und schließlich um Makroporen mit einem Porendurchmesser von mehr als 50 nm handelt. Hierzu kann auch auf nachfolgende Ausführungen verwiesen werden.

Insbesondere führt auch das steigende Bewusstsein der Verantwortung für die Umwelt sowie gesetzliche Auflagen zu einem steigenden Bedarf an Aktivkohle und insbesondere an Aktivkohle mit insgesamt verbesserten bzw. maßgeschneiderten Adsorptionseigenschaften. Insgesamt besteht im Stand der Technik somit ein hoher Bedarf, Adsorptionsmaterialien auf Basis von Aktivkohle bereitzustellen, welche insbesondere auf Basis der gezielten Einstellung der Porengrößenverteilung spezielle Adsorptionseigenschaften bzw. hohe Adsorptionskapazitäten bei gleichzeitig hoher mechanischer Beanspruchbarkeit bzw. Stabilität aufweisen, insbesondere im Hinblick auf spezielle technische Einsatzgebiete der bereitgestellten Aktivkohlen. Diese Anforderungen werden jedoch durch Aktivkohlesysteme des Standes der Technik nicht immer zur vollen Zufriedenheit erfüllt, was auch durch die im Stand der Technik bekannten Herstellungsverfahren von Adsorptionsmaterialien auf Basis von Aktivkohle begründet ist, welche nämlich nicht immer zu den gewünschten Ergebnissen führen.

So kann Aktivkohle im Allgemeinen aus pflanzlichen, tierischen, mineralischen oder petrochemischen Stoffen hergestellt werden, wobei als Ausgangsmaterialien beispielsweise Holz, Torf, Nussschalen, Braun- bzw. Steinkohle oder verschiedene Kunststoffe eingesetzt werden können. Aktivkohle wird im Allgemeinen durch Carbonisierung (synonym auch als Schwelung, Pyrolyse, Abbrand oder dergleichen bezeichnet) und anschließende Aktivierung der kohlenstoffhaltigen Ausgangsverbindungen bzw. Edukte (Ausgangsmaterialien) erhalten, wobei solche Ausgangsverbindungen bevorzugt werden, die zu ökonomisch vernünftigen Ausbeuten führen. Denn die insbesondere durch Abspaltung flüchtiger Bestandteile bei der Carbonisierung und durch den nachfolgenden Abbrand bei der Aktivierung auftretenden Gewichts- bzw. Materialverluste sind mitunter erheblich, was auch unter verfahrensökonomischen Aspekten nachteilig ist. Für weitergehende Einzelheiten der Aktivkohleherstellung kann beispielsweise verwiesen werden auf H. v. Kienle und E. Bäder, "Aktivkohle und ihre industrielle Anwendung", Enke Verlag Stuttgart, 1980*.*

Bei der Carbonisierung erfolgt im Allgemeinen die Umwandlung des kohlenstoffhaltigen Ausgangsmaterials zu Kohlenstoff, d. h. mit anderen Worten wird das Ausgangsmaterial sozusagen verkohlt. Die Beschaffenheit der erzeugten Aktivkohle - wie fein- oder grobporig, fest oder brüchig etc. - hängt dabei maßgeblich auch vom eingesetzten Ausgangsmaterial ab.

Das Grundprinzip der der Carbonisierung nachfolgenden Aktivierung (synonym auch als Pyrolyse oder dergleichen bezeichnet) besteht darin, einen Teil des bei der Carbonisierung generierten Kohlenstoffs selektiv und gezielt unter geeigneten Bedingungen abzubauen bzw. abzubrennen. Hierdurch entstehen zahlreiche Poren, Spalten und Risse, wobei die auf die Masse bezogene Oberfläche zunimmt. Bei der Aktivierung wird also ein gezielter Abbrand des zuvor carbonisierten Materials vorgenommen. Da bei der Aktivierung Kohlenstoff (insbesondere durch oxidative Prozesse) abgebaut wird, tritt bei diesem Vorgang ein gewisser Substanzverlust ein, welcher unter optimalen Bedingungen gleichbedeutend mit der angeführten Erhöhung der Porosität und einer Zunahme der inneren Oberfläche und somit des Porenvolumens ist. Die Aktivierung erfolgt im Allgemeinen unter selektiven bzw. kontrollierten, im Allgemeinen oxidierenden Bedingungen.

Aktivkohle wird in verschiedenen Formen verwendet, wie Pulverkohle, Splitterkohle bzw. Kornkohle, Formkohle und seit Ende der 1970er Jahre auch kugelförmige Aktivkohle ("Kugelkohle"). Kugelförmige Aktivkohle hat gegenüber anderen Formen von Aktivkohle eine Reihe von Vorteilen, welche sie für bestimmte Anwendungen besonders wertvoll oder sogar unverzichtbar macht: Kugelförmige Aktivkohle ist rieselfähig, relativ abriebfest und in diesem Zusammenhang auch relativ hart. Aufgrund ihrer Eigenschaften ist Kugelkohle für besondere Einsatzgebiete sehr interessant.

Aktivkohle, insbesondere in Kugelform, wird heute noch meist durch mehrstufige und mitunter aufwendige Verfahren hergestellt, wobei ein bekanntes Verfahren in der Herstellung von Kügelchen aus Steinkohlenteerpech und geeigneten asphaltartigen Rückständen der Erdölchemie besteht. Dabei wird das Ausgangsmaterial oxidiert - damit dieses unschmelzbar wird - und nachfolgend geschwelt bzw. aktiviert. Beispielsweise kann Aktivkohle insbesondere in Kugelform auch in einem mehrstufigen Verfahren ausgehend von Bitumen hergestellt werden, wobei diese mehrstufigen Verfahren sehr kostenintensiv sind, und der damit verbundene hohe Preis der resultierenden Aktivkohle verhindert ihren Einsatz in der zahlreichen Anwendung.

In diesem Zusammenhang wird in der WO 98/07655 A1 ein Verfahren zur Herstellung von Aktivkohle in Kugelform beschrieben, bei welchem zunächst eine Mischung, die einen aus der Diisocyanat-Herstellung stammenden Destillationsrückstand, einen kohlenstoffhaltigen Verarbeitungshilfsstoff und gegebenenfalls einen oder mehrere weitere Zusatzstoffe umfasst, zu rieselförmigen Kügelchen verarbeitet wird und anschließend die auf diese Weise erhaltenen Kügelchen carbonisiert und nachfolgend aktiviert werden.

Aus dem Stand der Technik ist zudem die Herstellung von Aktivkohle in Kugelform durch Carbonisierung und anschließende Aktivierung von neuen bzw. ungebrauchten oder aber gebrauchten Ionenaustauschern, welche mitunter Sulfonsäuregruppen enthalten, bzw. durch Carbonisierung von lonenaustauschervorstufen in Gegenwart von Schwefelsäure mit sich anschließender Aktivierung bekannt, wobei die Sulfonsäuregruppen bzw. die Schwefelsäure die Funktion eines Vernetzers aufweisen. Solche Verfahren sind beispielsweise in der DE 43 28 219 A1 und in der DE 43 04 026 A1 sowie in der DE 196 00 237 A1 einschließlich der deutschen Zusatzanmeldung DE 196 25 069 A1 beschrieben.

Insbesondere im Hinblick auf spezielle Anwendungen ist nicht nur die Geometrie bzw. die Formgebung der Aktivkohle von Bedeutung: Vielmehr kommt auch der Porosität, insbesondere dem Gesamtporenvolumen sowie der Porengrößenverteilung eine große Bedeutung zu, insbesondere im Hinblick auf die Ausbildung spezieller Adsorptionseigenschaften bzw. hoher Adsorptionskapazitäten. Dabei kommt insbesondere den Makroporen neben den adsorptiven Eigenschaften auch eine maßgebliche Funktion der Bereitstellung von Zugangswegen für Gase bzw. Flüssigkeiten in das Innere der Aktivkohle zu, so dass in der Folge eine Adsorption der zuvor in das Porensystem aufgenommenen Substanzen möglich ist.

In diesem Zusammenhang ist bei einer Reihe von Anwendungen insbesondere eine hohe Meso- und Makroporosität, insbesondere eine hohe Mesoporosität, der Aktivkohle (d. h. ein großer Meso- und Makroporenvolumenanteil, insbesondere ein großer Mesoporenvolumenanteil, bezogen auf das Gesamtporenvolumen), von Bedeutung, wie es beispielsweise bei der Verwendung von Aktivkohle zur Herstellung bestimmter Adsorptionsfiltermaterialien z. B. für Schutzbekleidung gegenüber nuklearen, chemischen bzw. biologischen Gift- bzw. Schadstoffen (ABC-Schutz), für die Adsorption von Giftstoffen, Schadstoffen und Gerüchen, insbesondere aus Gas- bzw. Luftströmen, für die Reinigung oder Aufbereitung von Gasen, wie insbesondere Luft, sowie von Flüssigkeiten, für den Bereich der Medizin bzw. Pharmazie, für die sorptive Speicherung von Gasen oder Flüssigkeiten und dergleichen der Fall ist.

Im Stand der Technik sind zwar grundsätzlich Aktivkohlen zu diesem Zweck bekannt, wobei die in Rede stehenden Aktivkohlen auch über eine gewisse Meso- bzw. Makroporosität verfügen, welche aber nicht für sämtliche Fälle bzw. Anwendungen ausreichend ist. Insbesondere sind der konkrete Anteil an Meso- bzw. Makroporen am Gesamtporenvolumen und das absolute Porenvolumen der im Stand der Technik bereitgestellten Aktivkohlen nicht immer ausreichend, um für sämtliche Anwendungen zufriedenstellende Adsorptionseigenschaften zu gewährleisten.

Zudem geht mit der Ausbildung einer definierten Porosität mitunter eine deutliche Abnahme der mechanischen Stabilität bzw. der Abriebfestigkeit der Aktivkohle einher, was gleichermaßen unerwünscht ist.

Insbesondere sind die im Stand der Technik bekannten Verfahren zur Herstellung von Aktivkohle mit definierter Porosität bzw. mit einer definierten Porengrößenverteilung mitunter aufwendig, und zwar insbesondere dahingehend, dass eine Vielzahl an Verfahrensparametern speziell vorgegeben und aufwendig aufeinander abgestimmt werden müssen, um überhaupt einen Einfluss auf die Porosität der erhaltenen Aktivkohle zu ermöglichen. Dies geht mitunter auch mit aufwendigen Vorrichtungen zur Verfahrensdurchführung einher. Zudem führen die im Stand der Technik bekannten Verfahren nicht immer zu den gewünschten Porositäten, insbesondere Porengrößenverteilungen, der bereitgestellten Aktivkohle, wobei zudem oftmals mechanisch wenig stabile bzw. wenig belastbare Aktivkohlen resultieren.

Die WO 01/83368 A1 betrifft ein Verfahren zur Herstellung von Aktivkohle in Kugelform ausgehend von organischen Polymerkügelchen auf Basis von Styrol und Divinylbenzol, die chemische Gruppen, welche bei ihrer thermischen Zersetzung zu freien Radikalen und somit zu Vernetzungen führen, insbesondere Sulfonsäuregruppen, enthalten, wobei die Polymerkügelchen zunächst kontinuierlich vorgeschwelt und anschließend diskontinuierlich nachgeschwelt und aktiviert werden.

Weiterhin betrifft die EP 1 801 072 A1 ein Verfahren zur Herstellung von Aktivkohle mit katalytischer Aktivität durch Carbonisierung und nachfolgende Aktivierung kohlenstoffhaltiger organischer Polymere, wobei die Polymere, in die bei deren Herstellung mindestens ein Metall einpolymerisiert worden ist, einer Carbonisierung und nachfolgenden Aktivierung unterzogen werden, so dass eine mit dem Metall beladene Aktivkohle resultiert.

Darüber hinaus betrifft die WO 99/28234 A1 ein Verfahren zur Herstellung von Aktivkohle aus Polymeren mit aromatischen Kernen, wobei das Verfahren ein Sulfonieren des Polymers mit konzentrierter Schwefelsäure umfasst, wobei die Schwefelsäure in einem speziellen Verhältnis zu der Masse des eingesetzten Polymers verwendet werden soll, gefolgt von einem Abfiltrieren der überschüssigen Schwefelsäure und einem Verkoken bzw. Pyrolysieren des sulfonierten Produkts und gegebenenfalls gefolgt von einem Aktivieren des durch das Verkoken bzw. Pyrolysieren erhaltenen Kokses.

Weiterhin betrifft die WO 2005/016819 A1 ein Verfahren zur Herstellung kornförmiger Aktivkohle durch Schwelung von geeigneten kohlenstoffhaltigen Polymeren in Form von Polymerkörnern, welche durch Schwelung zumindest im Wesentlichen zu Kohlenstoff umgesetzt werden können, als Ausgangsmaterial, wobei die Polymerkörner kontinuierlich durch eine mehrere Temperaturzonen bzw. einen Temperaturgradienten umfassende Schwelvorrichtung bewegt werden, so dass eine zumindest im Wesentlichen vollständige Umsetzung des Ausgangsmaterials zu Kohlenstoff bewirkt wird.

Weiterhin betrifft die DE 20 2009 010 612 U1 eine Vorrichtung bzw. Anlage zur Herstellung von Aktivkohle, wobei die Vorrichtung neben einer Carbonisierungseinrichtung sowie einer hierzu stromabwärts angeordneten Aktivierungseinrichtung und neben einer Abgasbehandlungseinrichtung gegebenenfalls auch eine Sulfonierungseinrichtung zur Sulfonierung bzw. Peptisation von der Aktivkohleherstellung zugrundeliegenden Ausgangsmaterialien aufweist.

Zudem betrifft die wissenschaftliche Publikation gemäß Fabrication of activated carbons with well-defined macropores derived from sulfonated poly(divinylbenzene) networks, Hasegawa et al., in: Carbon 48, 2010, Seiten 1757 bis 1766, Elsevier die Herstellung von Aktivkohle mit definierten Makroporen ausgehend von sulfonierten Poly(divenylbenzol)-Netzwerken.

Zudem betrifft die WO 2014/183927 A1 ein Drehrohr für einen Drehrohrofen, ausgebildet zur Herstellung von Aktivkohle, insbesondere mittels Sulfonierung, Carbonisierung und Aktivierung polymerer Ausgangsmaterialien in einem diskontinuierlichen Prozess, mit einem Drehrohrkörper und mindestens einem Mischabschnitt zur Durchmischung eines Beladungsgutes, wobei der Mischabschnitt mindestens ein an der Innenseite des Drehrohrkörpers befestigtes und mit der Innenseite fest verbundenes Mischelement aufweist und wobei der Drehrohrkörper und das Mischelement zumindest im Wesentlichen aus Quarzglas bestehen.

Vor diesem Hintergrund besteht somit die Aufgabe der vorliegenden Erfindung darin, ein Verfahren zur Herstellung von Aktivkohle mit definierter Porosität bzw. eine diesbezügliche Aktivkohle als solche bereitzustellen, welches bzw. welche die zuvor geschilderten Nachteile des Standes der Technik zumindest weitgehend vermeidet oder aber wenigstens abschwächt. Insbesondere soll das erfindungsgemäß bereitgestellte Verfahren zu einer Aktivkohle mit definierter Porosität bzw. Porengrößenverteilung, insbesondere mit einem erhöhten Meso- und/oder Makroporenvolumenanteil (d.h. mit einer hohen Meso- und/oder Makroporosität), insbesondere mit erhöhtem Mesoporenvolumenanteil (d.h. mit hoher Mesoporosität), bezogen auf das Gesamtporenvolumen der Aktivkohle, führen. Zudem soll das erfindungsgemäß bereitgestellte Verfahren auch zu entsprechenden Aktivkohlen mit hoher mechanischer Stabilität bzw. Belastbarkeit, insbesondere im Hinblick auf die Abriebhärte bzw. die Druckfestigkeit (Berstdruck pro Kugel) der zugrundeliegenden Aktivkohle, führen.

Eine weitere Aufgabe der vorliegenden Erfindung ist darin zu sehen, ein entsprechendes Verfahren zur Herstellung einer meso- bzw. makroporösen, insbesondere mesoporösen, Aktivkohle bereitzustellen, welches hinsichtlich der Verfahrensführung bzw. des Verfahrensablaufs optimiert ist und bei welchem insbesondere auch die Handhabung der für die Aktivkohleherstellung eingesetzten Materialien verbessert ist, um auch auf dieser Basis ein kosteneffizientes und leistungsstarkes Herstellungsverfahren bereitzustellen.

Eine nochmals weitere Aufgabe der vorliegenden Erfindung ist zudem darin zu sehen, eine entsprechende Aktivkohle als solche bereitzustellen, bei welcher gleichermaßen die mit dem im Stand der Technik bekannten Aktivkohlen einhergehenden Nachteile zumindest weitgehend vermieden oder aber wenigstens abschwächt werden sollen. Insbesondere soll eine Aktivkohle bereitgestellt werden, welche über eine definierte Meso- bzw. Makroporosität, vorzugsweise über eine hohe Mesoporosität, verfügt, wobei die Aktivkohle gleichzeitig hervorragende mechanische Eigenschaften, insbesondere im Hinblick auf die Stabilität der Aktivkohle, aufweisen soll.

Zur Lösung der zuvor geschilderten Aufgabe schlägt die vorliegende Erfindung somit - gemäß einem **ersten** Aspekt der vorliegenden Erfindung - ein Verfahren zur Herstellung von Aktivkohle, insbesondere von partikulärer Aktivkohle, mit erhöhtem Meso- und/oder Makroporenvolumenanteil, vorzugsweise mit erhöhtem Mesoporenvolumenanteil, gemäß Anspruch 1 vor; jeweils vorteilhafte Weiterbildungen und Ausgestaltungen dieses Erfindungsaspekts sind Gegenstand der entsprechenden Verfahrensunteransprüche (Ansprüche 2 bis 8).

Weiterhin betrifft die vorliegende Erfindung - gemäß einem **zweiten** Aspekt der vorliegenden Erfindung - eine Aktivkohle, insbesondere partikuläre Aktivkohle mit erhöhtem Meso- bzw. Makroporenvolumenanteil, vorzugsweise mit erhöhtem Mesoporenvolumenanteil, wie sie in dem entsprechenden Anspruch definiert ist (Anspruch 9); weitere, insbesondere vorteilhafte Ausgestaltungen der erfindungsgemäßen Aktivkohle sind Gegenstand des diesbezüglichen Unteranspruchs (Anspruch 10).

Darüber hinaus betrifft die vorliegende Erfindung - gemäß einem **dritten** Aspekt der vorliegenden Erfindung - auch die Verwendungen der Aktivkohle nach der Erfindung, wie sie in dem diesbezüglichen Anspruch definiert sind (Anspruch 11).

Weiterhin betrifft die vorliegende Erfindung - gemäß einem **vierten** Aspekt der vorliegenden Erfindung - Schutzausrüstungen bzw. Schutzgegenstände aller Art, welche unter Verwendung der Aktivkohle nach der Erfindung hergestellt sind bzw. welche die erfindungsgemäße Aktivkohle als solche aufweisen, gemäß dem diesbezüglichen Anspruch (Anspruch 12).

Schließlich betrifft die vorliegende Erfindung - gemäß einem **fünften** Aspekt der vorliegenden Erfindung - auch Filter bzw. Filtermaterialien, welche unter Verwendung der Aktivkohle nach der Erfindung hergestellt sind bzw. welche die Aktivkohle nach der Erfindung aufweisen, gemäß dem diesbezüglichen Anspruch (Anspruch 13).

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass sämtliche im Folgenden genannten Werte- bzw. Parameterangaben oder dergleichen grundsätzlich mit genormten bzw. standardisierten oder explizit angegebenen Bestimmungsverfahren oder aber anderenfalls mit dem Fachmann auf diesem Gebiet an sich geläufigen Bestimmungs- bzw. Messmethoden ermittelt bzw. bestimmt werden können. Sofern nicht anders angegeben, werden die zugrundeliegenden Werte bzw. Parameter unter Standardbedingungen (d.h. insbesondere bei einer Temperatur von 20 °C und/oder bei einem Druck von 1.013,25 hPa bzw. 1,01325 bar) ermittelt.

Im Übrigen gilt, dass bei sämtlichen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben.

Gegenstand der vorliegenden Erfindung ist somit - gemäß einem **ersten** Aspekt der vorliegenden Erfindung - ein Verfahren zur Herstellung von partikulärer Aktivkohle, wobei 25 % bis 85 % des Gesamtporenvolumens nach Gurvich der Aktivkohle durch Poren mit Porendurchmessern im Bereich von 2 nm bis 50 nm gebildet sind,
wobei das Verfahren die folgenden Schritte umfasst:
   (a) Sulfonierung eines partikulären polymeren organischen Ausgangsmaterials durch Inkontaktbringen des Ausgangsmaterials mit mindestens einem Sulfonierungsmittel und nachfolgendes Einwirkenlassen und Reagieren des Sulfonierungsmittels mit dem Ausgangsmaterial derart, nämlich für Zeitdauern im Bereich von 0,5 h bis 24 h und unter Temperaturen im Bereich von 50 °C bis 330 °C, dass die Sulfonierung unter gleichzeitiger Volumenexpansion (Volumenzunahme) des Ausgangsmaterials erfolgt, wobei die Volumenexpansion des Ausgangsmaterials derart erfolgt, dass die Partikelgröße des sulfonierten Ausgangsmaterials um mindestens 2 % vergrößert wird, bezogen auf die Partikelgröße des nichtsulfonierten Ausgangsmaterials, wobei als Sulfonierungsmittel Schwefeltrioxid (SO₃) eingesetzt wird und wobei das Sulfonierungsmittel in einer Menge im Bereich von 10 Gew.-% bis 95 Gew.-%, bezogen auf das Gesamtgewicht der resultierenden Zusammensetzung (Gemisch) aus Sulfonierungsmittel und Ausgangsmaterial, eingesetzt wird; anschließend
   (b) Carbonisierung des in Schritt (a) erhaltenen sulfonierten Ausgangsmaterials (Sulfonat), wobei die Carbonisierung bei Temperaturen im Bereich von 100 °C bis 1.200 °C durchgeführt wird und wobei die Carbonisierung für eine Zeitdauer im Bereich von 0,5 h bis 20 h durchgeführt wird; dann
   (c) Aktivierung des in Schritt (b) erhaltenen carbonisierten Ausgangsmaterials (Carbonisat) insbesondere zum Erhalt der Aktivkohle (Aktivat), wobei die Aktivierung bei Temperaturen im Bereich von 700 °C bis 1.200 °C durchgeführt wird und wobei die Aktivierung für eine Zeitdauer im Bereich von 0,5 h bis 20 h durchgeführt wird;
wobei vor Durchführung von Schritt (b) ein Schritt des Stehenlassens und/oder des Aufbewahrens des sulfonierten Ausgangsmaterials durchgeführt wird, wobei das Stehenlassen und/oder das Aufbewahren des sulfonierten Ausgangsmaterials für eine Zeitdauer im Bereich von 0,5 Tagen bis 12 Monaten durchgeführt wird.

Denn die Anmelderin hat in völlig überraschenderweise gefunden, dass die erfindungsgemäße Verfahrensführung, wonach nämlich eine sehr spezielle Sulfonierung mit einer einhergehenden Volumenexpansion des erfindungsgemäß eingesetzten polymeren organischen Ausgangsmaterials erfolgt, in Kombination mit den weiteren erfindungsgemäßen Maßnahmen der nachfolgenden Carbonisierung und Aktivierung zu sehr speziellen Aktivkohlen führt, welche insbesondere in partikulärer Form bzw. in Kugelform vorliegen und welche über eine definierte Porosität, insbesondere über eine definierte Porengrößenverteilung, verfügen, und zwar dahingehend, dass eine Aktivkohle mit erhöhtem Meso- bzw. Makroporenvolumenanteil und insbesondere mit erhöhtem Mesoporenvolumenanteil und somit eine mesoporöse Aktivkohle bereitgestellt wird.

Eine zentrale Idee der vorliegenden Erfindung ist dabei darin zu sehen, dass in Schritt (a) des erfindungsgemäßen Verfahrens im Rahmen der Sulfonierung ein dem Inkontaktbringen des Ausgangsmaterials mit dem Sulfonierungsmittel nachfolgendes bzw. nachgeschaltetes Einwirkenlassen und Reagieren des Sulfonierungsmittels mit dem Ausgangsmaterial erfolgt, und zwar dahingehend, dass bei dem insbesondere in Teilchenform eingesetztem Ausgangsmaterial eine durch die Sulfonierung bedingte Zunahme des Teilchenvolumens und somit eine Volumenexpansion bzw. eine Quellung des Ausgangsmaterials vorliegt.

Auf dieser Basis wird dann im Rahmen der nachfolgenden Carbonisierung bzw. Aktivierung des auf diese Weise sulfonierten Ausgangsmaterials eine Aktivkohle mit der zuvor angeführten speziellen Porosität erhalten, welche bei erhöhtem Meso- bzw. Makroporenvolumenanteil bzw. bei erhöhtem Mesoporenvolumenanteil gleichzeitig hervorragende mechanische Eigenschaften, insbesondere eine hohe mechanische Stabilität, wie eine hohe Abriebfestigkeit bzw. -härte und eine hohe Druckfestigkeit bzw. einen hohen Berstdruck, aufweist.

Vorliegend wird somit auf Basis der Verfahrensführung nach der vorliegenden Erfindung eine Aktivkohle bereitgestellt, welche die diametralen Eigenschaften einer hohen bzw. definierten Porosität einerseits sowie einer hohen mechanischen Stabilität andererseits in ein und demselben Material vereint.

Denn, ohne sich auf diese Theorie beschränken zu wollen, das zweckgerichtete Einwirkenlassen und Reagieren des Sulfonierungsmittels mit dem Ausgangsmaterial mit der einhergehenden Volumenexpansion führt bereits zu einer Veränderung der dem Ausgangsmaterial zugrundeliegenden Porenstruktur dahingehend, dass sozusagen eine Aufweitung bzw. Vergrößerung der Poren zur nachfolgenden Ausbildung von meso- bzw. makroporösen Strukturen der erhaltenen Aktivkohle vorliegt, so dass die der Aktivkohle zugrundeliegende Porosität im Rahmen der erfindungsgemäßen Konzeption sozusagen *in-situ* bereits in dem Ausgangsmaterial als solches generiert bzw. vorgegeben wird.

Dabei werden im Rahmen der sehr speziellen Sulfonierung, wie sie erfindungsgemäß durchgeführt wird, gleichermaßen ohne sich auf diese Theorie beschränken zu wollen, insbesondere stark saure Gruppen, vorzugsweise Sulfonsäuregruppen, homogen bzw. in hoher Konzentration in dem Ausgangsmaterial generiert, was im Rahmen der nachfolgenden Carbonisierung bzw. Aktivierung zu einer effektiven Vernetzung und somit zur Ausbildung definierter Kohlenstoffstrukturen in der resultierenden Aktivkohle führt. Auf dieser Basis resultiert, gleichermaßen ohne sich auf diese Theorie beschränken zu wollen, neben der definierten Porosität auch eine hohe mechanische Stabilität der erfindungsgemäßen Aktivkohle, welche sich insbesondere in einer hohen Abriebfestigkeit sowie einer hohen Druckfestigkeit bzw. einem hohen Berstdruck niederschlägt. Zudem trägt das spezielle Einfügen der funktionellen Gruppen zur Volumenexpansion des Ausgangsmaterials bei.

Im Rahmen der erfindungsgemäßen Konzeption ist es dabei durch die konkrete Auswahl der bei der Sulfonierung vorliegenden Verfahrensbedingungen sowie des Ausgangsmaterials in Abstimmung mit den weiteren Schritten des erfindungsgemäßen Verfahrens möglich, in gezielter Weise die Porosität, insbesondere die Porengrößenverteilung in Bezug auf das erhaltende Produkt in Form der Aktivkohle einzustellen, so dass erfindungsgemäß sozusagen maßgeschneiderte Aktivkohlen bereitgestellt werden können.

Dabei weisen die erfindungsgemäß bereitgestellten Aktivkohlen, wie zuvor angeführt, eine definierte Meso- bzw. Makroporosität, insbesondere einen hohen Anteil an Mesoporen, bezogen auf das Gesamtporenvolumen der Aktivkohle, auf. Wie nachfolgend noch im Detail ausgeführt, ist es im Rahmen der vorliegenden Erfindung gleichermaßen möglich, eine sehr enge Porengrößenverteilung einzustellen, so dass auch auf dieser Basis maßgeschneiderte Aktivkohlen mit speziellen Adsorptionseigenschaften bereitgestellt werden.

Erfindungsgemäß ist es somit gleichermaßen möglich, aus ein und demselben Ausgangsmaterial in Form des polymeren organischen Ausgangsmaterials eine Vielzahl an Endprodukten mit individuell eingestellter bzw. vorgegebener Porosität bereitzustellen.

Das erfindungsgemäße Verfahren ist dabei zudem in der Verfahrensführung und der Handhabung der eingesetzten Materialien und Vorrichtungen dahingehend optimiert, dass die konkreten Eigenschaften der resultierenden Aktivkohle, insbesondere was die Ausbildung einer speziellen Porosität sowie einer hohen mechanischen Stabilität anbelangt, bereits in Schritt (a) mit dem dort vorgesehenen Inkontaktbringen des Ausgangsmaterials mit dem Sulfonierungsmittel und dem nachfolgenden Einwirkenlassen und Reagieren - in Abstimmung mit der nachfolgenden Carbonisierung und Aktivierung - vorgegeben werden kann.

Wie nachfolgend noch angeführt, ist es im Rahmen der vorliegenden Erfindung in bevorzugter Weise möglich, dass das in Schritt (a) erhaltene Material einer anschließenden Aufbewahrung (Lagerung) bzw. einem anschließenden Stehenlassen unterzogen wird, was - wie die Anmelderin gleichermaßen völlig überraschend gefunden hat - insbesondere mit einer weiterführenden (Nach-)Sulfonierung bzw. einer (nachträglichen) Volumenexpansion des Ausgangsmaterials einhergeht, so dass hierdurch die entsprechenden Eigenschaften der resultierenden Aktivkohle weiterführend vorgegeben bzw. eingestellt werden können. Infolge des gegebenenfalls vorgesehenen Stehenlassens bzw. Aufbewahrens kann zudem eine gezielte Bevorratung des sulfonierten Ausgangsmaterials bzw. Sulfonats vorgenommen werden, welches dann sozusagen auf Abruf bzw. bedarfsweise der nachfolgenden Carbonisierung und Aktivierung zugeführt werden kann, so dass die erfindungsgemäß im Rahmen des Verfahrens eingesetzten Mengen flexibel gehandhabt werden können. Dies geht mit einer weiterführenden Optimierung einher, zumal das Ausgangsmaterial auch in der sulfonierten Form keiner vorzeitigen Alterung oder Erschöpfung unterliegt. Die vorliegende Erfindung ist auch mit dem Vorteil verbunden, dass das sulfonierte Ausgangsmaterial im Gegensatz zu dem resultierenden Endprodukt in Form der Aktivkohle keiner Inertisierung oder vorzeitigen Erschöpfung durch Kontamination unterliegt, so dass eine aufwendige und kostenintensive konservierende Lagerung, beispielsweise in einer Schutzatmosphäre bzw. in einer Schutzumhüllung (Einschweißen), wie sie im Allgemeinen für Aktivkohle vorgesehen ist, für das sulfonierte Ausgangsmaterial entfallen kann.

Dabei zeichnet sich das erfindungsgemäße Verfahren, wie nachfolgend gleichermaßen noch angeführt, zudem dadurch aus, dass Schritt (a) getrennt bzw. separat von den nachfolgenden Schritten durchgeführt werden kann. In diesem Zusammenhang kann somit auch die für das erfindungsgemäße Verfahren eingesetzte Produktionsanlage im Hinblick auf die jeweiligen Vorrichtungen zur Sulfonierung einerseits bzw. Carbonisierung und Aktivierung andererseits in optimaler Weise ausgebildet werden. Insbesondere kann durch die räumliche bzw. zeitliche Trennung der Verfahrensschritte die Sulfonierung als solche in optimaler Weise ausgeführt und im Hinblick auf das eingesetzte Ausgangsmaterial sowie auf die gewünschten Produkteigenschaften ausgerichtet bzw. angepasst werden. Zudem ermöglicht die räumliche bzw. zeitliche Trennung insbesondere von Schritt (a) die erfindungsgemäß gegebenenfalls vorgesehene Aufbewahrung bzw. das Stehenlassen des sulfonierten Ausgangsmaterials.

Der Begriff "polymeres organisches Ausgangsmaterial, insbesondere partikuläres polymeres organisches Ausgangsmaterial", wie er erfindungsgemäß verwendet wird, ist im Rahmen der vorliegenden Erfindung breit zu verstehen. Insbesondere bezieht sich der in Rede stehende Begriff auf kohlenstoffhaltige Ausgangsmaterialien, welche im Rahmen der erfindungsgemäßen Verfahrensführung sulfonierbar und nachfolgend carbonisierbar sind. Insbesondere kann das organische Ausgangsmaterial aromatische Gruppen aufweisen. Zudem kann das erfindungsgemäß eingesetzte Ausgangsmaterial in partikulärer bzw. kornförmiger Form, bevorzugt in Kegelform, vorliegen. Insbesondere handelt es sich bei dem Ausgangsmaterial um ein ein Porensystem aufweisendes bzw. um ein poröses Ausgangsmaterial, wobei das in Rede stehende Ausgangsmaterial insbesondere einen hohen Anteil an Mikroporen, bezogen auf das Gesamtporenvolumen, aufweisen kann. Bei dem erfindungsgemäß einsetzbaren Ausgangsmaterial handelt es sich insbesondere um die nachfolgend im Detail definierten Materialien.

Weiterhin ist der Begriff "Sulfonierung", wie er erfindungsgemäß verwendet wird, breit zu verstehen. Insbesondere bezieht sich der in Rede stehende Begriff auf das Einbringen von chemischen Gruppen, insbesondere stark sauren chemischen Gruppen, vorzugsweise Sulfonsäuregruppen, welche insbesondere kovalent an der Molekülstruktur des Ausgangsmaterials gebunden vorliegen.

Darüber hinaus bezieht sich der Begriff "Volumenexpansion" bzw. "Volumenzunahme", synonym auch als "Quellung" bezeichnet, wie er im Rahmen der vorliegenden Erfindung im Zusammenhang mit der Sulfonierung des Ausgangsmaterials bzw. in Bezug auf das sich der Sulfonierung anschließende Stehenlassen bzw. Aufbewahren des Ausgangsmaterials verwendet wird, auf eine insbesondere chemische, physikochemische körperliche Vergrößerung der dem Ausgangsmaterial zugrundeliegenden Partikel bzw. Teilchen infolge einer Vergrößerung des Volumens des eingesetzten Ausgangsmaterials, wobei die Volumenzunahme infolge einer Massenzunahme (insbesondere durch den Einbau bzw. die Generierung von chemischen Gruppen, insbesondere in Form von Sulfonsäuregruppen) und/oder infolge einer Vergrößerung des (mittleren) Molekülabstandes innerhalb des Ausgangsmaterials (beispielsweise durch eine physikalische Quellung infolge der Einlagerung von Sulfonierungsmittel, Wasser oder dergleichen) hervorgerufen werden kann. Im Allgemeinen erfolgt die Volumenexpansion bzw. Volumenzunahme in sämtliche Raumrichtungen und somit sozusagen dreidimensional. Insbesondere geht mit der Volumenexpansion auch eine Aufweitung bzw. Vergrößerung des inneren Porensystems des Ausgangsmaterials einher. Mit anderen Worten stellt die Volumenexpansion bzw. Volumenzunahme den Unterschied, insbesondere das Verhältnis bzw. die Differenz, der Teilchengrößen des Ausgangmaterials vor und nach Durchführung der Sulfonierung dar. Mit anderen Worten ergibt sich die relative Volumenexpansion bzw. Volumenzunahme aus dem Verhältnis von Volumen (Teilchengröße) des expandierten sulfonierten Ausgangsmaterials (erhalten in Schritt (a) des Verfahrens) zu Volumen (Teilchengröße) des Ausgangsmaterials (eingesetzt zu Beginn von Schritt (a) des Verfahrens als Rohmaterial); die nachfolgenden angegebenen prozentualen Werte der Volumenexpansion ergeben sich dann hieraus durch Multiplikation dieses als Volumenrelativverhältnis ermittelten Wertes mit 100.

Im Rahmen der vorliegenden Erfindung bezeichnet zudem der Begriff "Mikroporen" solche Poren mit Porendurchmessern von weniger als 2 nm, wohingegen der Begriff "Mesoporen" solche Poren mit Porendurchmessern im Bereich von 2 nm (d.h. 2 nm einschließlich) bis 50 nm einschließlich bezeichnet und der Begriff "Makroporen" solche Poren mit Porendurchmessern von mehr als 50 nm (d.h. >50 nm) bezeichnet.

In diesem Zusammenhang bezieht sich der Begriff "Meso- und/oder Makroporenvolumenanteil" insbesondere auf den entsprechenden Anteil an Meso- bzw. Makroporen an dem Gesamtporenvolumen der erfindungsgemäß bereitgestellten Aktivkohle. In entsprechender Weise bezieht sich der Begriff "Mesoporenvolumenanteil" auf den Anteil an Mesoporen in Bezug auf das Gesamtporenvolumen der Aktivkohle. Entsprechend ist unter einem erhöhten Meso- bzw. Makroporenvolumenanteil eine erhöhte Meso- bzw. Makroporosität sowie unter einem erhöhtem Mesoporenvolumenanteil eine erhöhte Mesoporosität der zugrundeliegenden Aktivkohle zu verstehen.

Was das erfindungsgemäße Verfahren im Allgemeinen anbelangt, so wird die erfindungsgemäß in Schritt (a) durchgeführte Sulfonierung zusammenfassend vor dem Hintergrund durchgeführt, in gezielter Weise chemische Gruppen in Form von insbesondere stark sauren chemischen bzw. funktionellen Gruppen insbesondere Sulfonsäuregruppen, in dem Ausgangsmaterial zu generieren, einhergehend mit der angeführten Volumenexpansion des Ausgangsmaterials. Im Rahmen der weiteren Verarbeitung des sulfonierten Ausgangsmaterials zum Erhalt der Aktivkohle nach der Erfindung erfolgt dabei insbesondere in Schritt (b) eine thermische Zersetzung der zuvor generierten Sulfonsäuregruppen und eine Ausbildung von freien Radikalen, was in Schritt (b) mit der dort durchgeführten Carbonisierung zu chemischen Vernetzungen und somit zur Ausbildung eines entsprechenden (Kohlenstoff- )Gerüsts der erhaltenen Aktivkohle führt. In dem sich anschließenden Schritt (c) erfolgt dann eine Aktivierung mit einer weiterführenden Ausbildung bzw. Modifizierung des Porensystems der resultierenden Aktivkohle.

Im Nachfolgenden wird Schritt (a) des erfindungsgemäßen Verfahrens mit der Sulfonierung des Ausgangsmaterials weiterführend beschrieben:
So ist es in Schritt (a) vorgesehen, dass die Sulfonierung, insbesondere das Einwirkenlassen und Reagieren des Sulfonierungsmittels mit dem Ausgangsmaterial, für eine Zeitdauer im Bereich von 0,5 h bis 24 h, insbesondere im Bereich von 0,5 h bis 20 h, vorzugsweise im Bereich von 0,5 h bis 20 h, bevorzugt im Bereich von 0,5 h bis 16 h, besonders bevorzugt im Bereich von 0,75 h bis 14 h, ganz besonders bevorzugt im Bereich von 1 h bis 12 h, noch mehr bevorzugt im Bereich von 1,5 h bis 10 h, am meisten bevorzugt im Bereich von 2 h bis 8 h, durchgeführt wird. Durch die konkrete Auswahl bzw. Vorgabe der Zeitdauer für das Einwirkenlassen und Reagieren kann der Sulfonierungsgrad sowie die Volumenexpansion des Ausgangsmaterials eingestellt bzw. vorgegeben werden. In diesem Zusammenhang verhält es sich erfindungsgemäß insbesondere derart, dass größere Zeitdauern des Einwirkenlassens und Reagierens zu einem höheren Sulfonierungsgrad (d.h. zu einer höheren Anzahl an Sulfonsäuregruppen pro Masseeinheit des Ausgangsmaterials) und/oder zu einer höheren Volumenexpansion bzw. zu einer größeren Volumenzunahme des Ausgangsmaterials führen. Der Fachmann ist diesbezüglich jederzeit in der Lage, die entsprechenden Verfahrensbedingungen insbesondere im Hinblick auf das gewünschte Ergebnis auszuwählen bzw. anzupassen. Insbesondere hat die Anmelderin völlig überraschend gefunden, dass größere Zeitdauern des Einwirkenlassens bzw. Reagierens zu einer weiterführenden Erhöhung des Anteils an Mesoporen, bezogen auf das Gesamtporenvolumen, und somit zu einer erhöhten Mesoporosität des nachfolgend erhaltenen Produkts in Form der erfindungsgemäßen Aktivkohle führen.

Erfindungsgemäß ist es insbesondere vorgesehen, dass in Schritt (a) die Sulfonierung, insbesondere das Einwirkenlassen und Reagieren des Sulfonierungsmittels mit dem Ausgangsmaterial, bei Temperaturen unterhalb der Zersetzungstemperatur des Sulfonierungsmittels und/oder bei Temperaturen unterhalb der Siedepunkttemperatur des Sulfonierungsmittels durchgeführt wird.

In diesem Zusammenhang hat es sich im Hinblick auf eine effektive Sulfonierung des Ausgangsmaterials als vorteilhaft erwiesen, wenn in Schritt (a) die Sulfonierung, insbesondere das Einwirkenlassen und Reagieren des Sulfonierungsmittels mit dem Ausgangsmaterial, bei Temperaturen unterhalb der Siede- bzw. Zersetzungstemperatur des Sulfonierungsmittels bzw. bei Temperaturen im Bereich von 50 °C bis 330 °C, vorzugsweise im Bereich von 75 °C bis 330 °C, bevorzugt im Bereich von 90 °C bis 320 °C, besonders bevorzugt im Bereich von 95 °C bis 310 °C, ganz besonders bevorzugt im Bereich von 100 °C bis 300 °C, durchgeführt wird. Auf diese Weise kann eine vorzeitige chemische Zersetzung bzw. ein chemischer Abbau und somit eine vorzeitige Entfernung des Sulfonierungsmittels aus dem Reaktionsmedium bei gleichzeitig effizienter Generierung von Sulfonsäuregruppen vermieden werden.

Gemäß einer ersten Ausführungsform der vorliegenden Erfindung kann es zudem vorgesehen sein, dass in Schritt (a) die Sulfonierung, insbesondere das Einwirkenlassen und Reagieren des Sulfonierungsmittels mit dem Ausgangsmaterial, unter konstanter Temperatur durchgeführt wird.

Gemäß einer alternativen Ausführungsform der vorliegenden Erfindung kann es demgegenüber auch vorgesehen sein, dass das in Schritt (a) die Sulfonierung, insbesondere das Einwirkenlassen und Reagieren des Sulfonierungsmittels mit dem Ausgangsmaterial, unter Anwendung eines Temperaturgradienten bzw. eines Temperaturprofils durchgeführt wird. In diesem Zusammenhang kann es insbesondere vorgesehen sein, dass die Ausbildung des Temperaturgradienten bzw. des Temperaturprofils zeitabhängig erfolgt, insbesondere durch aufeinanderfolgende (Auf-)Heizschritte in der für die Sulfonierung vorgesehenen Sulfonierungsvorrichtung. Grundsätzlich kann auch eine räumliche Ausbildung des Temperaturgradienten bzw. -profils vorgenommen werden, beispielsweise in Form aufeinanderfolgender Temperaturzonen in der Sulfonierungsvorrichtung. Dabei kann es insbesondere vorgesehen sein, dass die Temperatur in Prozess- bzw. Verfahrensrichtung bzw. stromabwärts zunimmt.

Erfindungsgemäß kann es in diesem Zusammenhang vorgesehen sein, dass zur Ausbildung des Temperaturgradienten bzw. des Temperaturprofils eine Temperaturerhöhung um mindestens 50 °C, insbesondere um mindestens 75 °C, vorzugsweise um mindestens 100 °C, bevorzugt um mindestens 125 °C, bevorzugt um mindestens 150 °C, durchgeführt wird.

Gleichermaßen kann die Temperatur des Temperaturgradienten bzw. des Temperaturprofils im Bereich von 90 °C bis 330 °C, insbesondere im Bereich von 100 °C bis 300 °C, vorzugsweise im Bereich von 120 °C bis 250 °C, liegen bzw. variiert werden. Insbesondere kann die Temperatur des Temperaturgradienten bzw. des Temperaturprofils in einem Zeitraum von 5 min bis 120 min, insbesondere 10 min bis 90 min, vorzugsweise 15 min bis 60 min, eingestellt werden.

Im Hinblick auf die erfindungsgemäße Verfahrensführung kann es in Schritt (a) vorgesehen sein, dass der Temperaturgradient bzw. das Temperaturprofil kontinuierlich, insbesondere linear, eingestellt bzw. durchgeführt wird. Beispielsweise kann die Temperatur zeitabhängig und/oder stromabwärts erhöht oder gehalten oder verringert, insbesondere erhöht, werden.

Gemäß einer weiteren erfindungsgemäßen Ausführungsform kann es auch vorgesehen sein, dass in Schritt (a) der Temperaturgradient bzw. das Temperaturprofil stufenweise, insbesondere unter Anwendung bzw. Ausbildung mindestens eines Temperaturplateaus (Haltetemperatur, Temperaturstufe), eingestellt bzw. durchgeführt wird. Dabei kann die Temperatur zur Einstellung des Temperaturplateaus zeitabhängig und/oder stromabwärts erhöht, verringert oder gehalten, insbesondere erhöht oder gehalten, werden. Durch die Ausbildung von definierten Temperaturplateaus kann die zugrundeliegende Sulfonierung weiterführend gesteuert bzw. eingestellt werden. Die jeweiligen Temperaturplateaus können dabei zeitlich und/oder räumlich (in Prozessrichtung) aufeinander abfolgend eingestellt bzw. durchgeführt werden.

In diesem Zusammenhang hat es sich als vorteilhaft erwiesen, wenn die Stufe des Temperaturgradienten bzw. des Temperaturprofils, insbesondere das Temperaturplateau, im Bereich von 90 °C bis 330 °C, insbesondere im Bereich von 100 °C bis 330 °C, liegt.

In diesem Zusammenhang kann zudem derart verfahren werden, dass die Stufe des Temperaturgradienten bzw. des Temperaturprofils, insbesondere das Temperaturplateau, für eine Zeitdauer im Bereich von 0,1 h bis 20 h, insbesondere im Bereich von 0,2 h bis 16 h, vorzugsweise im Bereich von 0,3 h bis 12 h, bevorzugt im Bereich von 0,5 h bis 10 h, eingestellt bzw. gehalten wird.

Insbesondere kann mindestens eine erste Stufe des Temperaturgradienten bzw. des Temperaturprofils, insbesondere ein erstes Temperaturplateau, eingestellt bzw. durchgeführt werden, und zwar insbesondere mit einer Temperatur im Bereich von 100 °C bis 200 °C. Nachfolgend (d.h. zeitlich nachfolgend und/oder räumlich nachfolgend (d.h. in Prozessrichtung bzw. stromabwärts)) kann zudem mindestens eine zweite Stufe des Temperaturgradienten bzw. des Temperaturprofils, insbesondere ein zweites Temperaturplateau, eingestellt bzw. durchgeführt werden, insbesondere mit einer Temperatur im Bereich von 200 °C bis 330 °C. Denn im Rahmen der vorliegenden Erfindung hat es sich hinsichtlich der Sulfonierung und der Ausbildung einer speziellen Porosität in Bezug auf das Produkt in Form der Aktivkohle als besonders vorteilhaft herausgestellt, wenn die Sulfonierung auf Basis zweier Temperatureplateaus bzw. zweier Haltetemperaturen, wie zuvor definiert, durchgeführt wird. Dabei können insbesondere die zuvor für die Temperaturgradienten bzw. Temperaturprofile, insbesondere Temperaturplateaus, im Allgemeinen angeführten Zeiten bzw. Zeitdauern realisiert werden.

In Abhängigkeit von der gewählten Temperatur bzw. insbesondere zum Ende von Schritt (a) kann insbesondere auch eine Trocknung des sulfonierten Ausgangsmaterials erfolgen, beispielsweise im Rahmen des zuvor angeführten zweiten Temperaturplateaus. Hierzu kann auch auf nachfolgende Ausführungen verwiesen werden.

Im Rahmen der in Schritt (a) durchgeführten Sulfonierung werden die stark sauren, insbesondere nachfolgend zu Vernetzungen führenden, chemischen bzw. funktionellen Gruppen, insbesondere Sulfonsäuregruppen, sozusagen *in-situ* generiert.

Was das im Rahmen von Schritt (a) des erfindungsgemäßen Verfahrens eingesetzte Sulfonierungsmittel anbelangt, so kann es sich hierbei gemäß einer erfindungsgemäß bevorzugten Ausführungsform um Schwefeltrioxid (SO₃), insbesondere in Form von Oleum bzw. vorzugsweise konzentrierter Schwefelsäure, vorzugsweise in Form einer Mischung von Oleum und vorzugsweise konzentrierter Schwefelsäure, handeln. Insbesondere wird das Sulfonierungsmittel dabei in flüssiger Form, insbesondere in Form einer wässrigen Lösung und/oder unter Verwendung von Wasser als Lösemittel, eingesetzt.

Was die insbesondere konzentrierte Schwefelsäure anbelangt, so kann es sich hierbei um eine mindestens 50%ige, vorzugsweise mindestens 60%ige, bevorzugt mindestens 70%ige, besonders bevorzugt mindestens 80%ige, ganz besonders bevorzugt mindestens 90%ige, noch weiter bevorzugt mindestens 95%ige Schwefelsäure handeln (Menge bzw. Masse an Schwefelsäure pro Masse an Lösemittel, insbesondere Wasser; z. B. 95%ige Schwefelsäure = 950 g Schwefelsäure auf 1000 g Lösemittel, insbesondere Wasser).

Dabei kann die Menge an eingesetztem Sulfonierungsmittel in weiten Bereichen variieren. Erfindungsgemäß werden jedoch besonders gute Ergebnisse erreicht, wenn in Schritt (a) das Sulfonierungsmittel, insbesondere Schwefeltrioxid (SO₃), vorzugsweise in Form von Oleum bzw. vorzugsweise konzentrierter Schwefelsäure, in einer Menge im Bereich von 10 Gew.-% bis 95 Gew.-%, insbesondere im Bereich von 20 Gew.-% bis 90 Gew.-%, vorzugsweise im Bereich von 30 Gew.-% bis 85 Gew.-%, bevorzugt im Bereich von 40 Gew.-% bis 80 Gew.-%, besonders bevorzugt im Bereich von 50 Gew.-% bis 80 Gew.-%, bezogen auf das Gesamtgewicht der resultierenden Zusammensetzung (Gemisch) aus Sulfonierungsmittel und Ausgangsmaterial, eingesetzt wird.

Insbesondere kann in Schritt (a) das Sulfonierungsmittel in Form von Oleum in einer Menge im Bereich von 5 Gew.-% bis 85 Gew.-%, insbesondere im Bereich von 10 Gew.-% bis 80 Gew.-%, vorzugsweise im Bereich von 20 Gew.-% bis 75 Gew.-%, bevorzugt im Bereich von 30 Gew.-% bis 70 Gew.-%, bezogen auf das Gesamtgewicht der resultierenden Zusammensetzung (Gemisch) aus Sulfonierungsmittel und Ausgangsmaterial, eingesetzt werden. Insbesondere handelt es sich bei dem erfindungsgemäß eingesetzten Oleum, synonym auch als rauchende Schwefelsäure bezeichnet, um eine Lösung von Schwefeltrioxid in der Schwefelsäure über das stöchiometrische Mengenverhältnis hinaus. Dies ist dem Fachmann als solches bekannt.

Gleichermaßen kann in Schritt (a) das Sulfonierungsmittel in Form von vorzugsweise konzentrierter Schwefelsäure in einer Menge im Bereich von 5 Gew.-% bis 80 Gew.-%, insbesondere im Bereich von 5 Gew.-% bis 75 Gew.-%, vorzugsweise im Bereich von 10 Gew.-% bis 70 Gew.-%, bevorzugt im Bereich von 15 Gew.-% bis 65 Gew.-%, bezogen auf das Gesamtgewicht der resultierenden Zusammensetzung (Gemisch) aus Sulfonierungsmittel und Ausgangsmaterial, eingesetzt werden.

Neben den zuvor angeführten Mengenangaben kommt auch dem Verhältnis der gegebenenfalls in Kombination eingesetzten Sulfonierungsmitteln eine große Bedeutung zu:
So kann es erfindungsgemäß vorgesehen sein, dass in Schritt (a) das Sulfonierungsmittel in Form von Oleum einerseits und vorzugsweise konzentrierter Schwefelsäure andererseits in einem Gewichtsverhältnis (Oleum : Schwefelsäure) im Bereich von 5 : 1 bis 1 : 3, insbesondere im Bereich von 4 : 1 bis 1 : 2, vorzugsweise im Bereich von 4 : 1 bis 1 : 1, bevorzugt im Bereich von 3 : 1 bis 1 : 1, besonders bevorzugt 2,5 : 1 bis 1,5 : 1, eingesetzt wird.

Zudem kann es im Rahmen der vorliegenden Erfindung vorgesehen sein, dass in Schritt (a) das Sulfonierungsmittel, insbesondere Schwefeltrioxid (SO₃), vorzugsweise in Form von Oleum bzw. vorzugsweise konzentrierter Schwefelsäure, einerseits und das Ausgangsmaterial andererseits in einem Gewichtsverhältnis (Sulfonierungsmittel : Ausgangsmaterial) im Bereich von 5 : 1 bis 1 : 3, insbesondere im Bereich von 4 : 1 bis 1 : 2, vorzugsweise im Bereich von 4 : 1 bis 1 : 1, bevorzugt im Bereich von 3 : 1 bis 1 : 1, besonders bevorzugt 2,5 : 1 bis 1,5 : 1, eingesetzt wird.

Insbesondere kann es auch vorgesehen sein, dass in Schritt (a) das Sulfonierungsmittel in Form von Oleum einerseits und das Ausgangsmaterial andererseits in einem Gewichtsverhältnis (Oleum : Ausgangsmaterial) im Bereich von 5 : 1 bis 1 : 4, insbesondere im Bereich von 3 : 1 bis 1 : 3, vorzugsweise im Bereich von 2 : 1 bis 1 : 2, bevorzugt im Bereich von 1,5 : 1 bis 1 : 1, eingesetzt wird.

Darüber hinaus kann in Schritt (a) das Sulfonierungsmittel in Form von vorzugsweise konzentrierter Schwefelsäure einerseits und das Ausgangsmaterial andererseits in einem Gewichtsverhältnis (Schwefelsäure : Ausgangsmaterial) im Bereich von 6 : 1 bis 1 : 3, insbesondere im Bereich von 5 : 1 bis 1 : 2, vorzugsweise im Bereich von 4 : 1 bis 1 : 1, bevorzugt im Bereich von 3 : 1 bis 1 : 1, eingesetzt werden.

Im Allgemeinen kann in Schritt (a) das Sulfonierungsmittel in Form von Oleum und vorzugsweise konzentrierter Schwefelsäure einerseits und das Ausgangsmaterial andererseits in einem Gewichtsverhältnis (Oleum : Schwefelsäure : Ausgangsmaterial) im Bereich von (1 bis 6) : (1 bis 4) : (1 bis 10), insbesondere im Bereich von (1 bis 5) : (1 bis 3) : (1 bis 6), eingesetzt werden.

Darüber hinaus kann in Schritt (a) das Sulfonierungsmittel mit dem Ausgangsmaterial in Kontakt gebracht werden vorzugsweise derart, dass eine zumindest im Wesentlichen vollständige Benetzung des Ausgangsmaterials mit dem Sulfonierungsmittel erfolgt. Beispielsweise kann das Ausgangsmaterial in das Sulfonierungsmittel eingebracht, insbesondere eingetaucht, werden. Das Sulfonierungsmittel kann in üblicher Art und Weise in die Sulfonierungsvorrichtung eingebracht bzw. mit dem Ausgangmaterial in Kontakt gebracht werden, beispielsweise mittels Einsprühen bzw. Eindüsen oder dergleichen. Das Inkontaktbringen kann auch mittels Rühren, beispielsweise unter Einsatz eines Rührwerkes bzw. Rühreinrichtung, oder dergleichen erfolgen.

Erfindungsgemäß kann es vorgesehen sein, dass in Schritt (a) diskontinuierlich oder kontinuierlich, insbesondere diskontinuierlich (batchweise), verfahren wird bzw. dass Schritt (a) diskontinuierlich oder kontinuierlich, insbesondere diskontinuierlich, durchgeführt wird. Insbesondere kann Schritt (a) des erfindungsgemäßen Verfahrens in einer diskontinuierlich oder kontinuierlich, insbesondere diskontinuierlich, arbeitenden Sulfonierungs- bzw. Reaktionsvorrichtung, insbesondere in einem Drehrohr, vorzugsweise Drehrohrofen, bzw. in einem Rührreaktor, durchgeführt werden.

Bei der der Sulfonierung zugrundeliegenden Sulfonierungs- bzw. Reaktionsvorrichtung handelt es sich insbesondere um eine entsprechende Vorrichtung aus einem Material mit hoher Säurebeständigkeit, um einem korrosiven Verschleiß vorzubeugen. Die diesbezüglichen Materialien sind dem Fachmann als solche wohlbekannt, so dass es diesbezüglich keiner weiterführenden Ausführungen bedarf.

Erfindungsgemäß kann es weiterhin vorgesehen sein, dass insbesondere in Schritt (a) eine Trocknung des sulfonierten Ausgangsmaterials durchgeführt wird. Hierbei kann insbesondere der gegebenenfalls überschüssige flüssige bzw. insbesondere wässrige Anteil des Sulfonierungsmittels entfernt werden. Die Trocknung kann beispielsweise Bestandteil des Einwirkenlassens und Reagierens des Sulfonierungsmittels mit dem Ausgangsmaterial sein. Die Trocknung kann insbesondere am Ende bzw. in der Endphase des Einwirkenlassens und Reagierens des Sulfonierungsmittels mit dem Ausgangsmaterial in Schritt (a) durchgeführt werden. Insbesondere kann die Trocknung in derselben Sulfonierungs- bzw. Reaktionsvorrichtung wie die Sulfonierung bzw. das Einwirkenlassen und Reagieren durchgeführt werden. Somit kann die Trocknung in der Sulfonierungs- bzw. Reaktionsvorrichtung durchgeführt als solcher werden. Insbesondere kann die Trocknung im Rahmen der zuvor beschriebenen Verfahrensweise unter Anwendung eines linearen bzw. stufenförmigen Temperaturanstiegs durchgeführt werden, und zwar insbesondere bei Erreichen der nachfolgend für die Trocknung angeführten Temperaturen. Die Trocknung kann auch im Rahmen des zweiten bzw. letzten Temperaturplateaus gemäß Schritt (a), wie zuvor beschrieben, durchgeführt werden.

Die Trocknung kann demgegenüber auch in einer insbesondere getrennten bzw. separaten (Trocknungs-)Vorrichtung durchgeführt werden, und zwar insbesondere nach Einwirkenlassen und Reagieren des Sulfonierungsmittels mit dem Ausgangsmaterial in der Sulfonierungs- bzw. Reaktionsvorrichtung. Die Trocknung kann somit als separater Schritt insbesondere nach dem Einwirkenlassen und Reagieren des Sulfonierungsmittels mit dem Ausgangsmaterial durchgeführt werden.

Im Allgemeinen sollte auch die Trocknung bei Temperaturen unterhalb der Siede- bzw. Zersetzungstemperatur des Sulfonierungsmittels durchgeführt werden. Insbesondere sollte die Trocknung bei Temperaturen im Bereich von 100 °C bis 330 °C, insbesondere im Bereich von 200 °C bis 330 °C, vorzugsweise im Bereich von 250 °C bis 330 °C, erfolgen. Im Allgemeinen kann die Trocknung für eine Zeitdauer im Bereich von 0,5 h bis 10 h, insbesondere im Bereich von 1 h bis 8 h, vorzugsweise im Bereich von 3 h bis 7 h, durchgeführt werden.

Erfindungsgemäß kann es zudem vorgesehen sein, dass in Schritt (a) nach Einwirkenlassen und Reagieren des Sulfonierungsmittels mit dem Ausgangsmaterial bzw. nach Trocknung des sulfonierten Ausgangsmaterials und/oder nach Durchführung von Schritt (a) bzw. vor Durchführung von Schritt (b) eine Abkühlung des sulfonierten Ausgangsmaterials durchgeführt wird. In diesem Zusammenhang kann das sulfonierte Ausgangsmaterial insbesondere auf Temperaturen im Bereich von 15 °C bis 30 °C abgekühlt werden.

Gemäß einer erfindungsgemäß bevorzugten Ausführungsform kann es zudem vorgesehen sein, dass in Schritt (a) nach Einwirkenlassen und Reagieren des Sulfonierungsmittels mit dem Ausgangsmaterial bzw. nach Trocknung des sulfonierten Ausgangsmaterials und/oder nach Abkühlung des sulfonierten Ausgangsmaterials und/oder nach Durchführung von Schritt (a) bzw. vor Durchführung von Schritt (b) des erfindungsgemäßen Verfahrens ein Stehenlassen bzw. Aufbewahren des sulfonierten Ausgangsmaterials durchgeführt wird.

Erfindungsgemäß kann somit eine (Zwischen-)Lagerung des sulfonierten Ausgangsmaterials, wie zuvor beschrieben, erfolgen, was mit den vorgenannten Vorteilen einer Bevorratung des sulfonierten Ausgangsmaterials und bedarfsgemäßer Durchführung von Carbonisierung und Aktivierung einhergeht. Zudem wird durch die spezielle (Zwischen-)Lagerung des in Schritt (a) erhaltenen sulfonierten Ausgangsmaterials sozusagen eine Nachreifung des Materials erreicht.

Insbesondere kann das Stehenlassen bzw. das Aufbewahren des sulfonierten Ausgangsmaterials bei Temperaturen im Bereich von 15 °C bis 30 °C bzw. in Umgebungsatmosphäre (Umgebungsluft), insbesondere Luft, oder aber unter inerter Atmosphäre, insbesondere unter Stickstoffatmosphäre, durchgeführt werden. Im Allgemeinen kann das sulfonierte Ausgangsmaterial (Sulfonat) jedoch in einer natürlichen Umgebungsatmosphäre gelagert werden, da in Bezug auf das Ausgangsmaterial keine Inertisierung bzw. keine vorzeitige Erschöpfung, beispielsweise durch Kontamination bzw. Aufnahme von Substanzen aus der Umgebung, auftritt. Insbesondere kann das Stehenlassen bzw. das Aufbewahren des sulfonierten Ausgangsmaterials bei einer relativen Luftfeuchtigkeit im Bereich von 10 bis 80 %, insbesondere 20 bis 70 %, vorzugsweise 30 bis 65 %, bevorzugt 40 bis 60 %, erfolgen.

Im Allgemeinen kann das Stehenlassen bzw. das Aufbewahren des sulfonierten Ausgangsmaterials für eine Zeitdauer im Bereich von 0,5 Tagen bis 12 Monaten, insbesondere im Bereich von 1 Tag bis 6 Monaten, vorzugsweise im Bereich von 2 Tagen bis 3 Monaten, bevorzugt im Bereich von 5 Tagen bis 1 Monat, durchgeführt werden.

Insbesondere kann bei dem Stehenlassen bzw. Aufbewahren eine Nachsulfonierung (weiterführende (fortgesetzte) Sulfonierung) bzw. eine nachträgliche bzw. weiterführende (fortgesetzte) Volumenzunahme (Nachquellung) des sulfonierten Ausgangsmaterials erfolgen. Ohne sich auf diese Theorie beschränken zu wollen, erfolgt im Rahmen der Nachsulfonierung bzw. der nachträglichen Volumenexpansion eine weiterführende Reaktion des in Schritt (a) erhaltenen sulfonierten Ausgangsmaterials mit den insbesondere in dem Porensystem des sulfonierten Ausgangsmaterials befindlichen verbliebenen Sulfonierungsmittel.

In diesem Zusammenhang hat die Anmelderin in völlig überraschenderweise gefunden, dass durch die zweckgerichtete Nachsulfonierung bzw. durch die nachträgliche Volumenexpansion im Rahmen des erfindungsgemäß vorgesehenen Stehenlassens bzw. Aufbewahrens des sulfonierten Ausgangsmaterials die Porosität weiterführend eingestellt bzw. vorgeben kann, was in entsprechender Weise seinen unmittelbaren Niederschlag in dem nachfolgend erhaltenen Produkt in Form der erfindungsgemäßen Aktivkohle findet. Insbesondere kann durch das Stehenlassen bzw. Aufbewahren mit der vorgesehenen Nachsulfonierung bzw. der nachgeschalteten bzw. nachfolgenden Volumenexpansion der Anteil an Mesoporen, bezogen auf das Gesamtporenvolumen, der erfindungsgemäß erhaltenen Aktivkohle weiter erhöht werden. Das Stehenlassen bzw. Aufbewahren des sulfonierten Ausgangsmaterials kann im Allgemeinen als Bestandteil von Schritt (a) des erfindungsgemäßen Verfahrens durchgeführt werden. Denn bei dem Stehenlassen bzw. Aufbewahren erfolgt insbesondere eine weiterführende Sulfonierung mit einem Einwirkenlassen und Reagieren von insbesondere restlichem Sulfonierungsmittel mit dem sulfonierten Ausgangsmaterial, einhergehend mit der zuvor beschriebenen nachträglichen Volumenexpansion des Ausgangsmaterials (Sulfonat).

Was das erfindungsgemäße Verfahren zudem anbelangt, so ist es im Rahmen der vorliegenden Erfindung insbesondere vorgesehen, dass in Schritt (a) bzw. bei dem Stehenlassen und/oder Aufbewahren das Ausgangsmaterial mit chemischen Gruppen, insbesondere stark sauren chemischen Gruppen, vorzugsweise Sulfonsäuregruppen, ausgerüstet wird. Die in Rede stehenden Gruppen werden somit sozusagen *in-situ* im Rahmen der Sulfonierung gemäß Verfahrensschritt (a) erzeugt.

Erfindungsgemäß kann es in diesem Zusammenhang vorgesehen sein, dass das Ausgangsmaterials mit den chemischen, insbesondere stark sauren chemischen Gruppen, vorzugsweise Sulfonsäuregruppen, ausgerüstet wird derart, dass das Gewichtsverhältnis des Ausgangsmaterials zu den chemischen Gruppen (Ausgangsmaterial : chemische Gruppen) im Bereich von 4 : 1 bis 1 : 2, insbesondere im Bereich von 3 : 1 bis 1 : 1,5, vorzugsweise im Bereich von 2 : 1 bis 1 : 1,25, liegt. Die Ausbildung eines definierten Gewichtsverhältnisses zwischen Ausgangsmaterial zu chemischen Gruppen führt zu einer besonders definierten Porengrö-ßenverteilung bei hoher Abriebhärte bzw. Berstfestigkeit der Aktivkohle).

Was das Ausgangsmaterial als solches anbelangt, so kann dieses insbesondere in Form eines kornförmigen bzw. kugelförmigen, insbesondere kugelförmigen Ausgangsmaterials eingesetzt werden. Insbesondere kann das Ausgangsmaterial somit in Kornform und/oder in Kugelform, insbesondere in Kugelform, eingesetzt werden.

In diesem Zusammenhang kann das Ausgangsmaterial eine Partikelgröße, insbesondere einen Teilchendurchmesser, im Bereich von 0,01 mm bis 2,5 mm, insbesondere im Bereich von 0,02 mm bis 2 mm, bevorzugt im Bereich von 0,05 mm bis 1,5 mm, vorzugsweise im Bereich von 0,1 mm bis 1,25 mm, besonders bevorzugt im Bereich von 0,15 mm bis 1 mm, ganz besonders bevorzugt im Bereich von 0,2 mm bis 0,9 mm, aufweisen. In diesem Zusammenhang sollten mindestens 70 Gew.-%, insbesondere mindestens 80 Gew.-%, vorzugsweise mindestens 85 Gew.-%, bevorzugt mindestens 90 Gew.-%, besonders bevorzugt mindestens 95 Gew.-%, der Partikel des Ausgangsmaterials Partikelgrößen, insbesondere Teilchendurchmesser, in den vorgenannten Bereichen aufweisen.

Insbesondere sollte das Ausgangsmaterial eine mittlere Partikelgröße D50, insbesondere einen mittleren Teilchendurchmesser (D50), im Bereich von 0,1 mm bis 1,2 mm, insbesondere im Bereich von 0,15 mm bis 1 mm, vorzugsweise im Bereich von 0,2 mm bis 0,9 mm, bevorzugt im Bereich von 0,25 mm bis 0,8 mm, besonders bevorzugt im Bereich von 0,3 mm bis 0,7 mm, aufweisen.

Die entsprechenden Teilchengrößen können insbesondere auf Basis der Methode nach ASTM D2862-97/04 bestimmt werden. Zudem können die vorgenannten Grö-ßen mit Bestimmungsmethoden auf Basis einer Siebanalyse, auf Basis von Röntgenbeugung, Laserdiffraktometrie oder dergleichen bestimmt werden. Die jeweiligen Bestimmungsmethoden sind dem Fachmann an sich wohlbekannt, so dass es diesbezüglich keiner weiteren Ausführungen bedarf. Insbesondere erfolgt die Bestimmung gemäß der vorgenannten Methode nach ASTM D2862-97/04.

Was weiterhin die Volumenexpansion bzw. die Volumenzunahme des sulfonierten Ausgangsmaterials anbelangt, so verhält es sich im Rahmen der vorliegenden Erfindung insbesondere derart, dass die Volumenexpansion (Volumenzunahme) des Ausgangsmaterials auf Basis einer chemischen und/oder physikochemischen und/oder physikalischen Volumenexpansion erfolgt. Hierzu kann auf obige Ausführungen verwiesen werden.

Die Volumenzunahme geht im Allgemeinen mit einer Vergrößerung des Teilchendurchmessers, insbesondere des mittleren Teilchendurchmessers (D50), einher. Insbesondere kann es im Rahmen der vorliegenden Erfindung vorgesehen sein, dass in Schritt (a) die Volumenexpansion (Volumenzunahme) des Ausgangsmaterials derart erfolgt, dass die Partikelgröße, insbesondere der Teilchendurchmesser, und/oder die mittlere Partikelgröße (D50), insbesondere der mittlere Teilchendurchmesser (D50), des sulfonierten Ausgangsmaterials um mindestens 1 %, insbesondere mindestens 2 %, vorzugsweise mindestens 5 %, bevorzugt mindestens 10 %, vergrößert wird, bezogen auf die Partikelgröße, insbesondere den Teilchendurchmesser, des nichtsulfonierten Ausgangsmaterials und/oder bezogen auf die mittlere Partikelgröße (D50), insbesondere den mittleren Teilchendurchmesser (D50), des nichtsulfonierten Ausgangsmaterials (d.h. des erfindungsgemäß in Schritt (a) eingesetzten Ausgangsmaterials im nichtsulfonierten Zustand).

Im Rahmen der Sulfonierung wird somit auf eine kontrollierte bzw. zweckgerichtete Volumenexpansion mit den einhergehenden Änderungen in dem zugrundeliegenden Porensystem abgestellt, was mit der Ausbildung definierter Aktivkohlen mit spezieller Porosität, insbesondere Porengrößenverteilung, einhergeht.

Insbesondere kann in diesem Zusammenhang in Schritt (a) die Volumenexpansion (Volumenzunahme) des Ausgangsmaterials derart erfolgen, dass die Partikelgröße, insbesondere der Teilchendurchmesser, und/oder die mittlere Partikelgröße (D50), insbesondere der mittlere Teilchendurchmesser (D50), des sulfonierten Ausgangsmaterials um einen Wert in einem Bereich von 1 % bis 40 %, insbesondere in einem Bereich von 2 % bis 30 %, vorzugsweise in einem Bereich von 3 % bis 20 %, bevorzugt in einem Bereich von 4 % bis 15 %, bezogen auf die Partikelgrö-ße, insbesondere den Teilchendurchmesser, des nichtsulfonierten Ausgangsmaterials und/oder bezogen auf die mittlere Partikelgröße (D50), insbesondere den mittleren Teilchendurchmesser (D50), des nichtsulfonierten Ausgangsmaterials, zunimmt und/oder vergrößert wird. In diesem Zusammenhang können 1 % bis 50 %, insbesondere 2 % bis 45 %, vorzugsweise 5 % bis 40 %, bevorzugt 10 % bis 35 % der Volumenexpansion (Volumenzunahme) des sulfonierten Ausgangsmaterials, bezogen auf die Gesamtvolumenexpansion, durch das erfindungsgemäß gegebenenfalls vorgesehene Stehenlassen bzw. Aufbewahren des sulfonierten Ausgangsmaterials hervorgerufen werden.

Wie zuvor angeführt, kann es erfindungsgemäß vorgesehen sein, dass bereits das Ausgangsmaterial als solches eine definierte Porosität bzw. ein dem Material innewohnendes Porensystem aufweist. So kann es erfindungsgemäß vorgesehen sein, dass das Ausgangsmaterial, insbesondere in Form des kornförmigen und/oder kugelförmigen, insbesondere kugelförmigen Ausgangsmaterials, porös, insbesondere mikroporös, und/oder gelförmig ist. Aufgrund der Porosität des Ausgangsmaterials kann das Sulfonierungsmittel in das Ausgangsmaterial eindringen, einhergehend mit der Ausbildung von stark sauren chemischen Gruppen, insbesondere Sulfonsäuregruppen, auch in dem (inneren) Porensystem des Ausgangsmaterials. Insbesondere wird die Zugänglichkeit des Porensystems für das Sulfonierungsmittel durch die während der Sulfonierung auftretende Volumenzunahme mit der Vergrößerung auch der Poren des Ausgangsmaterials nochmals verbessert.

Insbesondere kann das Ausgangsmaterial einen Mikroporenvolumenanteil, bezogen auf das Gesamtporenvolumen des Ausgangsmaterials, von mindestens 30 %, insbesondere mindestens 40 %, vorzugsweise mindestens 50 %, bevorzugt mindestens 60 %, besonders bevorzugt mindestens 70 %, aufweisen. Gleichermaßen kann es erfindungsgemäß vorgesehen sein, dass das Ausgangsmaterial einen Mikroporenvolumenanteil, bezogen auf das Gesamtporenvolumen des Ausgangsmaterials, im Bereich von 30 % bis 85 %, insbesondere im Bereich von 40 % bis 80 %, vorzugsweise im Bereich von 50 % bis 75 %, aufweist. Die diesbezüglichen Bestimmungsmethoden sind dem Fachmann als solche wohlbekannt. Insbesondere kann diesbezüglich auch auf die nachfolgenden Ausführungen zu der erfindungsgemäßen Aktivkohle verwiesen werden, welche in entsprechender Weise für das Verfahren nach der Erfindung gelten.

Erfindungsgemäß kann es insbesondere vorgesehen sein, dass als Ausgangsmaterial ein Ausgangsmaterial auf Basis von organischen Polymeren, insbesondere auf Basis von divinylbenzolvernetztem Polystyrol, bevorzugt auf Basis von Styrol/Divinylbenzol-Copolymeren, eingesetzt wird. In diesem Zusammenhang kann der Gehalt an Divinylbenzol in dem Ausgangsmaterial im Bereich von 0,1 Gew.-% bis 25 Gew.-%, insbesondere 0,5 Gew.-% bis 20 Gew.-%, vorzugsweise 1 Gew.-% bis 15 Gew.-%, bevorzugt 2 Gew.-% bis 10 Gew.-%, bezogen auf das Ausgangsmaterial, liegen. Ein derartiges Material eignet sich im besonderen Maße zur Verwendung im Rahmen des erfindungsgemäßen Verfahrens, da es insbesondere bereits über ein definiertes Porensystem verfügt, welches in besonderer Weise der erfindungsgemäß vorgesehenen Sulfonierung zugänglich ist.

Im Rahmen der vorliegenden Erfindung ist es zudem möglich, dass als Ausgangsmaterial ein Ausgangsmaterial auf Basis von Ionenaustauscherharz-Vorstufen eingesetzt wird. In diesem Zusammenhang kann das Ausgangsmaterial auf Basis von unsulfonierten bzw. zumindest im Wesentlichen keine Sulfonsäuregruppen aufweisenden Vorstufen von Ionenaustauscherharzen eingesetzt werden. Zudem können die Ionenaustauscherharz-Vorstufen vom Geltyp sein bzw. mikroporös ausgebildet sein.

Im Rahmen der vorliegenden Erfindung kann es, wenn auch weniger bevorzugt, grundsätzlich vorgesehen sein, auch bereits sulfonierte Vorstufen von Ionenaustauscherharzen bzw. Ionenaustauscherharze als solche einzusetzen, wobei diese dann insbesondere in Schritt (a) des erfindungsgemäßen Verfahrens einer weiterführenden Sulfonierung unterzogen werden.

Gemäß einer erfindungsgemäßen Ausführungsform kann es zudem vorgesehen sein, dass in Schritt (a) zudem eine Peptisation des Ausgangsmaterials durchgeführt wird. Hierbei handelt es sich insbesondere um ein Herauslösen von im Ausgangsmaterial verbliebener monomerer, dimerer bzw. oligomerer Einheiten sowie insbesondere um ein Abscheiden der herausgelösten Einheiten auf der äußeren Oberfläche der jeweiligen Teilchen bzw. Partikel des Ausgangsmaterials. Hierdurch wird auch eine verbesserte Zugänglichkeit des Porensystems insbesondere im Hinblick auf das erfindungsgemäß eingesetzte Sulfonierungsmittel erreicht.

Gemäß einer erfindungsgemäß besonders bevorzugten Ausführungsform kann es vorgesehen sein, dass Schritt (a) getrennt bzw. separat, insbesondere räumlich bzw. zeitlich getrennt, von Schritt (b) und/oder von Schritt (c), insbesondere getrennt bzw. separat von Schritt (b) und Schritt (c), durchgeführt wird. Hierdurch kann die Sulfonierung als solche auch im Hinblick auf die vorgesehene Volumenexpansion des Ausgangsmaterials optimiert werden. Zudem ermöglicht das getrennte Durchführen von Schritt (a) auch das Stehenlassen bzw. Aufbewahren des sulfonierten Ausgangsmaterials. Insbesondere kann in diesem Zusammenhang Schritt (a) dem Schritt (b) bzw. dem Schritt (c) als getrennter, insbesondere räumlich bzw. zeitlich getrennter Schritt, bzw. als separater Schritt vorgeschaltet sein. Insbesondere kann Schritt (a) in einer separaten Vorrichtung, insbesondere Sulfonierungs- bzw. Reaktionsvorrichtung, durchgeführt werden, wie zuvor beschrieben.

Im Nachfolgenden wird nunmehr Schritt (b) des erfindungsgemäßen Verfahrens mit der vorgesehenen Carbonisierung des sulfonierten Ausgangsmaterials weiterführend beschrieben:
Insbesondere kann in Schritt (b) die Carbonisierung des sulfonierten Ausgangsmaterials in einer separaten Vorrichtung und/oder räumlich und/oder zeitlich getrennt von der Sulfonierung gemäß Schritt (a) durchgeführt werden.

In diesem Zusammenhang kann das sulfonierte Ausgangsmaterial in mindestens eine Carbonisierungsvorrichtung, insbesondere in ein Drehrohr, vorzugsweise einen Drehrohrofen, bzw. in einen Bandofen eingebracht bzw. überführt werden.

Im Allgemeinen kann somit in Schritt (b) eine Carbonisierungsvorrichtung, insbesondere ein Drehrohr, vorzugsweise ein Drehrohrofen, bzw. ein Bandofen, eingesetzt werden.

In diesem Zusammenhang kann es erfindungsgemäß vorgesehen sein, dass die Carbonisierungsvorrichtung ein geschlossenes System bildet bzw. dass die Carbonisierungsvorrichtung unter inerten Bedingungen betreibbar ist bzw. dass die Carbonisierungsvorrichtung diskontinuierlich, kontinuierlich oder quasi-kontinuierlich, insbesondere kontinuierlich oder quasi-kontinuierlich, betreibbar ist. Dabei sollte die Carbonisierungsvorrichtung derart ausgebildet sein, dass die Temperatur der Carbonisierungsvorrichtung kontinuierlich oder stufenweise regelbar ist.

Bei der Carbonisierung (synonym auch als Pyrolyse, Abbrand oder Schwelung bezeichnet) erfolgt im Allgemeinen eine Umwandlung der kohlenstoffhaltigen Ausgangspolymere zu Kohlenstoff, d. h. mit anderen Worten wird das kohlenstoffhaltige Ausgangsmaterial verkohlt. Bei der Carbonisierung der zuvor genannten organischen Polymerkörner, insbesondere Polymerkügelchen, die Sulfonsäuregruppen enthalten, führt die Abspaltung der Sulfonsäuregruppen während der Carbonisierung zu freien Radikalen und somit zu Vernetzungen, ohne die es keinen Pyrolyserückstand (= Kohlenstoff) gäbe

Unter einem "geschlossenen System" soll im Rahmen der Erfindung insbesondere ein System verstanden werden, welches möglichst wenig Energie mit der Umgebung austauscht. Auch ein Materieaustausch mit der Umgebung soll bis auf die zugeführten Prozessgase (z. B. Wasserdampf, Kohlendioxid etc.) und die abgeführten Abgase möglichst vermieden oder aber zumindest minimiert werden; ein Materieaustausch findet also nur unter genau definierten und kontrollierten Bedingungen statt.

Im Allgemeinen wird in Schritt (b) die Carbonisierung bei Temperaturen im Bereich von 100 °C bis 1.200 °C, insbesondere im Bereich von 150 °C bis 1.100 °C, vorzugsweise im Bereich von 200 °C bis 1.000 °C, durchgeführt.

Zudem wird in Schritt (b) die Carbonisierung für eine Zeitdauer im Bereich von 0,5 h bis 20 h, insbesondere im Bereich von 0,75 h bis 15 h, vorzugsweise im Bereich von 1 h bis 10 h, bevorzugt im Bereich von 1,5 h bis 8 h, besonders bevorzugt im Bereich von 2 h bis 6 h, durchgeführt.

Der Fachmann ist diesbezüglich jederzeit in der Lage die entsprechenden Verfahrensparameter im Hinblick auf die durchgeführte Carbonisierung auszuwählen und aufeinander abzustimmen.

Im Allgemeinen sollte in Schritt (b) die Carbonisierung unter Inert(gas)atmosphäre, insbesondere unter Stickstoffatmosphäre, oder allenfalls unter leicht oxidierender Atmosphäre durchgeführt werden, insbesondere wie zuvor angeführt. Generell kann auch der Einsatz einer Edelgasatmosphäre in Betracht kommen. Durch die Inertatmosphäre wird eine ungewollte übermäßige Oxidation bzw. ein Abbrand des eingesetzten Materials vermieden.

Insbesondere kann in Schritt (b) der Carbonisierungsatmosphäre, insbesondere Inertatmosphäre, während der Carbonisierung, insbesondere bei höheren Temperaturen, vorzugsweise bei Temperaturen im Bereich von 550 °C bis 950 °C, Sauerstoff, insbesondere in Form von Luft zugeben werden, insbesondere in Mengen im Bereich von 50 I/min bis 100 l/min. Eine derartig modifizierte Carbonisierungsatmosphäre kann insbesondere an der Auslassseite der Carbonisierungsvorrichtung, insbesondere in Form eines Drehrohrofens, eingeführt werden.

Zudem kann es erfindungsgemäß vorgesehen sein, dass in Schritt (b) der Carbonisierungsatmosphäre, insbesondere Inertatmosphäre, während der Carbonisierung Wasser, insbesondere in Form von Wasserdampf und/oder eines Inertgas/Wasserdampf-Gemisches, vorzugsweise Stickstoff/Wasserdampfgemisches, insbesondere wobei der Anteil des Wasserdampfes in dem Inertgas/WasserdampfGemisch im Bereich von 1 bis 30 Vol.-%, eingestellt wird, zugeben wird, insbesondere in Mengen im Bereich von 50 I/min bis 100 l/min. Eine derartig mit Wasser modifizierte Carbonisierungsatmosphäre kann insbesondere an der Einlassseite der Carbonisierungsvorrichtung, insbesondere in Form eines Drehrohrofens, eingeführt werden.

Auf Basis dieser erfindungsgemäßen Vorgehensweise kann in kontrollierter Weise eine Verbrennung entstehender Pyrolysegase in der Carbonisierungsvorrichtung ermöglicht werden. Hierdurch kann der positive Effekt erreicht werden, dass ein Kondensieren von Pyrolysegasen im Basissystem des Ausgangsmaterials weitgehend verhindert wird, was zu einer weiterführenden Verbesserung der Produktqualität führt.

Zudem kann in Schritt (b) die Carbonisierung unter Anwendung eines Temperaturgradienten und/oder eines Temperaturprofils durchgeführt werden. In diesem Zusammenhang kann die Ausbildung des Temperaturgradienten bzw. des Temperaturprofils zeitlich bzw. räumlich in der Carbonisierungsvorrichtung, insbesondere in Form von Temperaturzonen, erfolgen.

Im Allgemeinen wird erfindungsgemäß derart vorgegangen, dass in Schritt (b) die Carbonisierung durchgeführt wird derart, dass die chemischen Gruppen, insbesondere stark sauren chemischen Gruppen, vorzugsweise Sulfonsäuregruppen, insbesondere unter Ausbildung freier Radikale und/oder unter Ausbildung von Vernetzungen, thermisch zersetzt bzw. von dem sulfonierten Ausgangsmaterial abgespalten werden. Auf diese Weise kommt es insbesondere zu einem Einsetzen der Carbonisierung bzw. zu einer thermischen Zersetzung des Ausgangsmaterials, vorzugsweise unter Vernetzung der Polymeren des Ausgangsmaterials bzw. unter Bildung von Kohlenstoff. Insbesondere kann in Schritt (b) die Carbonisierung derart durchgeführt werden, dass insbesondere nach der thermischen Zersetzung und/oder der Abspaltung der chemischen Gruppen, insbesondere der stark sauren chemischen Gruppen, vorzugsweise der Sulfonsäuregruppen, eine insbesondere weitergehende bzw. insbesondere vollständige Carbonisierung des Ausgangsmaterials erfolgt. Auf diese Weise resultiert sozusagen ein verkohltes Ausgangsmaterial bzw. Carbonisat mit einem entsprechenden Kohlenstoffgerüst, welches aufgrund der thermischen Zersetzung der zuvor angeführten Sulfonsäuregruppen insbesondere in desulfonierter Form vorliegt.

In diesem Zusammenhang kann es erfindungsgemäß vorgesehen sein, dass die thermische Zersetzung und/oder die Abspaltung der chemischen Gruppen, insbesondere der stark sauren chemischen Gruppen, vorzugsweise der Sulfonsäuregruppen, insbesondere in einer ersten Temperaturzone der Carbonisierungsvorrichtung bzw. bei Temperaturen im Bereich von 100 °C bis 600 °C, insbesondere im Bereich von 150 °C bis 500 °C, erfolgt.

Zudem kann es in diesem Zusammenhang vorgesehen sein, dass die weitergehende bzw. vollständige Carbonisierung des Ausgangsmaterials in einer zweiten Temperaturzone der Carbonisierungsvorrichtung erfolgt. Insbesondere kann die zweite Temperaturzone insbesondere in Prozessrichtung bzw. stromabwärts zu der ersten Temperaturzone angeordnet sein. Zudem kann die weitergehende bzw. vollständige Carbonisierung des Ausgangsmaterials bei Temperaturen im Bereich von 400 °C bis 1.200 °C, insbesondere im Bereich von 500 °C bis 1.000 °C, erfolgen. Auf dieser Basis kann eine zumindest im Wesentlichen vollständige Umsetzung des Ausgangsmaterials zu Kohlenstoff bewirkt werden.

Im Rahmen der vorliegenden Erfindung kann es zudem vorgesehen sein, dass das in Verfahrensschritt (b) erhaltene carbonisierte Ausgangsmaterial (Aktivat) einer nachfolgenden Abkühlung unterzogen wird, insbesondere auf Temperaturen im Bereich von 15 °C bis 30 °C. Das carbonisierte Ausgangsmaterial (Aktivat) kann somit vor Durchführung von Schritt (c) mit der diesbezüglichen Aktivierung insbesondere auf Temperaturen im Bereich von 15 °C bis 30 °C abgekühlt werden.

Darüber hinaus kann zu weiterführenden Einzelheiten zu der erfindungsgemäß durchgeführten Carbonisierung insbesondere verwiesen werden auf die internationale Patentanmeldung WO 98/07655 A1 sowie auf die parallelen Patentanmeldungen DE 196 53 238 A1, DE 196 50 414 A1 und die zu derselben Patentfamilie gehörenden EP 0 952 960 A1 und US 6 300 276 B1 . Zudem kann verwiesen werden auf die DE 43 04 026 A1 und auf die zu derselben Patentfamilie gehörende US 6 184 177 B1.

Im Nachfolgenden wird nun die erfindungsgemäß vorgesehene Aktivierung gemäß Schritt (c) weiterführend beschrieben:
Insbesondere kann in Schritt (c) die Aktivierung des carbonisierten Ausgangsmaterials gleichermaßen in der Carbonisierungsvorrichtung (Carbonisierungs- bzw. Aktivierungsvorrichtung), insbesondere wie zuvor definiert, durchgeführt werden. Erfindungsgemäß ist es aber auch möglich, dass die Aktivierung des carbonisierten Ausgangsmaterials in einer separaten Aktivierungsvorrichtung bzw. räumlich und/oder zeitlich getrennt von der Carbonisierung durchgeführt wird.

In diesem Zusammenhang kann in Schritt (c) das carbonisierte Ausgangsmaterial in eine Aktivierungsvorrichtung, insbesondere in ein Drehrohr, vorzugsweise einen Drehrohrofen, eingebracht bzw. überführt werden. Insbesondere kann in Schritt (c) eine Aktivierungsvorrichtung, insbesondere ein Drehrohr, vorzugsweise ein Drehrohrofen, eingesetzt werden.

Insbesondere kann in Schritt (c) derart vorgegangen werden, dass die Aktivierung in Gegenwart mindestens eines Aktivierungsgases, insbesondere Sauerstoff, insbesondere in Form von Luft, Wasserdampf und/oder Kohlendioxid oder Gemischen dieser Aktivierungsgase, und/oder in Gegenwart eines Inertgas/Wasserdampf-Gemisches, vorzugsweise Stickstoff/Wasserdampf-Gemisches, und/oder in Gegenwart von insbesondere reinem Kohlendioxid oder eines Inertgas/Kohlendioxid-Gemisches, insbesondere eines Stickstoff/Kohlendioxid-Gemisches, durchgeführt wird.

Das Grundprinzip der erfindungsgemäß vorgesehenen Aktivierung gemäß Schritt (c) besteht darin, einen Teil des bei der Carbonisierung generierten Kohlenstoffs selektiv und gezielt unter geeigneten Bedingungen abzubauen bzw. abzubrennen. Hierdurch wird das Porensystem weiterführend ausgebildet und sozusagen finalisiert, wobei die auf die Masseneinheit bezogene Oberfläche weiter zunimmt. Bei der Aktivierung wird also ein gezielter Abbrand der Kohle vorgenommen. Da bei der Aktivierung Kohlenstoff abgebaut wird, tritt bei diesem Vorgang ein Substanzverlust ein, welcher - unter optimalen Bedingungen - gleichbedeutend mit einer Erhöhung der Porosität und Zunahme der inneren Oberfläche und des Porenvolumens der resultierenden Aktivkohle ist. Die Aktivierung erfolgt daher insbesondere unter selektiven bzw. kontrollierten oxidierenden Bedingungen. Infolge der Aktivierung wird somit das Porensystem des Ausgangsmaterials sozusagen weiter modifiziert bzw. weiterführend ausgebildet.

Was das bei der Aktivierung eingesetzte Aktivierungsgas anbelangt, so kann dieses insbesondere einen Anteil des Wasserdampfes in dem Inertgas/WasserdampfGemisch im Bereich von 1 Vol.-% bis 70 Vol.-%, aufweisen bzw. kann der diesbezügliche Bereich eingestellt werden.

In diesem Zusammenhang sollte der Durchsatz an Wasserdampf im Bereich von 1 m³/h bis 500 m³/h, insbesondere im Bereich von 20 m³/h bis 400 m³/h, liegen, bezogen auf reinen Wasserdampf.

Insbesondere sollte der massenbezogene Durchsatz an Wasserdampf im Bereich von 0,01 I/(h ▪ kg) bis 50 I/(h ▪ kg), insbesondere im Bereich von 0,02 I/(h ▪ kg) bis 25 l/(h ▪ kg), liegen, berechnet als Wasser und bezogen auf die Menge an mit Wasserdampf zu aktivierendem Ausgangsmaterial (Carbonisat).

Insbesondere sollte der Durchsatz an Stickstoff im Bereich von 0,5 m³/h bis 100 m³/h, insbesondere im Bereich von 1 m³/h bis 50 m³/h, vorzugsweise im Bereich von 2 m³/h bis 20 m³/h, liegen, bezogen auf reinen Stickstoff.

Insbesondere sollte der Durchsatz an Stickstoff im Bereich von 0,01 I/(h ▪ kg) bis 30 l/(h ▪ kg), insbesondere im Bereich von 0,02 l/(h ▪ kg) bis 20 l/(h ▪ kg), liegen, berechnet als Stickstoff und bezogen auf die Menge an zu aktivierendem Ausgangsmaterial (Carbonisat).

Insbesondere sollte der Durchsatz an Kohlendioxid im Bereich von 5 m³/h bis 250 m³/h, insbesondere 10 m³/h bis 200 m³/h, beträgt, bezogen auf reines Kohlendioxid, und/oder wobei der massenbezogene Durchsatz an Kohlendioxid im Bereich von 0,001 m³/(h▪ kg) bis 100 m³/(h▪ kg), insbesondere im Bereich von 0,01 m³/(h▪ kg) bis 50 m³/(h▪ kg), liegen, berechnet als reines gasförmiges Kohlendioxid unter Aktivierungsbedingungen und bezogen auf die Menge an mit Kohlendioxid zu aktivierendem Ausgangsmaterial (Carbonisat).

Im Allgemeinen wird in Schritt (c) die Aktivierung bei Temperaturen im Bereich von 700 bis 1.200 °C, insbesondere im Bereich von 800 °C bis 1.100 °C, vorzugsweise im Bereich von 850 °C bis 1.000 °C, besonders bevorzugt im Bereich von 900 bis 975 °C, durchgeführt.

Insbesondere wird in Schritt (c) die Aktivierung für eine Zeitdauer im Bereich von 0,5 h bis 20 h, insbesondere im Bereich von 1 h bis 15 h, vorzugsweise im Bereich von 2 h bis 10 h, durchgeführt. Der Fachmann ist jederzeit in der Lage, die im Rahmen der Aktivierung vorliegenden Parameter entsprechend auszuwählen und aufeinander abzustimmen, so dass es diesbezüglich keiner weiteren Ausführungen bedarf.

Erfindungsgemäß kann es zudem vorgesehen sein, dass in Schritt (c) die Aktivierung mehrstufig, insbesondere zweistufig, durchgeführt wird. In diesem Zusammenhang kann das carbonisierte Ausgangsmaterial zunächst in einem ersten Aktivierungsschritt einer Aktivierung in einer wasserdampfhaltigen Atmosphäre unterzogen werden, gefolgt von einem zweiten Aktivierungsschritt einer Aktivierung in einer kohlendioxidhaltigen Atmosphäre,

In diesem Zusammenhang kann der erste Aktivierungsschritt bei Temperaturen im Bereich von 700 °C bis 1.200 °C, insbesondere im Bereich von 800 °C bis 1.100 °C, vorzugsweise im Bereich von 850 °C bis 950 °C, und/oder für eine Zeitdauer im Bereich von 5 h bis 24 h, vorzugsweise im Bereich von 6 h bis 15 h, insbesondere im Bereich von 6 h bis 12 h, durchgeführt werden.

Was die Atmosphäre des ersten Aktivierungsschritts anbelangt, so kann diese Wasserdampf, insbesondere ein Inertgas/Wasserdampf-Gemisch, vorzugsweise ein Stickstoff/Wasserdampf-Gemisch, umfassen oder hieraus bestehen. In diesem Zusammenhang kann der Durchsatz an Wasserdampf im Bereich von 25 m³/h bis 350 m³/h, insbesondere im Bereich von 50 m³/h bis 300 m³/h, liegen, bezogen auf reinen Wasserdampf.

Insbesondere kann zudem der zweite Aktivierungsschritt bei Temperaturen im Bereich von 700 °C bis 1.200 °C, insbesondere im Bereich von 800 °C bis 1.100 °C, vorzugsweise im Bereich von 850 °C bis 950 °C, und/oder für eine Zeitdauer im Bereich von 1 h bis 10 h, insbesondere 3 h bis 8 h, durchgeführt werden.

Zudem kann die Atmosphäre des zweiten Aktivierungsschritts Kohlendioxid, insbesondere reines Kohlendioxid oder ein Gemisch aus Kohlendioxid/Inertgas, insbesondere ein Gemisch aus Kohlendioxid/Stickstoff, umfassen oder hieraus bestehen. In diesem Zusammenhang kann der Durchsatz an Kohlendioxid 10 m³/h bis 250 m³/h, insbesondere 20 m³/h bis 200 m³/h, betragen, bezogen auf reines Kohlendioxid.

Insbesondere kann im Rahmen der zweistufigen Aktivierung derart verfahren werden, dass der erste und zweite Aktivierungsschritt ineinander übergehen.

Was die gegebenenfalls vorgesehene zweistufige Aktivierung anbelangt, wonach das carbonisierte Ausgangsmaterial zunächst in einem ersten Aktivierungsschritt einer Aktivierung in einer wasserdampfhaltigen Atmosphäre unterzogen wird und sich hieran ein zweiter Aktivierungsschritt in einer kohlendioxidhaltigen Atmosphäre anschließt, so führt diese Vorgehensweise zu einer weiterführenden Optimierung der erfindungsgemäß erhaltenen Produkte in Form der Aktivkohle. Insbesondere kann auf Basis dieser Verfahrensführung eine hohe Gesamtporosität bei hohem Meso- bzw. Makroporenvolumenanteil bzw. hohem Mesoporenvolumenanteil erreicht werden, wobei gleichzeitig eine hohe mechanische Stabilität der so erhaltenen Aktivkohle gewährleistet ist.

Was Schritt (c) des erfindungsgemäßen Verfahrens weiterhin anbelangt, so kann nach erfolgter Aktivierung des carbonisierten Ausgangsmaterial eine Abkühlung der erhaltenen Aktivkohle in Form des Carbonisats durchgeführt werden, insbesondere auf Temperaturen im Bereich von 15 °C bis 30 °C.

Darüber hinaus kann zu weiterführenden Einzelheiten zu der erfindungsgemäß durchgeführten Aktivierung insbesondere verwiesen werden auf die internationale Patentanmeldung WO 98/07655 A1 sowie auf die parallelen Patentanmeldungen DE 196 53 238 A1, DE 196 50 414 A1 und die zu derselben Patentfamilie gehörenden EP 0 952 960 A1 und US 6 300 276**.**

Zudem kann verwiesen werden auf die DE 43 04 026 A1 und auf die zu derselben Patentfamilie gehörende US 6 184 177 B1.

Im Rahmen der vorliegenden Erfindung wird somit insgesamt ein Verfahren zur Herstellung von Aktivkohle, insbesondere einer polymerbasierten sphärischen Aktivkohle (PBSAC; *Polymer-based Spherical Activated Carbon*), bereitgestellt, wobei die so erhaltenen Aktivkohlen einen erhöhten Meso- oder Makroporenvolumenanteil, insbesondere einen erhöhten Mesoporenvolumenanteil, aufweisen.

Das erfindungsgemäße Verfahren kann insbesondere wie folgt ausgeführt werden:
- Erfindungsgemäß kann beispielsweise im Allgemeinen derart verfahren werden, dass die Sulfonierung getrennt von der Carbonisierung und Aktivierung durchgeführt wird oder derart, dass sämtliche Schritte, nämlich Sulfonierung, Carbonisierung und Aktivierung, einzeln bzw. separat durchgeführt werden, wobei das jeweils erhaltene (Zwischen-)Produkt abgekühlt und insbesondere zu Zwecken der Überführung in die Vorrichtung des nachfolgenden Schrittes aus der dem durchgeführten Verfahrensschritt zugrundeliegenden Vorrichtung entfernt wird.
- Weiterhin besteht ein zentrales Konzept der erfindungsgemäßen Verfahrensführung darin, dass bei der Sulfonierung eine längere Kontaktzeit zwischen dem Ausgangsmaterial einerseits und dem Sulfonierungsmittel, insbesondere in Form von Oleum und Schwefelsäure, andererseits gewählt wird und dass das resultierende sulfonierte Ausgangsmaterial bzw. Sulfonat nach durchgeführter Sulfonierung gegebenenfalls getrocknet wird, insbesondere bei Temperaturen von etwa 100 °C bis 330 °C für eine Zeitdauer von 0,5 h bis 10 h (vgl. obige Ausführungen). In diesem Zusammenhang wurde erfindungsgemäß überraschend gefunden, dass die erfindungsgemäße Vorgehensweise dazu führt, dass nach der Aktivierung eine Aktivkohle mit hohem Meso- bzw. Makroporenvolumenanteil bzw. mit hohem Mesoporenvolumenanteil und somit insgesamt ein Material mit gesteigerter Mesoporosität erhalten wird. Gleichermaßen erfolgt im Rahmen der erfindungsgemäßen Vorgehensweise eine gewisse Größenzunahme der Partikel, wie zuvor angeführt.
   Zudem wurde völlig überraschend gefunden, dass eine entsprechende Aufbewahrung bzw. ein Stehenlassen und somit eine weiterführende Lagerung des aus der Sulfonierung erhaltenen sulfonierten Ausgangsmaterials zu einer weiteren Volumenexpansion bzw. zu einer Nachsulfonierung führt, einhergehend mit einer entsprechend weiterführenden Modifikation bzw. Verbesserung der Materialeigenschaften der auf Basis des erfindungsgemäßen Verfahrens erhaltenen Aktivkohle.
- Insbesondere kann erfindungsgemäß derart vorgegangen werden, dass die Carbonisierung kontinuierlich durchgeführt wird, wobei das zunächst erhaltene Sulfonat, welches beispielsweise batchweise hergestellt werden kann und welches vor Durchführung der Carbonisierung und Aktivierung einer entsprechenden Lagerung unterzogen wird, in einen kontinuierlich arbeitenden Ofen, insbesondere auf Basis eines Drehrohrofens, eingefüllt und gleichmäßig und kontinuierlich durch den Ofen gefördert wird, wobei das zu carbonisierende Material dabei verschiedene Heiz- bzw. Temperaturzonen durchläuft und dabei carbonisiert wird. Auf Basis der nachfolgend durchgeführten Aktivierung werden dann die erfindungsgemäßen Aktivkohlen mit den entsprechenden Eigenschaften erhalten.

Weiterer Gegenstand der vorliegenden Erfindung ist zudem - gemäß einem **zweiten** Aspekt der vorliegenden Erfindung eine partikuläre Aktivkohle, vorzugsweise kornförmige bzw. kugelförmige, bevorzugt kugelförmige Aktivkohle, mit erhöhtem Mesoporenvolumenanteil, wobei die Aktivkohle nach dem zuvor beschriebenen Verfahren nach der Erfindung erhältlich ist.

Was die Aktivkohle bzw. Aktivkohlepartikel (nachfolgend auch nur als Aktivkohle bezeichnet) nach der Erfindung als solche anbelangt, so werden die hierzu aufgeführten Parameterangaben mit genormten oder explizit angegebenen Bestimmungsverfahren oder mit dem Fachmann an sich geläufigen Bestimmungsmethoden bestimmt. Insbesondere die Parameterangaben betreffend die Charakterisierung der Porosität bzw. der Porengrößenverteilung und andere Adsorptionseigenschaften ergeben sich im Allgemeinen jeweils aus den entsprechenden Stickstoffsorptionsisothermen der betreffenden Aktivkohle bzw. der vermessenen Produkte. Zudem kann die Porenverteilung, insbesondere auch im Hinblick auf den Gehalt an Poren definierter Größe in Bezug auf das Gesamtporenvolumen, auf Basis der DIN 66135-1 bestimmt werden.

Was die nach dem erfindungsgemäßen Verfahren erhältliche Aktivkohle nach der Erfindung weiterhin anbelangt, so ist es diesbezüglich vorgesehen, dass die Aktivkohle nach der Erfindung ein Gesamtporenvolumen, insbesondere ein Gesamtporenvolumen nach Gurvich, von mindestens 0,5 cm³/g, insbesondere mindestens 0,75 cm³/g, vorzugsweise mindestens 1 cm³/g, bevorzugt mindestens 1,25 cm³/g, besonders bevorzugt mindestens 2 cm³/g, aufweist.

Was die Bestimmung des Gesamtporenvolumens nach Gurvich anbelangt, so handelt es sich um eine dem Fachmann auf diesem Gebiet an sich wohlbekannte Mess-/Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805*,* sowie auf S. Lowell et al., Characterization of Porous Solids and Powders: Surface Area Pore Size and Density, Kluwer Academic Publishers, Article Technology Series, Seiten 111 ff*.* Insbesondere kann das Porenvolumen der Aktivkohle auf Basis der Gurvich-Regel gemäß der Formel V_{P} = Wₐ / ρ_{I} bestimmt werden, wobei Wₐ die adsorbierte Menge eines zugrundeliegenden Adsorbats und ρ_{I} die Dichte des eingesetzten Adsorbats darstellt (vgl. auch Formel (8.20) gemäß Seite 111, Kapitel 8.4.) von S. Lowell et al.).

Zudem ist es im Rahmen der vorliegenden Erfindung vorgesehen, dass 25 % bis 85 %, vorzugsweise 25 % bis 75 %, bevorzugt 30 % bis 70 %, des Gesamtporenvolumens, insbesondere des Gesamtporenvolumens nach Gurvich, der Aktivkohle durch Poren mit Porendurchmessern im Bereich von 2 nm bis 100 nm, insbesondere im Bereich von 2 nm bis 50 nm, gebildet sind.

Zudem ist es im Rahmen der vorliegenden Erfindung vorgesehen, dass die Aktivkohle nach der Erfindung eine Abriebfestigkeit (synonym auch als Abriebhärte bezeichnet) von mindestens 95 %, insbesondere mindestens 96 %, vorzugsweise mindestens 97 %, bevorzugt mindestens 98 %, besonders bevorzugt mindestens 99 %, ganz besonders bevorzugt mindestens 99,5 %, aufweist, insbesondere bestimmt nach modifizierter CEFIC-Norm.

Trotz der hohen Porosität, insbesondere der hohen Meso- und/oder Makroporosität, insbesondere Mesoporosität, weisen die erfindungsgemäßen Aktivkohlen eine hohe Druck- bzw. Berstfestigkeit (Gewichtsbelastbarkeit) sowie eine extrem hohe Abriebfestigkeit bzw. Abriebhärte auf.

So liegt die Abriebfestigkeit nach der Methode gemäß CEFIC (Conseil Européen des Fédérations des l'Industrie Chimique, Avenue Louise 250, Bte 71, B - 1050 Brüssel, November 1986, European Council of Chemical Manufacturers' Federations, Testmethoden für Aktivkohlen, Ziffer 1.6 "Mechanische Härte", Seiten 18/19) stets bei 100 %. Auch nach ASTM D3802 werden Abriebfestigkeiten der erfindungsgemäßen Aktivkohlen von stets 100 % erhalten.

Daher hat die Anmelderin eine modifizierte Testmethode in Anlehnung an diese CEFIC-Methode entwickelt, um aussagekräftigere Werte zu erhalten. Die modifizierte Bestimmungsmethode simuliert besser den Widerstand der Probe bzw. der Aktivkohle gegenüber Abrieb oder Zerreiben unter praxisnahen Bedingungen. Zu diesem Zweck wird die Probe für einen definierten Zeitraum in einem horizontal schwingenden, mit einer Wolframcarbidkugel beschickten Mahlbecher unter genormten Bedingungen beansprucht. Zu diesem Zweck wird wie folgt vorgegangen: 200 g einer Probe werden eine Stunde lang bei (120 ± 2) °C im Umlufttrockenschrank (Typ: Heraeus UT 6060 der Fa. Kendro GmbH, Hanau) getrocknet und anschließend in einem Exsikkator über Trockenmittel auf Raumtemperatur abgekühlt. 50 g der getrockneten Probe werden entnommen und mittels einer Siebmaschine mit Analysensieb (Typ: AS 200 control der Fa. Retsch GmbH, Hanau) bei einer Schwinghöhe von 1,2 mm zehn Minuten lang über ein Analysensieb (Analysensieb der Maschenweite: 0,315 mm, Durchmesser: 200 mm, Höhe: 50 mm) abgesiebt; das Unterkorn wird verworfen. 5 ml des Nennkornes werden in einen 10-ml-Meßzylinder nach DIN ISO 384 (Volumen: 10 ml, Höhe: 90 mm) abgefüllt und das Gewicht mittels eines Wägeglases mit eingeschliffenem Glasdeckel (Volumen: 15 ml, Durchmesser: 35 mm, Höhe: 30 mm) auf 0,1 mg genau bestimmt mittels Analysenwaage (Typ: BP121S der Sartorius AG, Göttingen, Wägebereich: 120 g, Genauigkeitsklasse: E2, Ablesbarkeit: 0,1 mg). Die abgewogene Probe wird zusammen mit einer Wolframcarbidmahlkugel mit 20 mm Durchmesser in einen 25-ml-Mahlbecher mit Schraubverschluss (Volumen: 25 ml, Durchmesser: 30 mm, Länge: 65 mm, Werkstoff: Edelstahl) gegeben und dann der Abriebtest mittels Schwingmühle (Typ: MM301 der Fa. Retsch GmbH, Haan, Schwingmühle mit Mahlbecher) durchgeführt; dabei schwingt der Mahlbecher in horizontaler Lage eine Minute lang mit einer Frequenz von 10 Hz in der Schwingmühle, was dazu führt, dass die Mahlkugel auf die Probe einschlägt und somit Abrieb erzeugt. Anschließend wird die Probe mittels einer Siebmaschine bei einer Schwinghöhe von 1,2 mm fünf Minuten lang über das vorgenannte Analysensieb abgesiebt, wobei das Unterkorn wieder verworfen und das Nennkorn größer 0,315 mm auf 0,1 mg genau im Wägeglas mit Deckel zurückgewogen wird. Die Berechnung der Abriebhärte erfolgt als Masseanteil in % nach folgender Formel: Abriebhärte [%] = (100 x Rückwaage [g]) / Einwaage [g].

In diesem Zusammenhang betrifft die vorliegende Erfindung auch die erfindungsgemäße Aktivkohle als solche:
Folglich ist ein weiterer Gegenstand der vorliegenden Erfindung die erfindungsgemäße Aktivkohle, d.h. partikuläre Aktivkohle, vorzugsweise kornförmige und/oder kugelförmige, bevorzugt kugelförmige Aktivkohle, mit erhöhtem Mesoporenvolumenanteil, insbesondere wie zuvor definiert,
wobei die Aktivkohle ein Gesamtporenvolumen, insbesondere ein Gesamtporenvolumen nach Gurvich, von mindestens 0,5 cm³/g, insbesondere mindestens 0,75 cm³/g, vorzugsweise mindestens 1 cm³/g, bevorzugt mindestens 1,25 cm³/g, besonders bevorzugt mindestens 2 cm³/g, aufweist,
wobei 25 % bis 85 %, vorzugsweise 25 % bis 75 %, bevorzugt 30 % bis 70 %, des Gesamtporenvolumens, insbesondere des Gesamtporenvolumens nach Gurvich, der Aktivkohle durch Poren mit Porendurchmessern im Bereich von 2 nm bis 100 nm, insbesondere im Bereich von 2 nm bis 50 nm, gebildet sind; und
wobei die Aktivkohle eine Abriebfestigkeit von mindestens 95 %, insbesondere mindestens 96 %, vorzugsweise mindestens 97 %, bevorzugt mindestens 98 %, besonders bevorzugt mindestens 99 %, ganz besonders bevorzugt mindestens 99,5 %, aufweist, insbesondere bestimmt nach modifizierter CEFIC-Norm.

Erfindungsgemäß kann es insbesondere vorgesehen sein, dass 60 % bis 99,5 %, insbesondere 60 % bis 99 %, vorzugsweise 80 % bis 98 %, bevorzugt 90 % bis 95 %, des von Poren mit Porendurchmessern im Bereich von 2 nm bis 50 nm gebildeten Gesamtporenvolumens, insbesondere des von Poren mit Porendurchmessern im Bereich von 2 nm bis 50 nm gebildeten Gesamtporenvolumens nach Gurvich, der Aktivkohle durch Poren mit Porendurchmessern im Bereich von 2 nm bis 20 nm, insbesondere im Bereich von 2 nm bis 10 nm, vorzugsweise im Bereich von 2 nm bis 5 nm, bevorzugt im Bereich von 2,5 nm bis 4,5 nm, gebildet sind.

Insbesondere kann es vorgesehen sein, dass mindestens 60 %, insbesondere mindestens 70 %, vorzugsweise mindestens 80 %, bevorzugt mindestens 90 %, besonders bevorzugt mindestens 95 %, ganz besonders bevorzugt mindestens 98 %, weiter bevorzugt mindestens 99 %, noch weiter bevorzugt mindestens 99,5 %, des von Poren mit Porendurchmessern im Bereich von 2 nm bis 100 nm, insbesondere im Bereich von 2 nm bis 50 nm, gebildeten Gesamtporenvolumens der Aktivkohle, und/oder des von Poren mit Porendurchmessern im Bereich von 2 nm bis 100 nm, insbesondere im Bereich von 2 nm bis 50 nm, gebildeten Gesamtporenvolumens nach Gurvich der Aktivkohle durch Poren mit Porendurchmessern im Bereich von 2 nm bis 20 nm, insbesondere im Bereich von 2 nm bis 10 nm, vorzugsweise im Bereich von 2 nm bis 5 nm, bevorzugt im Bereich von 2,5 nm bis 4,5 nm, gebildet sind.

Erfindungsgemäß wird somit in gezielter Weise eine Aktivkohle mit hohem Anteil an Meso- bzw. Makroporen, insbesondere Mesoporen, an dem Gesamtporenvolumen der Aktivkohle bereitgestellt, so dass die erfindungsgemäße Aktivkohle sehr spezielle Adsorptionseigenschaften aufweist. Folglich kommt die Aktivkohle nach der Erfindung für zahlreiche Anwendungen in Betracht, insbesondere wie nachfolgend definiert.

Im Allgemeinen kann die Aktivkohle nach der Erfindung ein Gesamtporenvolumen, insbesondere ein Gesamtporenvolumen nach Gurvich, von höchstens 4 cm³/g, insbesondere höchstens 3,75 cm³/g, vorzugsweise höchstens 3,5 cm³/g, bevorzugt höchstens 3,25 cm³/g, besonders bevorzugt höchstens 3 cm³/g, aufweisen.

In diesem Zusammenhang kann die Aktivkohle ein Gesamtporenvolumen, insbesondere ein Gesamtporenvolumen nach Gurvich, im Bereich von 0,5 cm³/g bis 4 cm³/g, insbesondere im Bereich von 0,75 cm³/g bis 3,75 cm³/g, vorzugsweise im Bereich von 1 cm³/g bis 3,5 cm³/g, bevorzugt im Bereich von 1,5 cm³/g bis 3,25 cm³/g, besonders bevorzugt im Bereich von 2 cm³/g bis 3 cm³/g, aufweisen.

Weiterhin zeichnet sich die erfindungsgemäße Aktivkohle auch durch eine sehr hohe BET-Oberfläche aus:
So kann es erfindungsgemäß vorgesehen sein, dass die Aktivkohle eine spezifische BET-Oberfläche im Bereich von 500 m²/g bis 4.500 m²/g, insbesondere im Bereich von 600 m²/g bis 4.000 m²/g, vorzugsweise im Bereich von 800 m²/g bis 3.500 m²/g, besonders bevorzugt im Bereich von 1.000 m²/g bis 3.000 m²/g, ganz besonders bevorzugt im Bereich von 1.200 m²/g bis 2.500 m²/g, aufweist.

Insbesondere kann die Aktivkohle eine durch Poren mit Porendurchmessern im Bereich von 2 nm bis 100 nm, gebildete Oberfläche, insbesondere BET-Oberfläche, im Bereich von 500 bis 4.000 m²/g, insbesondere im Bereich von 600 bis 3.500 m²/g, vorzugsweise im Bereich von 700 bis 3.000 m²/g, bevorzugt im Bereich von 800 bis 2.500 m²/g, aufweisen.

Weiterhin kann die Aktivkohle nach der Erfindung eine durch Poren mit Porendurchmessern im Bereich von 2 nm bis 50 nm, gebildete Oberfläche, insbesondere BET-Oberfläche, im Bereich von 300 bis 2.000 m²/g, insbesondere im Bereich von 400 bis 1.900 m²/g, vorzugsweise im Bereich von 500 bis 1.800 m²/g, bevorzugt im Bereich von 600 bis 1.700 m²/g, aufweisen.

Zudem kann die Aktivkohle nach der Erfindung einen mittleren Porendurchmesser im Bereich von 2 nm bis 60 nm, insbesondere 2 nm bis 40 nm, vorzugsweise 3 nm bis 20 nm, bevorzugt 3 nm bis 15 nm, aufweisen.

Die Bestimmung der spezifischen Oberfläche gemäß BET ist dem Fachmann grundsätzlich als solche bekannt, so dass diesbezüglich keine weitergehenden Einzelheiten ausgeführt zu werden brauchen. Sämtliche BET-Oberflächenangaben beziehen sich auf die Bestimmung gemäß ASTM D6556-04. Im Rahmen der vorliegenden Erfindung wird zur Bestimmung der BET-Oberfläche - im Allgemeinen und sofern nicht ausdrücklich abweichend angegeben - die so genannte Multi-Point-BET-Bestimmungsmethode (MP-BET) in einem Partialdruckbereich p/p₀ von 0,05 bis 0,1 angewendet.

Für weitergehende Einzelheiten zu der Bestimmung der BET-Oberfläche bzw. zu der BET-Methode kann auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur, und auf Winnacker-Küchler (3. Auflage), Band 7, Seiten 93 ff. sowie auf Z. Anal. Chem. 238, Seiten 187 bis 193 (1968), verwiesen werden.

Erfindungsgemäß kann es zudem vorgesehen sein, dass die Aktivkohle nach der Erfindung ein durch Poren mit Porendurchmessern im Bereich von 2 nm bis 100 nm, insbesondere im Bereich von 2 nm bis 50 nm, gebildetes Porenvolumen, insbesondere Porenvolumen nach Carbon Black, im Bereich von 0,1 cm³/g bis 2,75 cm³/g, insbesondere im Bereich von 0,2 cm³/g bis 2,5 cm³/g, vorzugsweise im Bereich von 0,3 cm³/g bis 2 cm³/g, aufweist.

Die Bestimmungsmethode nach Carbon Black ist dem Fachmann an sich bekannt, wobei zudem für weitergehende Einzelheiten zur Bestimmung der Porenoberfläche und des Porenvolumens nach Carbon Black beispielsweise verwiesen werden kann auf R. W. Magee, Evaluation of the External Surface Area of Carbon Black by Nitrogen Adsorption, Presented at the Meeting of the Rubber Division of the American Chem. Soc., October 1994*,* z. B. referiert in: Quantachrome Instruments, AU-TOSORB-1, AS1 WinVersion 1.50, Operating Manual, OM, 05061, Quantachrome Instruments 2004, Florida, USA, Seiten 71 ff*.* Insbesondere kann die diesbezügliche Auswertung mittels *t-plot-method* erfolgen.

Weiterhin kann die erfindungsgemäße Aktivkohle eine durch Poren mit Porendurchmessern im Bereich von 2 nm bis 100 nm, insbesondere im Bereich von 2 nm bis 50 nm, gebildete Porenoberfläche nach Carbon Black von mindestens 1.200 m²/g, insbesondere mindestens 1.400 m²/g, vorzugsweise mindestens 1.600 m²/g, aufweisen.

Zudem kann die Aktivkohle nach der Erfindung eine durch Poren mit Porendurchmessern im Bereich von 2 nm bis 100 nm, insbesondere im Bereich von 2 nm bis 50 nm, gebildete Porenoberfläche nach Carbon Black im Bereich von 1.200 m²/g bis 2.000 m²/g, insbesondere im Bereich von 1.400 m²/g bis 1.900 m²/g, vorzugsweise im Bereich von 1.600 m²/g bis 1.900 m²/g, aufweisen.

Die Aktivkohle nach der Erfindung weist insgesamt hervorragende Adsorptionseigenschaften auf, welche auch durch die nachfolgenden Spezifikationen charakterisiert sind:
So kann die Aktivkohle nach der Erfindung eine Butanadsorption von mindestens 35 %, insbesondere mindestens 40 %, vorzugsweise mindestens 45 %, aufweisen. In diesem Zusammenhang kann die Aktivkohle nach der Erfindung eine Butanadsorption im Bereich von 35 % bis 90 %, insbesondere im Bereich von 40 % bis 85 %, vorzugsweise im Bereich von 45 % bis 80 %, aufweisen. Die Butanadsorption kann insbesondere nach ASTM D5742-95/00 bestimmt werden.

Weiterhin kann die Aktivkohle nach der Erfindung eine lodzahl von mindestens 1.350 mg/g, insbesondere mindestens 1.400 mg/g, bevorzugt mindestens 1.450 mg/g, aufweisen. Zudem kann die Aktivkohle nach der Erfindung eine Iodzahl im Bereich von 1.350 mg/g bis 2.200 mg/g, insbesondere im Bereich von 1.400 mg/g bis 2.100 mg/g, vorzugsweise im Bereich von 1.450 mg/g bis 2.000 mg/g, aufweisen. Die Iodzahl kann insbesondere nach ASTM D4607-94/99 bestimmt werden. Die Iodzahl kann als ein Maß für diejenige verfügbare Oberfläche gewertet werden, welche überwiegend auch durch kleine Mesoporen bereitgestellt wird, die vorgenannten Werte der Iodzahl zeigen, dass die erfindungsgemäßen Aktivkohlen über eine hohe Mesoporosität verfügen.

Aufgrund der hohen Meso- und Makroporosität, insbesondere Mesoporosität, weist die erfindungsgemäße Aktivkohle gleichermaßen hohe Methylenblau- und Melasseadsorptionszahlen auf, welche gemeinsam als Maß für diejenige verfügbare Oberfläche gewertet werden können, die überwiegend durch Meso- und Makroporen bereitgestellt wird. So bezieht sich die Methylenblauzahl bzw. der Methylenblauadsorption, welche die Menge an pro definierter Menge der Adsorbentien adsorbiertem Methylenblau unter definierten Bedingungen bezeichnet (d. h. das Volumen bzw. die Anzahl an ml einer Methylenblaustandardlösung, die durch eine definierte Menge trockener und pulverisierter Adsorbentien entfärbt werden), auf überwiegend kleinere Mesoporen und gibt einen Hinweis auf die Adsorptionskapazität der erfindungsgemäßen Aktivkohle in Bezug auf Moleküle, welche eine vergleichbare Größe wie Methylenblau besitzen. Dagegen ist die Melassezahl als Maß für die Meso- und Makroporosität zu werten ist und bezeichnet die Menge an Adsorbentien, welche erforderlich ist, um eine Standardmelasselösung zu entfärben, so dass die Melassezahl einen Hinweis auf die Adsorptionskapazität der erfindungsgemäßen Aktivkohle in Bezug auf Moleküle gibt, welche eine vergleichbare Größe wie Melasse (im allgemeinen Zuckerrübenmelasse) besitzen. Zusammen können die Methylenblau- und Melassezahl somit als Maß für die Meso- und Makroporosität, insbesondere Mesoporosität, der erfindungsgemäßen Aktivkohle gewertet werden.

Die Aktivkohle nach der Erfindung kann in diesem Zusammenhang einen Methylenblauwert von mindestens 17 ml, insbesondere mindestens 18 ml, vorzugsweise mindestens 19 ml, aufweisen. Insbesondere kann die Aktivkohle einen Methylenblauwert im Bereich von 17 ml bis 65 ml, insbesondere im Bereich von 18 ml bis 55 ml, vorzugsweise im Bereich von 19 ml bis 50 ml, aufweisen.

Der Methylenblauwert kann gemäß der Methode gemäß CEFIC (Conseil Européen des Fédérations des l'Industrie Chimique, Avenue Louise 250, Bte 71, B - 1050 Brüssel, November 1986, European Council of Chemical Manufacturers' Federations, Testmethoden für Aktivkohlen, Ziffer 2.4 "Methylenblauwert", Seiten 27/28) bestimmt werden.

Der Methylenblauwert nach der vorgenannten CEFIC-Methode ist somit definiert als die Anzahl von ml einer Methylenblaustandardlösung, welche durch 0,1 g trockener und pulverisierter Aktivkohle entfärbt werden. Für die Durchführung dieser Methode wird ein Glasgefäß mit Schliffstopfen, ein Filter sowie eine Methylenblaustandardlösung benötigt, welche wie folgt hergestellt wird: Eine Menge von 1.200 mg reinen Farbstoffes Methylenblau (entsprechend ca. 1,5 g Methylenblau nach DAB VI [Deutsches Arzneibuch, 6. Ausgabe] oder gleichwertiges Produkt) werden in Wasser in einem 1.000-ml-Meßkolben gelöst, und man lässt die Lösung mehrere Stunden oder über Nacht stehen; zur Überprüfung werden 5,0 ml der Lösung mit 0,25 % (Volumenanteile) Essigsäure in einem Messkolben auf 1,0 l aufgefüllt, und danach wird die Extinktion bei 620 nm und 1 cm Schichtdicke gemessen, wobei sie (0,840 ± 0,010) betragen muss. Ist die Extinktion höher, wird mit der berechneten Wassermenge verdünnt; falls sie niedriger liegt, wird die Lösung verworfen und neu angesetzt. Zur Probenvorbereitung wird die Aktivkohle pulverisiert (< 0,1 mm) und dann bei 150 °C zur Gewichtskonstanz getrocknet. Exakt 0,1 g der Kugelkohle werden mit 25 ml (5 ml) der Methylenblaustandardlösung in einem Glasschliffkolben zusammengebracht (es wird in einem Vortest ermittelt, ob eine Anfangszugabe von 25 ml Methylenblaustandardlösung mit 5 ml-Zugaben oder eine Anfangszugabe von 5 ml Methylenblaustandardlösung mit 1-ml-Zugaben verwendet werden kann). Es wird geschüttelt, bis Entfärbung eintritt. Dann werden weitere 5 ml (1 ml) der Methylenblaustandardlösung zugegeben, und es wird bis zur Entfärbung geschüttelt. Die Zugabe von Methylenblaustandardlösung wird in 5-ml-Mengen (1-ml-Mengen) so lange wiederholt, wie innerhalb von 5 Minuten noch Entfärbung eintritt. Das gesamte Volumen der Testlösung, die durch die Probe entfärbt wurde, wird notiert. Man wiederholt den Test, um die erhaltenen Ergebnisse zu bestätigen. Das Volumen der Methylenblaustandardlösung in ml, die gerade noch entfärbt werden, ist der Methylenblauwert der Aktivkohle. Es ist in diesem Zusammenhang darauf hinzuweisen, dass der Farbstoff Methylenblau nicht getrocknet werden darf, da er wärmeempfindlich ist; der Wassergehalt muss vielmehr rein rechnerisch korrigiert werden.

Darüber hinaus kann die Aktivkohle eine Melassezahl von mindestens 250, insbesondere mindestens 300, vorzugsweise mindestens 350, aufweisen und/oder wobei die Aktivkohle eine Melassezahl im Bereich von 250 bis 1.500, insbesondere im Bereich von 300 bis 1.400, vorzugsweise im Bereich von 350 bis 1.300, ganz besonders bevorzugt im Bereich von 500 bis 1.250, aufweisen.

Die dimensionslose Melassezahl kann grundsätzlich entweder nach der Norit-Methode (Norit N.V., Amersfoort, Niederlande, Norit-Standardmethode NSTM 2.19 *"Molasses Number (Europe)"*) oder alternativ nach der PACS-Methode (PACS = Professional Analytical and Consulting Services Inc., Coraopolis Pennsylvania, USA) bestimmt werden. Im Rahmen der vorliegenden Erfindung werden die Werte für die Melassezahl nach der PACS-Methode ermittelt.

Bei der Bestimmung der Melassezahl nach der Norit- oder PACS-Methode wird diejenige Menge an pulverisierter Aktivkohle bestimmt, welche erforderlich ist, um eine Standardmelasselösung zu entfärben. Die Bestimmung erfolgt photometrisch, wobei die Einstellung der Melassestandardlösung gegen eine standardisierte Aktivkohle mit einer Melassezahl von 245 und/oder 350 erfolgt. Für weitergehende diesbezügliche Einzelheiten kann auf die beiden vorgenannten Vorschriften verwiesen werden.

Auch das gewichts- und volumenbezogene Volumen V_{ads} (N₂) der erfindungsgemäßen Aktivkohle bei unterschiedlichen Partialdrücken p/p₀ ist sehr groß, was gleichermaßen als Beleg für die hervorragenden Adsorptionseigenschaften der erfindungsgemäß bereitgestellten Aktivkohle zu werten ist.

In diesem Zusammenhang kann die Aktivkohle ein gewichtsbezogenes adsorbiertes N₂-Volumen V_{ads (gew)}, bestimmt bei einem Partialdruck p/p₀ von 0,25, von mindestens 250 cm³/g, insbesondere mindestens 300 cm³/g, vorzugsweise mindestens 350 cm³/g, aufweisen.

Insbesondere kann die Aktivkohle ein gewichtsbezogenes adsorbiertes N₂-Volumen V_{ads (gew)}, bestimmt bei einem Partialdruck p/p₀ von 0,25, im Bereich von 250 cm³/g bis 850 cm³/g, insbesondere im Bereich von 300 cm³/g bis 700 cm³/g, vorzugsweise im Bereich von 375 cm³/g bis 650 cm³/g, aufweisen.

Gleichermaßen kann die Aktivkohle ein volumenbezogenes adsorbiertes N₂-Volumen V_{ads (vol.)}, bestimmt bei einem Partialdruck p/p₀ von 0,25, von mindestens 50 cm³/cm³, insbesondere mindestens 100 cm³/cm³, aufweisen.

In diesem Zusammenhang kann die Aktivkohle nach der Erfindung ein volumenbezogenes adsorbiertes N₂-Volumen V_{ads (vol.)}, bestimmt bei einem Partialdruck p/p₀ von 0,25, im Bereich von 50 cm³/cm³ bis 300 cm³/cm³, insbesondere im Bereich von 80 cm³/cm³ bis 275 cm³/cm³, vorzugsweise im Bereich von 90 cm³/cm³ bis 250 cm³/cm³, aufweisen.

Zudem kann die Aktivkohle nach der Erfindung ein gewichtsbezogenes adsorbiertes N₂-Volumen V_{ads (gew.)}, bestimmt bei einem Partialdruck p/p₀ von 0,995, von mindestens 300 cm³/g, insbesondere mindestens 450 cm³/g, aufweisen.

Weiterhin kann die Aktivkohle ein gewichtsbezogenes adsorbiertes N₂-Volumen V_{ads (gew.)}, bestimmt bei einem Partialdruck p/p₀ von 0,995, im Bereich von 300 cm³/g bis 2.300 cm³/g, insbesondere im Bereich von 450 cm³/g bis 2.200 cm³/g, vorzugsweise im Bereich von 750 cm³/g bis 2.100 cm³/g, aufweisen.

Zudem kann die Aktivkohle ein volumenbezogenes adsorbiertes N₂-Volumen V_{ads (vol.)}, bestimmt bei einem Partialdruck p/p₀ von 0,995, von mindestens 200 cm³/cm³, insbesondere mindestens 250 cm³/cm³, aufweisen.

Insbesondere kann die Aktivkohle ein volumenbezogenes adsorbiertes N₂-Volumen V_{ads (vol.)}, bestimmt bei einem Partialdruck p/p₀ von 0,995, im Bereich von 200 cm³/cm³bis 500 cm³/cm³, insbesondere im Bereich von 250 cm³/cm³ bis 400 cm³/cm³, vorzugsweise im Bereich von 275 cm³/cm³ bis 380 cm³/cm³, aufweisen.

Wie zuvor angeführt, weist die Aktivkohle nach der Erfindung auch hervorragende mechanische Eigenschaften, insbesondere eine hohe mechanische Stabilität, auf.

In diesem Zusammenhang kann die Aktivkohle eine Druck- bzw. Berstfestigkeit pro Aktivkohlekorn, insbesondere pro Aktivkohlekügelchen, von mindestens 5 Newton, insbesondere mindestens 10 Newton, vorzugsweise mindestens 15 Newton, aufweisen.

In diesem Zusammenhang kann die Aktivkohle eine Druck- bzw. Berstfestigkeit pro Aktivkohlekorn, insbesondere pro Aktivkohlekügelchen, im Bereich von 5 bis 50 Newton, insbesondere im Bereich von 10 bis 45 Newton, vorzugsweise im Bereich von 15 bis 40 Newton, aufweisen.

Wie zuvor angeführt, führt die Volumenexpansion des Ausgangsmaterials, wie sie im Rahmen der sehr speziellen Sulfonierung nach Art der Erfindung vorgesehen ist, auch zu entsprechend größeren bzw. vergrößerten Teilchendurchmesser der Aktivkohle als solche, insbesondere im Vergleich zu Aktivkohle auf Basis vergleichbarer Ausgangsmaterialien, welche keiner Volumenexpansion unterzogen sind.

Insbesondere kann es im Rahmen der vorliegenden Erfindung vorgesehen sein, dass die Aktivkohle eine mittlere Partikelgröße (D50), insbesondere einen mittleren Teilchendurchmesser (D50), im Bereich von 0,1 mm bis 1,3 mm, insbesondere 0,15 mm bis 1,2 mm, vorzugsweise 0,2 mm bis 1 mm, bevorzugt 0,25 mm bis 0,9 mm, besonders bevorzugt 0,3 mm bis 0,8 mm, aufweist.

Die Bestimmung der Teilchengrößen kann dabei auf Basis der ASTM D2862-97/04 bestimmt werden. Zudem kann auf die obigen Ausführungen zu dem Ausgangsmaterial verwiesen werden, welche entsprechend gelten.

Insbesondere verhält es sich im Rahmen der vorliegenden Erfindung derart, dass die erfindungsgemäße Aktivkohle im Vergleich zu einer Aktivkohle, welche nicht unter Anwendung des erfindungsgemäßen Verfahrens hergestellt wird bzw. bei welcher im Rahmen der Sulfonierung keine Volumenexpansion des Ausgangsmaterials durchgeführt wird und bei welcher für das eingesetzte Ausgangsmaterial vergleichbare Partikelgrößen eingesetzt werden, eine um mindestens 1 %, insbesondere mindestens 2 %, vorzugsweise mindestens 5 %, bevorzugt mindestens 10 %, größere mittlere Partikelgröße D50, insbesondere einen entsprechend größeren mittleren Teilchendurchmesser D50, bezogen auf die Vergleichsaktivkohle, aufweist.

Insgesamt werden im Rahmen der vorliegenden Erfindung somit Aktivkohlen bereitgestellt, welche die diametral entgegengesetzten Eigenschaften einer definierten Porosität mit hoher Meso- bzw. Makroporosität, insbesondere Mesoporosität, bei gleichzeitig hohem Gesamtporenvolumen einerseits und einer hohen mechanischen Stabilität, insbesondere in Form einer hohen Abriebhärte sowie einer hohen Berstfestigkeit, andererseits vereinen, so dass im Rahmen der vorliegenden Erfindung insgesamt Hochleistungsadsorbentien auf Basis von Aktivkohle mit speziellen adsorptiven Eigenschaften bereitgestellt werden.

Beschrieben ist zudem eine Produktionsanlage P zur Herstellung der Aktivkohle mit erhöhtem Mesoporenvolumenanteil bzw. zur Durchführung des zuvor beschriebenen Verfahrens nach der Erfindung.

In diesem Zusammenhang weist die Produktionsanlage (P) die folgenden Vorrichtungen auf:
(A) mindestens eine Sulfonierungs- und/oder Reaktionsvorrichtung 1 zur Sulfonierung eines polymeren organischen Ausgangsmaterials, insbesondere eines partikulären polymeren organischen Ausgangsmaterials, wobei die Sulfonierungsvorrichtung 1 mindestens eine Einrichtung zum Inkontaktbringen des Ausgangsmaterials mit mindestens einem Sulfonierungsmittel und/oder zum Einwirkenlassen und Reagieren des Sulfonierungsmittels mit dem Ausgangsmaterial aufweist, wobei die Sulfonierungsanlage 1, insbesondere die mindestens eine Einrichtung, derart ausgebildet ist, dass die Zeitdauern und/oder die Temperaturen des Einwirkenlassens und Reagierens des Sulfonierungsmittels mit dem Ausgangsmaterial einstellbar sind derart, dass die Sulfonierung unter gleichzeitiger Volumenexpansion (Volumenzunahme) des Ausgangsmaterials erfolgt;
(B) mindestens eine Carbonisierungsvorrichtung 2 zur Carbonisierung des sulfonierten Ausgangsmaterials (Sulfonat); sowie
(C) mindestens eine Aktivierungsvorrichtung 3 zur Aktivierung des carbonisierten Ausgangsmaterials (Carbonisat) insbesondere zum Erhalt der Aktivkohle (Aktivat),
wobei die Sulfonierungsvorrichtung 1, die Carbonisierungsvorrichtung 2 und die Aktivierungsvorrichtung 3 in der zuvor spezifizierten Reihenfolge stromabwärts und/oder in Prozessrichtung hintereinander geschaltet und/oder angeordnet sind.

Es wird somit gleichermaßen eine sehr spezielle Produktionsanlage bereitgestellt, welche durch ihre spezielle Konzeption die Durchführung des Verfahrens nach der Erfindung ermöglicht, und zwar insbesondere auch was die spezielle Sulfonierung des Ausgangsmaterials mit der erfindungsgemäß vorgesehenen Volumenexpansion des Ausgangsmaterials anbelangt.

In diesem Zusammenhang kann die Sulfonierungs- und/oder Reaktionsvorrichtung 1 zum kontinuierlichen oder diskontinuierlichen Betrieb, insbesondere zum diskontinuierlichen Betrieb, ausgebildet sein. Zudem kann die Sulfonierungs- bzw. Reaktionsvorrichtung 1 ein Drehrohr, vorzugsweise einen Drehrohrofen, und/oder einen Rührreaktor umfassen oder hieraus bestehen.

Insbesondere kann die Sulfonierungs- bzw. Reaktionsvorrichtung 1 bei Temperaturen im Bereich von 100 °C bis 330 °C, insbesondere im Bereich von 200 °C bis 330 °C, vorzugsweise im Bereich von 250 °C bis 330 °C, betreibbar sein.

Insbesondere kann die Sulfonierungs- bzw. Reaktionsvorrichtung 1 zur Ausbildung bzw. Einstellung eines kontinuierlichen, insbesondere linearen Temperaturgradienten bzw. Temperaturprofils, betreibbar bzw. ausgebildet sein.

Zudem kann die Sulfonierungs- bzw. Reaktionsvorrichtung 1 zur Ausbildung bzw. Einstellung eines stufenweisen, insbesondere unter Anwendung bzw. Ausbildung mindestens eines Temperaturplateaus, Temperaturgradienten bzw. Temperaturprofils betreibbar bzw. ausgebildet sein.

Zudem kann die Produktionsanlage P nach der Erfindung mindestens eine Trocknungsvorrichtung zur Trocknung des sulfonierten Ausgangsmaterials aufweisen. In diesem Zusammenhang kann die Trocknungsvorrichtung stromabwärts zur Sulfonierungs- bzw. Reaktionsvorrichtung 1 bzw. in Prozessrichtung nachfolgend zur Sulfonierungs- und/oder Reaktionsvorrichtung 1 geschaltet bzw. angeordnet sein. Zudem kann die Trocknungsvorrichtung auch stromaufwärts zur Carbonisierungsvorrichtung 2 bzw. in Prozessrichtung vor der Carbonisierungsvorrichtung 2 geschaltet bzw. angeordnet sein. Die Bereitstellung einer Trocknungsvorrichtung ist dabei lediglich optional. Insbesondere kann die Trocknung des sulfonierten Ausgangsmaterials bereits in der Sulfonierungs- bzw. Reaktionsvorrichtung, wie zuvor beschrieben, erfolgen.

Zudem kann die Produktionsanlage P mindestens eine Aufbewahrungs- bzw. Aufnahmevorrichtung 4 aufweisen, insbesondere zum Stehenlassen bzw. Aufbewahren des sulfonierten Ausgangsmaterials. In diesem Zusammenhang kann die Aufbewahrungs- bzw. Aufnahmevorrichtung 4 stromabwärts zur Sulfonierungs- bzw. Reaktionsvorrichtung 1 und/oder der gegebenenfalls vorhandenen Trocknungsvorrichtung 4 bzw. in Prozessrichtung nachfolgend zur Sulfonierungs- bzw. Reaktionsvorrichtung 1 und der gegebenenfalls vorhandenen Trocknungsvorrichtung geschaltet bzw. angeordnet sein. Insbesondere kann die Aufbewahrungs- bzw. Aufnahmevorrichtung 4 stromaufwärts zur Carbonisierungsvorrichtung 2 bzw. in Prozessrichtung vor der Carbonisierungsvorrichtung 2 geschaltet bzw. angeordnet sein.

In diesem Zusammenhang kann die Aufbewahrungs- bzw. Aufnahmevorrichtung 4 zum Aufbewahren des sulfonierten Ausgangsmaterials bei Temperaturen im Bereich von 15 °C bis 30 °C bzw. in Umgebungsatmosphäre (Umgebungsluft), insbesondere Luft, oder unter inerter Atmosphäre, insbesondere unter Stickstoffatmosphäre, betreibbar bzw. ausgebildet sein. Hierbei kann es sich insbesondere um Behältnisse, beispielsweise in topfartiger Form oder dergleichen, aus einem säurebeständigem bzw. inertem Material, wie Kunststoff oder geeigneten Metalllegierungen, handeln.

Was die Carbonisierungsvorrichtung 2 als solche anbelangt, so kann diese mindestens ein Drehrohr, vorzugsweise einen Drehrohrofen, und/oder mindestens einen Bandofen, umfassen oder hieraus bestehen.

Insbesondere kann die Carbonisierungsvorrichtung 2 ein geschlossenes System bilden. Zudem sollte die Carbonisierungsvorrichtung 2 unter inerten Bedingungen betreibbar sein. In diesem Zusammenhang sollte die Carbonisierungsvorrichtung 2 diskontinuierlich, kontinuierlich oder quasi-kontinuierlich, insbesondere kontinuierlich oder quasi-kontinuierlich, betreibbar sein. Gleichermaßen sollte die Temperatur der Carbonisierungsvorrichtung 2 kontinuierlich bzw. stufenweise regelbar sein. Gleichermaßen ist es von Vorteil, wenn die Carbonisierungsvorrichtung 2 zur Aufnahme einer Carbonisierungsatmosphäre, insbesondere Inertatmosphäre, ausgebildet ist.

Die Carbonisierungsvorrichtung 2 sollte zudem bei Temperaturen im Bereich von 100 °C bis 1.200 °C, insbesondere im Bereich von 150 °C bis 1.100 °C, vorzugsweise im Bereich von 200 °C bis 1.000 °C, betreibbar sein. Hierdurch wird eine effiziente Carbonisierung sulfonierten Ausgangsmaterials ermöglicht.

Gleichermaßen kann es im Rahmen der vorliegenden Erfindung vorgesehen sein, dass die Carbonisierungsvorrichtung 2 zur Ausbildung bzw. Einstellung eines Temperaturgradienten bzw. eines Temperaturprofils betreibbar bzw. ausgebildet ist. In diesem Zusammenhang kann die Ausbildung des Temperaturgradienten bzw. des Temperaturprofils zeitabhängig bzw. räumlich in der Carbonisierungsvorrichtung 2, insbesondere in Form von Temperaturzonen, erfolgen.

Weiterhin kann die Temperatur der Carbonisierungsvorrichtung 2 im Betrieb regelbar sein derart, dass mehrere, insbesondere zwei Temperaturzonen 2', 2" mit jeweils voneinander verschiedenen Temperaturen, vorzugsweise mit stromaufwärts jeweils ansteigender Temperatur der einzelnen Temperaturstufen, vorliegen oder aber dass ein Temperaturgradient, vorzugsweise mit stromaufwärts ansteigendem Temperaturprofil, vorliegt.

Was weiterhin die für die Produktionsanlage P nach der Erfindung vorgesehene Aktivierungsvorrichtung 3 anbelangt, so kann diese gleichermaßen mindestens ein Drehrohr, vorzugsweise einen Drehrohrofen, aufweisen bzw. hieraus bestehen.

Was die Aktivierungsvorrichtung 3 als solche weiterhin anbelangt, so kann diese zur Aufnahme mindestens eines Aktivierungsgases, insbesondere Sauerstoff, insbesondere in Form von Luft, Wasserdampf bzw. Kohlendioxid oder Gemischen dieser Aktivierungsgase, ausgebildet sein.

Insbesondere kann die Aktivierungsvorrichtung 3 bei Temperaturen im Bereich von 700 bis 1.200 °C, insbesondere im Bereich von 800 °C bis 1.100 °C, vorzugsweise im Bereich von 850 °C bis 1.000 °C, besonders bevorzugt im Bereich von 900 bis 975 °C, betreibbar bzw. ausgebildet sein.

Was die Aktivierungsvorrichtung 3 der beschriebenen Produktionsanlage P weiterhin anbelangt, so kann diese zur Ausbildung bzw. Einstellung eines Temperaturgradienten und/oder eines Temperaturprofils betreibbar und/oder ausgebildet sein. Die Ausbildung des Temperaturgradienten bzw. des Temperaturprofils kann in Betrieb dabei zeitabhängig bzw. räumlich in der Aktivierungsvorrichtung 3, insbesondere in Form von Temperaturzonen, insbesondere zwei Temperaturzonen 3', 3", erfolgen.

Im Rahmen der vorliegenden Erfindung wird somit eine Produktionsanlage P bereitgestellt, welche durch Anwendung des Verfahrens nach der Erfindung den Erhalt der erfindungsgemäßen Aktivkohle mit den diesbezüglichen Eigenschaften ermöglicht.

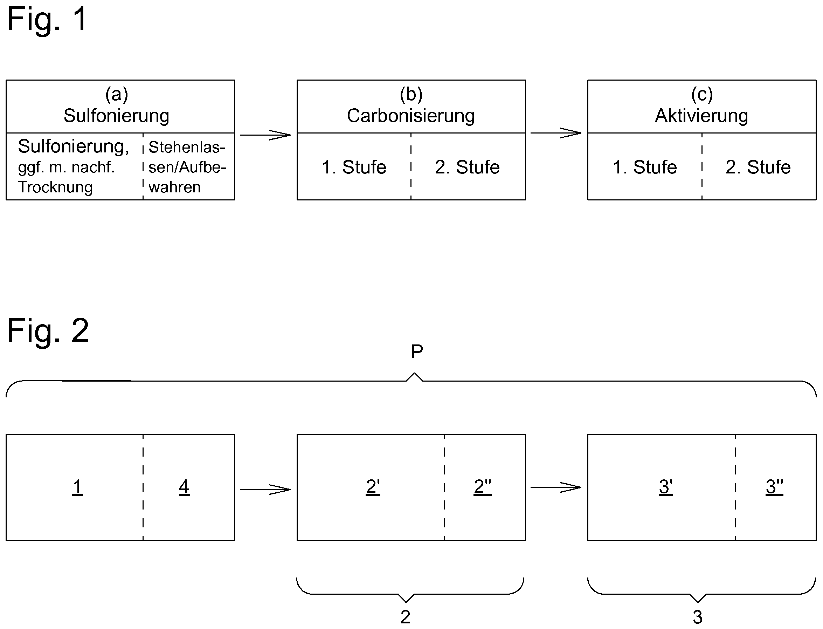

Was die beschriebenen Produktionsanlage P weiterhin anbelangt, so kann auch auf die nachfolgende Beschreibung der Figuren verwiesen werden, wobei die zuvor angeführten Bezugszeichen sich auf die entsprechende Figurendarstellung gemäß Fig. 2 beziehen.

Die vorliegende Erfindung betrifft - gemäß einem **weiteren** Aspekt der vorliegenden Erfindung - auch die Verwendung der Aktivkohle nach der Erfindung für die Adsorption von Giftstoffen, Schadstoffen und Gerüchen, insbesondere aus Gas- oder Luftströmen, oder zur Reinigung oder Aufbereitung von Gasen, insbesondere Luft oder Flüssigkeiten, insbesondere Wasser, bzw.
zur Verwendung in Adsorptionsfiltermaterialien, insbesondere für die Herstellung von Schutzbekleidung, bzw.
als Sorptionsspeicher für Gase oder Flüssigkeiten, bzw.
im Bereich der Lebensmittelindustrie, insbesondere zur Aufbereitung und/oder Entfärbung von Lebensmitteln, bzw.
im Bereich der Medizin oder Pharmazie, insbesondere als Arzneimittel oder Arzneimittelbestandteil, bzw.
zur Herstellung von Schutzausrüstung und/oder Schutzgegenständen aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise allen vorgenannten Schutzmaterialien für den ABC-Einsatz und/oder mit Schutzfunktion gegenüber radioaktiven Schad- und/oder Giftstoffen und/oder gegenüber biologischen Schad- und/oder Giftstoffen und/oder gegenüber chemischen Schad- und/oder Giftstoffen, bzw.
zur Herstellung von Filtern und Filtermaterialien aller Art, insbesondere zur Entfernung von Schad-, Geruchs- und Giftstoffen aller Art, vorzugsweise zur Entfernung von radioaktiven Schad- und/oder Giftstoffen und/oder von biologischen Schad- und/oder Giftstoffen und/oder von chemischen Schad- und/oder Giftstoffen, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

Aufgrund der speziellen Eigenschaften der erfindungsgemäß bereitgestellten Aktivkohle eignet sich diese somit für eine Vielzahl verschiedener technischer Anwendungen.

Weiterhin betrifft die vorliegende Erfindung - gemäß einem **weiteren** Aspekt der vorliegenden Erfindung - die Schutzausrüstungen bzw. Schutzgegenstände aller Art nach der Erfindung, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, vorzugsweise alle vorgenannten Schutzausrüstungen und/oder Schutzgegenstände für den ABC-Einsatz und/oder mit Schutzfunktion gegenüber radioaktiven Schad- und/oder Giftstoffen und/oder gegenüber biologischen Schad- und/oder Giftstoffen und/oder gegenüber chemischen Schad- und/oder Giftstoffen, hergestellt unter Verwendung einer Aktivkohle, wie zuvor definiert, und/oder aufweisend eine Aktivkohle, wie zuvor definiert.

Schließlich betrifft die vorliegende Erfindung - gemäß einem **weiteren** Aspekt der vorliegenden Erfindung - auch Filter und Filtermaterialien aller Art, insbesondere zur Entfernung von Schad-, Geruchs- und Giftstoffen aller Art, vorzugsweise zur Entfernung von radioaktiven Schad- und/oder Giftstoffen und/oder von biologischen Schad- und/oder Giftstoffen und/oder von chemischen Schad- und/oder Giftstoffen, insbesondere aus Luft- und/oder Gasströmen, wie Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung einer Aktivkohle, wie zuvor definiert, und/oder aufweisend eine Aktivkohle, wie zuvor definiert.

Die vorliegende Erfindung wird auch anhand von bevorzugte Ausführungsformen bzw. Ausführungsbeispiele darstellenden Zeichnungen bzw. Figurendarstellungen beschrieben, wobei die diesbezüglichen Ausführungen für sämtliche erfindungsgemäßen Aspekte gelten und wobei die entsprechenden bevorzugten Ausführungsformen keinesfalls beschränkend sind.

In den Figurendarstellungen zeigt
- Fig. 1: eine schematische Darstellung eines erfindungsgemäßen Verfahrensablaufs, wonach in Schritt (a) eine Sulfonierung eines Ausgangsmaterials gegebenenfalls mit einhergehender Trocknung des Ausgangsmaterials sowie ein sich anschließendes Stehenlassen bzw. Aufbewahren des sulfonierten Ausgangsmaterials vorgesehen ist, wobei auf Basis der erfindungsgemäßen Verfahrensdurchführung eine definierte Volumenexpansion des Ausgangsmaterials durchgeführt wird; nachfolgend wird gemäß Schritt (b) des erfindungsgemäßen Verfahrens eine Carbonisierung des zuvor erhaltenen sulfonierten Ausgangsmaterials durchgeführt, wobei diesbezüglich eine zweistufige Carbonisierung vorgesehen ist; es folgt Schritt (c) mit der Aktivierung des zuvor auf Basis des sulfonierten und volumenexpandierten Ausgangsmaterials erhaltenen Carbonisats, wobei im Rahmen der Aktivierung auf einen zweistufigen Prozess abgestellt wird;
- Fig. 2: eine schematische Darstellung einer für die Durchführung des erfindungsgemäßen Verfahrens einsetzbare Produktionsanlage P mit einer Sulfonierungsvorrichtung 1 zur Durchführung der Sulfonierung des erfindungsgemäß eingesetzten Ausgangsmaterials mit der dies- bezüglich vorgesehenen Volumenexpansion bzw. Volumenzunahme infolge eines definierten Einwirkenlassens bzw. Reagierens des Sulfonierungsmittels mit dem Ausgangsmaterial; die Produktionsanlage P weist zudem eine Aufbewahrungs- bzw. Aufnahmevorrichtung 4 zur Lagerung bzw. zum Stehenlassen bzw. Aufbewahren des sulfonierten Ausgangsmaterials sowie weiterhin eine Carbonisierungsvorrichtung 2 mit Einrichtungen zur Ausbildung von zwei Temperaturzonen 2', 2" auf; zudem weist die Produktionsanlage P eine der Carbonisierungsvorrichtung 2 nachgeschaltete Aktivierungsvorrichtung 3 auf, welche Einrichtungen zur Ausbildung von zwei Temperaturzonen 3' und 3" aufweist;

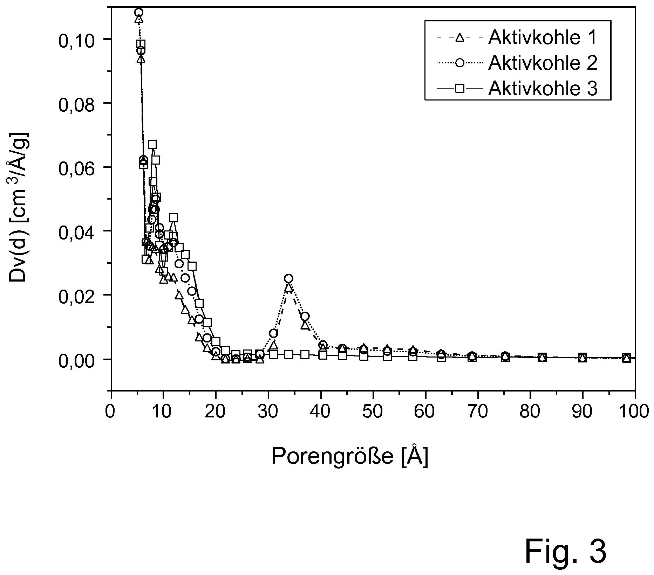

- Fig. 3: eine graphische Darstellung der Porengrößenverteilung von erfindungsgemäßen Aktivkohlen (Aktivkohle 1 und 2) sowie von einem entsprechenden Vergleichsmaterial (Aktivkohle 3); die erfindungsgemäßen Aktivkohlen weisen dabei im Gegensatz zu dem Vergleichsmaterial eine hohe Mesoporosität mit einem hohen Anteil an Poren in einem bestimmten Mesoporengrößenbereich auf.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

Im Rahmen der vorliegenden Erfindung werden seitens der Anmelderin verschiedene Aktivkohlen nach der Erfindung unter Anwendung des erfindungsgemäßen Verfahrens sowie Vergleichsaktivkohlen hergestellt und hinsichtlich ihrer Eigenschaften analysiert:
1. Zur Herstellung einer ersten erfindungsgemäßen Aktivkohle A wird als Ausgangsmaterial ein kugelförmiges polymeres organisches Ausgangsmaterial mit definiertem mittleren Teilchendurchmesser eingesetzt, wobei das Ausgangsmaterial als solches keine Sulfonsäuregruppen aufweist. Das eingesetzte Ausgangsmaterial weist eine hohe Mikroporosität auf. In diesem Zusammenhang wird ein Ausgangsmaterial eingesetzt, welches einen Mikroporenanteil, bezogen auf das Gesamtporenvolumen, von mehr als 99% aufweist. In diesem Zusammenhang handelt es sich bei dem Ausgangsmaterial um ein Material auf Basis von divinylbenzolvernetztem Polystyrol mit definiertem Gehalt an Divinylbenzol.
   Das Ausgangsmaterial wird zunächst einer separaten bzw. getrennt von der Carbonisierung bzw. Aktivierung durchgeführten Sulfonierung unterzogen. Die Sulfonierung wird dabei in einer entsprechenden Sulfonierungsvorrichtung bei konstanter Temperatur von 250 °C durchgeführt. Als Sulfonierungsmittel wird eine Mischung aus Oleum einerseits und konzentrierter Schwefelsäure in einem Gewichtsverhältnis (Oleum : konzentrierte Schwefelsäure) von etwa 2 : 1 eingesetzt. Das Gewichtsverhältnis des Sulfonierungsmittels zu dem Ausgangsmaterial (Sulfonierungsmittel : Ausgangsmaterial) beträgt zudem etwa 2 : 1. Die Sulfonierung wird für einen Zeitraum von etwa 5 h durchgeführt.
   Das auf diese Weise sulfonierte Ausgangsmaterial (Sulfonat) wird aus der Sulfonierungsvorrichtung entnommen und in abgekühlter Form, jedoch ohne weiterführende (Zwischen-)Lagerung bzw. Aufbewahrung, in eine Carbonisierungsvorrichtung in Form eines Drehrohrofens überführt. Die Carbonisierung erfolgt dabei unter definierter Carbonisierungsatmosphäre und einem definierten Temperaturprofil von 350 °C bis 920 °C für eine Gesamtzeitdauer von etwa 5,5 h.
   Nachfolgend wird eine Aktivierung des zuvor erhaltenen Carbonisats in einer Aktivierungsvorrichtung in Form eines Drehrohrofens durchgeführt. Hierzu wird bei Temperaturen von etwa 920 °C für eine Zeitdauer von etwa 5 h unter Stickstoffatmosphäre, welcher zudem Wasser bzw. Wasserdampf zugegeben wird, verfahren.
   Auf diese Weise wird die erfindungsgemäße Aktivkohle (Aktivat) gemäß Material A erhalten.
2. Weiterhin wird eine erfindungsgemäße Aktivkohle B auf Basis der obigen Ausführungen unter Abschnitt 1.) mit der Maßgabe hergestellt, dass die Sulfonierung gemäß Verfahrensschritt (a) unter Anwendung eines linearen Temperaturgradienten bzw. Temperaturprofils (d. h. konstanter Temperaturanstieg während der Sulfonierungsphase) durchgeführt wird. Hierzu wird die Temperatur in der Sulfonierungsvorrichtung über den Sulfonierungszeitraum kontinuierlich von 120 °C auf 250 °C erhöht. Nach erfolgter Carbonisierung und Aktivierung wird auf diese Weise die erfindungsgemäße Aktivkohle gemäß Material B erhalten.
3. Weiterhin wird eine erfindungsgemäße Aktivkohle C auf Basis der Ausführungen in Abschnitt 2.) hergestellt, wobei jedoch zudem derart verfahren wird, dass zwischen der Sulfonierung in der Sulfonierungsvorrichtung einerseits und der nachfolgenden Carbonisierung andererseits ein Schritt des Stehenlassens bzw. Aufbewahrens des sulfonierten Ausgangsmaterials bzw. des Sulfonats durchgeführt wird. Zu diesem Zweck wird das sulfonierte Ausgangsmaterial bei einer Temperatur von etwa 20 °C für eine Zeitdauer von 4 Wochen aufbewahrt (Umgebungsatmosphäre). Nach erfolgter Carbonisierung bzw. Aktivierung wird somit die erfindungsgemäße Aktivkohle gemäß Material C erhalten.
4. Weiterhin wird eine erfindungsgemäße Aktivkohle D hergestellt, wobei diesbezüglich gemäß den Ausführungen in Abschnitt 1.) mit der Maßgabe verfahren wird, dass bei der Sulfonierung eine Aufheizung auf ein am Ende des Sulfonierungsschritts vorliegendes Temperaturplateau (Haltetemperatur) von 250 °C mit einer Zeitdauer von 3 h, einhergehend mit einer weiterführenden Trocknung des sulfonierten Ausgangsmaterials, durchgeführt wird (Umgebungsatmosphäre). Nach entsprechender Carbonisierung bzw. Aktivierung wird auf dieser Basis die erfindungsgemäße Aktivkohle gemäß Material D erhalten.
5. Weiterhin wird eine erfindungsgemäße Aktivkohle E hergestellt, wobei hierzu gemäß den Ausführungen in Abschnitt 4.) verfahren wird, wobei demgegenüber jedoch, wie in Abschnitt 3.) beschrieben, zwischen der Sulfonierung in der Sulfonierungsvorrichtung einerseits und der nachfolgenden Carbonisierung andererseits ein Schritt des Stehenlassens bzw. Aufbewahrens des sulfonierten Ausgangsmaterials bzw. des Sulfonats durchgeführt wird. Auf diese Weise wird nach durchgeführter Carbonisierung und Aktivierung das erfindungsgemäße Material E erhalten.
6. Weiterhin wird eine Aktivkohle in Form von Vergleichsmaterial F hergestellt. Hierzu wird der Schritt der Sulfonierung einerseits und der Schritt der Carbonisierung andererseits unmittelbar nacheinander durchgeführt, so dass keine Separierung der in Rede stehenden Verfahrensschritte vorliegt. Die Kontaktzeit mit dem Sulfonierungsmittel beträgt dabei in dem Sulfonierungsschritt etwa 3 Minuten. Auf diese Weise wird nach entsprechender Carbonisierung und abschließender Aktivierung das Vergleichsmaterial F erhalten.
7. Zur Herstellung einer weiteren Aktivkohle in Form des Vergleichsmaterials G wird als Ausgangsmaterial ein bereits sulfoniertes Ausgangsmaterial, d. h. ein solches Material, welches bereits über entsprechende Sulfonsäuregruppen verfügt, eingesetzt, so dass keine weiterführende Sulfonierung durchgeführt wird. Das in Rede stehende Ausgangsmaterial wird einer Carbonisierung und einer nachfolgenden Aktivierung, wie in Abschnitt 1.) angeführt, zum Erhalt von Vergleichsmaterial G unterzogen.
8. Weiterhin wird zum Erhalt von Vergleichsmaterial H ein Ausgangsmaterial gemäß den Ausführungen unter Abschnitt 1.) mit der Maßgabe eingesetzt, dass es sich hierbei um ein Ausgangsmaterial mit hoher Meso- /Makroporosität und somit nicht um ein mikroporöses Ausgangsmaterial handelt. Diesbezüglich weist das eingesetzte Ausgangsmaterial einen Gehalt an Meso- und Makroporen, bezogen auf das Gesamtporenvolumen, von mindestens 85% auf. Darüber hinaus wird im Rahmen der Sulfonierung sowie der nachfolgenden Carbonisierung und Aktivierung wie gemäß Abschnitt 6.) verfahren.

Die zuvor angeführten Aktivkohlen werden hinsichtlich ihrer speziellen Materialeigenschaften untersucht bzw. analysiert. Die diesbezüglichen Ergebnisse sind der nachfolgenden Tabelle zu entnehmen.

| | A (Erf.) | B (Erf.) | C (Erf.) | D (Erf.) | E (Erf.) | F (Vgl.) | G (Vgl.) | H (Vgl.) |
|---|---|---|---|---|---|---|---|---|
| Iodzahl (ASTM D4607-94/99) [mg/g] | 1.789 | 1.829 | 1.912 | 1.873 | 1.998 | 1.240 | 1.108 | 1.010 |
| Butanadsorption (ASTM D5742-95/00) [%] | 60 | 65 | 74 | 68 | 78 | 48 | 45 | 44 |
| Methylenblauzahl (CEFIC) [ml] | 40 | 42 | 45 | 45 | 48 | 28 | 25 | 26 |
| Gesamtporenvolumen nach Gurvich (p/p₀ = 0,995) [cm³/g] | 3,192 | 3,228 | 3,923 | 3,449 | 4,125 | 2,850 | 2,416 | 2,641 |
| Anteil Mesoporen (Porendurchmesser 2 nm bis 50 nm), bezogen auf Gesamtporenvolumen [%] | 55,2 | 58,7 | 62,3 | 60,9 | 68,5 | 31,4 | 15,1 | 14,6 |
| BET-Oberfläche (Multipoint, MP) (p/p0 = 0,05 - 0,1) (ASTM D6556-04) [m²/g] | 1.972 | 2.091 | 2.380 | 2.300 | 2.450 | 1.623 | 1.507 | 1.570 |
| Volumenexpansion Sulfonat (bezogen auf das Ausgangsmaterial) [%] | 10 | 12 | 14 | 13 | 15 | < 1 | < 1 | < 1 |
| Abriebhärte (modifizierte CEFIC-Methode) [%] | 99,9 | 99,9 | 99,9 | 99,8 | 100 | 97,1 | 95,9 | 98,1 |

| | | | | | | | | |
|---|---|---|---|---|---|---|---|---|
| Erf. = erfindungsgemäß; Vgl. = Vergleich (nichterfindungsgemäß) | | | | | | | | |

Die Tabelle verdeutlicht, dass die gemäß dem erfindungsgemäßen Verfahren hergestellten Aktivkohlen nach der Erfindung über einen hohen Meso- bzw. Makroporenvolumenanteil, insbesondere über einen hohen Mesoporenvolumenanteil, bezogen auf das Gesamtporenvolumen, verfügen. Darüber hinaus weisen die erfindungsgemäßen Aktivkohlen hervorragende Adsorptionseigenschaften auf, wobei zudem die mechanische Stabilität signifikant verbessert ist. Die diesbezüglichen Eigenschaften können durch die im Rahmen des erfindungsgemäßen Verfahrens optional vorgesehene Sulfonierung unter Anwendung von Temperaturplateaus (Haltetemperaturen) einerseits sowie einer definierten Lagerzeit bzw. Aufbewahrung (Stehenlassen) zwischen in der Sulfonierungsvorrichtung durchgeführter Sulfonierung und nachfolgender Carbonisierung nochmals deutlich verbessert werden.

Insgesamt belegen die seitens der Anmelderin durchgeführten Untersuchungen die verbesserten Eigenschaften der erfindungsgemäßen Aktivkohlen bzw. der auf Basis des erfindungsgemäßen Verfahrens erhältlichen Aktivkohlen im Vergleich zu den angeführten Vergleichsaktivkohlen.

## Patentansprüche

1. Verfahren zur Herstellung von partikulärer Aktivkohle mit erhöhtem Mesoporenvolumenanteil, wobei 25 % bis 85 % des Gesamtporenvolumens nach Gurvich der Aktivkohle durch Poren mit Porendurchmessern im Bereich von 2 nm bis 50 nm gebildet sind,
wobei das Verfahren die folgenden Schritte umfasst:
(a) Sulfonierung eines partikulären polymeren organischen Ausgangsmaterials durch Inkontaktbringen des Ausgangsmaterials mit mindestens einem Sulfonierungsmittel und nachfolgendes Einwirkenlassen und Reagieren des Sulfonierungsmittels mit dem Ausgangsmaterial derart, nämlich für Zeitdauern im Bereich von 0,5 h bis 24 h und unter Temperaturen im Bereich von 50 °C bis 330 °C, dass die Sulfonierung unter gleichzeitiger Volumenexpansion (Volumenzunahme) des Ausgangsmaterials erfolgt, wobei die Volumenexpansion des Ausgangsmaterials derart erfolgt, dass die Partikelgröße des sulfonierten Ausgangsmaterials um mindestens 2 % vergrößert wird, bezogen auf die Partikelgröße des nichtsulfonierten Ausgangsmaterials, wobei als Sulfonierungsmittel Schwefeltrioxid (SO₃) eingesetzt wird und wobei das Sulfonierungsmittel in einer Menge im Bereich von 10 Gew.-% bis 95 Gew.-%, bezogen auf das Gesamtgewicht der resultierenden Zusammensetzung (Gemisch) aus Sulfonierungsmittel und Ausgangsmaterial, eingesetzt wird; anschließend
(b) Carbonisierung des in Schritt (a) erhaltenen sulfonierten Ausgangsmaterials (Sulfonat), wobei die Carbonisierung bei Temperaturen im Bereich von 100 °C bis 1.200 °C durchgeführt wird und wobei die Carbonisierung für eine Zeitdauer im Bereich von 0,5 h bis 20 h durchgeführt wird; dann
(c) Aktivierung des in Schritt (b) erhaltenen carbonisierten Ausgangsmaterials (Carbonisat) insbesondere zum Erhalt der Aktivkohle (Aktivat), wobei die Aktivierung bei Temperaturen im Bereich von 700 °C bis 1.200 °C durchgeführt wird und wobei die Aktivierung für eine Zeitdauer im Bereich von 0,5 h bis 20 h durchgeführt wird;
wobei vor Durchführung von Schritt (b) ein Schritt des Stehenlassens und/oder des Aufbewahrens des sulfonierten Ausgangsmaterials durchgeführt wird, wobei das Stehenlassen und/oder das Aufbewahren des sulfonierten Ausgangsmaterials für eine Zeitdauer im Bereich von 0,5 Tagen bis 12 Monaten durchgeführt wird.

2. Verfahren nach Anspruch 1,
wobei in Schritt (a) die Sulfonierung, insbesondere das Einwirkenlassen und Reagieren des Sulfonierungsmittels mit dem Ausgangsmaterial, für eine Zeitdauer im Bereich von 0,5 h bis 20 h, vorzugsweise im Bereich von 0,5 h bis 20 h, bevorzugt im Bereich von 0,5 h bis 16 h, besonders bevorzugt im Bereich von 0,75 h bis 14 h, ganz besonders bevorzugt im Bereich von 1 h bis 12 h, noch mehr bevorzugt im Bereich von 1,5 h bis 10 h, am meisten bevorzugt im Bereich von 2 h bis 8 h, durchgeführt wird und/oder
wobei in Schritt (a) die Sulfonierung, insbesondere das Einwirkenlassen und Reagieren des Sulfonierungsmittels mit dem Ausgangsmaterial, bei Temperaturen im Bereich von 75 °C bis 330 °C, bevorzugt im Bereich von 90 °C bis 320 °C, besonders bevorzugt im Bereich von 95 °C bis 310 °C, ganz besonders bevorzugt im Bereich von 100 °C bis 300 °C, durchgeführt wird und/oder
wobei in Schritt (a) das Sulfonierungsmittel in Form von Oleum und/oder vorzugsweise konzentrierter Schwefelsäure, vorzugsweise in Form einer Mischung von Oleum und vorzugsweise konzentrierter Schwefelsäure, eingesetzt wird, insbesondere wobei das Sulfonierungsmittel in flüssiger Form, insbesondere in Form einer wässrigen Lösung und/oder unter Verwendung von Wasser als Lösemittel, eingesetzt wird und/oder
wobei in Schritt (a) das Sulfonierungsmittel, vorzugsweise in Form von Oleum und/oder vorzugsweise konzentrierter Schwefelsäure, in einer Menge im Bereich von 20 Gew.-% bis 90 Gew.-%, vorzugsweise im Bereich von 30 Gew.-% bis 85 Gew.-%, bevorzugt im Bereich von 40 Gew.-% bis 80 Gew.-%, besonders bevorzugt im Bereich von 50 Gew.-% bis 80 Gew.-%, bezogen auf das Gesamtgewicht der resultierenden Zusammensetzung (Gemisch) aus Sulfonierungsmittel und Ausgangsmaterial, eingesetzt wird und/oder
wobei in Schritt (a) das Sulfonierungsmittel in Form von Oleum und vorzugsweise konzentrierter Schwefelsäure einerseits und das Ausgangsmaterial andererseits in einem Gewichtsverhältnis (Oleum : Schwefelsäure : Ausgangsmaterial) im Bereich von (1 bis 6) : (1 bis 4) : (1 bis 10), insbesondere im Bereich von (1 bis 5) : (1 bis 3) : (1 bis 6), eingesetzt wird.

3. Verfahren nach Anspruch 1 oder 2,
wobei in Schritt (a) die Sulfonierung, insbesondere das Einwirkenlassen und Reagieren des Sulfonierungsmittels mit dem Ausgangsmaterial, unter konstanter Temperatur durchgeführt wird oder
wobei in Schritt (a) die Sulfonierung, insbesondere das Einwirkenlassen und Reagieren des Sulfonierungsmittels mit dem Ausgangsmaterial, unter Anwendung eines Temperaturgradienten und/oder eines Temperaturprofils durchgeführt wird, insbesondere wobei die Ausbildung des Temperaturgradienten und/oder des Temperaturprofils zeitabhängig erfolgt.

4. Verfahren nach einem der vorangehenden Ansprüche,
wobei insbesondere in Schritt (a) eine Trocknung des sulfonierten Ausgangsmaterials durchgeführt wird, insbesondere wobei der gegebenenfalls überschüssige flüssige, insbesondere wässrige Anteil des Sulfonierungsmittels zumindest im Wesentlichen entfernt wird, und/oder
wobei in Schritt (a) nach Einwirkenlassen und Reagieren des Sulfonierungsmittels mit dem Ausgangsmaterial und/oder nach Trocknung des sulfonierten Ausgangsmaterials und/oder nach Durchführung von Schritt (a) und/oder vor Durchführung von Schritt (b) eine Abkühlung des sulfonierten Ausgangsmaterials durchgeführt wird, insbesondere auf Temperaturen im Bereich von 15 °C bis 30 °C, und/oder
wobei das Stehenlassen und/oder das Aufbewahren des sulfonierten Ausgangsmaterials bei Temperaturen im Bereich von 15 °C bis 30 °C und/oder in Umgebungsatmosphäre, insbesondere (Umgebungs-)Luft, oder unter inerter Atmosphäre, insbesondere unter Stickstoffatmosphäre, durchgeführt wird, und/oder
wobei das Stehenlassen und/oder das Aufbewahren des sulfonierten Ausgangsmaterials für eine Zeitdauer im Bereich von 1 Tag bis 6 Monaten, vorzugsweise im Bereich von 2 Tagen bis 3 Monaten, bevorzugt im Bereich von 5 Tagen bis 1 Monat, durchgeführt wird und/oder
wobei bei dem Stehenlassen und/oder Aufbewahren eine Nachsulfonierung und/oder eine nachträgliche und/oder weiterführende Volumenzunahme (nachträgliche und/oder weiterführende Volumenexpansion) des sulfonierten Ausgangsmaterials erfolgt, und/oder
wobei in Schritt (a) und/oder bei dem Stehenlassen und/oder dem Aufbewahren des sulfonierten Ausgangsmaterials das Ausgangsmaterial mit chemischen Gruppen, insbesondere stark sauren chemischen Gruppen, vorzugsweise Sulfonsäuregruppen, ausgerüstet wird, insbesondere wobei die chemischen Gruppen bei ihrer thermischen Zersetzung zu freien Radikalen und somit zu chemischen Vernetzungen führen.

5. Verfahren nach einem der vorangehenden Ansprüche,
wobei das Ausgangsmaterial in Form eines kornförmigen und/oder kugelförmigen, insbesondere kugelförmigen Ausgangsmaterials eingesetzt wird und/oder wobei das Ausgangsmaterial in Kornform und/oder in Kugelform, insbesondere in Kugelform, eingesetzt wird und/oder
wobei das Ausgangsmaterial eine Partikelgröße, insbesondere einen Teilchendurchmesser, im Bereich von 0,01 mm bis 2,5 mm, insbesondere im Bereich von 0,02 mm bis 2 mm, bevorzugt im Bereich von 0,05 mm bis 1,5 mm, vorzugsweise im Bereich von 0,1 mm bis 1,25 mm, besonders bevorzugt im Bereich von 0,15 mm bis 1 mm, ganz besonders bevorzugt im Bereich von 0,2 mm bis 0,9 mm, aufweist, insbesondere wobei mindestens 70 Gew.-%, insbesondere mindestens 80 Gew.-%, vorzugsweise mindestens 85 Gew.-%, bevorzugt mindestens 90 Gew.-%, besonders bevorzugt mindestens 95 Gew.-%, der Partikel des Ausgangsmaterials Partikelgrößen, insbesondere Teilchendurchmesser, in den vorgenannten Bereichen aufweisen, und/oder
wobei die Volumenexpansion (Volumenzunahme) des Ausgangsmaterials derart erfolgt, dass die Partikelgröße, insbesondere der Teilchendurchmesser, und/oder die mittlere Partikelgröße (D50), insbesondere der mittlere Teilchendurchmesser (D50), des sulfonierten Ausgangsmaterials um mindestens 5 %, bevorzugt mindestens 10 %, vergrößert wird, bezogen auf die Partikelgröße, insbesondere den Teilchendurchmesser, des nichtsulfonierten Ausgangsmaterials und/oder bezogen auf die mittlere Partikelgröße (D50), insbesondere den mittleren Teilchendurchmesser (D50), des nichtsulfonierten Ausgangsmaterials und/oder
wobei das Ausgangsmaterial, insbesondere in Form des kornförmigen und/oder kugelförmigen, insbesondere kugelförmigen Ausgangsmaterials, porös, insbesondere mikroporös, und/oder gelförmig ist und/oder
wobei das Ausgangsmaterial einen Mikroporenvolumenanteil, bezogen auf das Gesamtporenvolumen des Ausgangsmaterials, von mindestens 30 %, insbesondere mindestens 40 %, vorzugsweise mindestens 50 %, bevorzugt mindestens 60 %, besonders bevorzugt mindestens 70 %, aufweist und/oder
wobei das Ausgangsmaterial einen Mikroporenvolumenanteil, bezogen auf das Gesamtporenvolumen des Ausgangsmaterials, im Bereich von 30 % bis 85 %, insbesondere im Bereich von 40 % bis 80 %, vorzugsweise im Bereich von 50 % bis 75 %, aufweist.

6. Verfahren nach einem der vorangehenden Ansprüche,
wobei Schritt (a) getrennt und/oder separat, insbesondere räumlich und/oder zeitlich getrennt, von Schritt (b) und/oder Schritt (c), insbesondere getrennt und/oder separat von Schritt (b) und Schritt (c), durchgeführt wird und/oder
wobei Schritt (a) dem Schritt (b) und/oder dem Schritt (c) als getrennter, insbesondere räumlich und/oder zeitlich getrennter, und/oder separater Schritt vorgeschaltet wird und/oder
wobei Schritt (a) in einer separaten Vorrichtung, insbesondere Sulfonierungs- und/oder Reaktionsvorrichtung, durchgeführt wird und/oder
wobei in Schritt (b) die Carbonisierung des sulfonierten Ausgangsmaterials in einer separaten Vorrichtung und/oder räumlich und/oder zeitlich getrennt von der Sulfonierung durchgeführt wird und/oder
wobei in Schritt (b) eine Carbonisierungsvorrichtung, insbesondere ein Drehrohr, vorzugsweise ein Drehrohrofen, und/oder in ein Bandofen, eingesetzt wird.

7. Verfahren nach einem der vorangehenden Ansprüche,
wobei in Schritt (b) die Carbonisierung durchgeführt wird derart, dass die chemischen Gruppen, insbesondere stark sauren chemischen Gruppen, vorzugsweise Sulfonsäuregruppen, insbesondere unter Ausbildung freier Radikale und/oder unter Ausbildung von Vernetzungen, thermisch zersetzt und/oder von dem sulfonierten Ausgangsmaterial abgespalten werden, so das es insbesondere zu einem Einsetzen der Carbonisierung und/oder zu einer thermischen Zersetzung des Ausgangsmaterials, vorzugsweise unter Vernetzung der Polymeren des Ausgangsmaterials und/oder Bildung von Kohlen stoff, kommt, und/oder
wobei in Schritt (b) die Carbonisierung durchgeführt wird derart, dass insbesondere nach der thermischen Zersetzung und/oder der Abspaltung der chemischen Gruppen, insbesondere der stark sauren chemischen Gruppen, vorzugsweise der Sulfonsäuregruppen, eine insbesondere weitergehende und/oder insbesondere vollständige Carbonisierung des Ausgangsmaterials erfolgt,
insbesondere wobei die thermische Zersetzung und/oder die Abspaltung der chemischen Gruppen, insbesondere der stark sauren chemischen Gruppen, vorzugsweise der Sulfonsäuregruppen, insbesondere in einer ersten Temperaturzone der Carbonisierungsvorrichtung und/oder bei Temperaturen im Bereich von 100 °C bis 600 °C, insbesondere im Bereich von 150 °C bis 500 °C, erfolgt und/oder
insbesondere wobei die weitergehende und/oder vollständige Carbonisierung des Ausgangsmaterials in einer zweiten Temperaturzone der Carbonisierungsvorrichtung erfolgt, insbesondere wobei die zweite Temperaturzone stromabwärts zu der ersten Temperaturzone angeordnet ist, und/oder wobei die weitergehende und/oder vollständige Carbonisierung des Ausgangsmaterials bei Temperaturen im Bereich von 400 °C bis 1.200 °C, insbesondere im Bereich von 500 °C bis 1.000 °C, erfolgt.

8. Verfahren nach einem der vorangehenden Ansprüche,
wobei in Schritt (c) die Aktivierung des carbonisierten Ausgangsmaterials gleichermaßen in der Carbonisierungsvorrichtung (Carbonisierungs- bzw. Aktivierungsvorrichtung), insbesondere wie in Anspruch 6 definiert, durchgeführt wird oder aber wobei in Schritt (c) die Aktivierung des carbonisierten Ausgangsmaterials in einer separaten Aktivierungsvorrichtung und/oder räumlich und/oder zeitlich getrennt von der Carbonisierung durchgeführt wird und/oder
wobei in Schritt (c) die Aktivierung in Gegenwart mindestens eines Aktivierungsgases, insbesondere Sauerstoff, insbesondere in Form von Luft, Wasserdampf und/oder Kohlendioxid oder Gemischen dieser Aktivierungsgase, und/oder in Gegenwart eines Inertgas/Wasserdampf-Gemisches, vorzugsweise Stickstoff/Wasserdampf-Gemisches, und/oder in Gegenwart von insbesondere reinem Kohlendioxid oder eines Inertgas/Kohlendioxid-Gemisches, insbesondere eines Stickstoff/ Kohlendioxid-Gemisches, durchgeführt wird und/oder
wobei in Schritt (c) die Aktivierung mehrstufig, insbesondere zweistufig, durchgeführt wird, wobei das carbonisierte Ausgangsmaterial zunächst in einem ersten Aktivierungsschritt einer Aktivierung in einer wasserdampfhaltigen Atmosphäre unterzogen wird, gefolgt von einem zweiten Aktivierungsschritt einer Aktivierung in einer kohlendioxidhaltigen Atmosphäre.

9. Partikuläre Aktivkohle, vorzugsweise kornförmige und/oder kugelförmige, bevorzugt kugelförmige Aktivkohle, mit erhöhtem Mesoporenvolumenanteil, wobei die Aktivkohle erhältlich ist durch ein Verfahren nach einem der Ansprüche 1 bis 8,
wobei die Aktivkohle ein Gesamtporenvolumen, insbesondere ein Gesamtporenvolumen nach Gurvich, von mindestens 0,5 cm³/g, insbesondere mindestens 0,75 cm³/g, vorzugsweise mindestens 1 cm³/g, bevorzugt mindestens 1,25 cm³/g, besonders bevorzugt mindestens 2 cm³/g, aufweist,
wobei 25 % bis 85 %, vorzugsweise 25 % bis 75 %, bevorzugt 30 % bis 70 %, des Gesamtporenvolumens, insbesondere des Gesamtporenvolumens nach Gurvich, der Aktivkohle durch Poren mit Porendurchmessern im Bereich von 2 nm bis 50 nm gebildet sind; und
wobei die Aktivkohle eine Abriebfestigkeit von mindestens 95 %, insbesondere mindestens 96 %, vorzugsweise mindestens 97 %, bevorzugt mindestens 98 %, besonders bevorzugt mindestens 99 %, ganz besonders bevorzugt mindestens 99,5 %, aufweist, bestimmt nach modifizierter CEFIC-Norm.

10. Aktivkohle nach Anspruch 9,
wobei 60 % bis 99,5 %, insbesondere 60 % bis 99 %, vorzugsweise 80 % bis 98 %, bevorzugt 90 % bis 95 %, des von Poren mit Porendurchmessern im Bereich von 2 nm bis 50 nm gebildeten Gesamtporenvolumens, insbesondere des von Poren mit Porendurchmessern im Bereich von 2 nm bis 50 nm gebildeten Gesamtporenvolumens nach Gurvich, der Aktivkohle durch Poren mit Porendurchmessern im Bereich von 2 nm bis 20 nm, insbesondere im Bereich von 2 nm bis 10 nm, vorzugsweise im Bereich von 2 nm bis 5 nm, bevorzugt im Bereich von 2,5 nm bis 4,5 nm, gebildet sind und/oder
wobei mindestens 60 %, insbesondere mindestens 70 %, vorzugsweise mindestens 80 %, bevorzugt mindestens 90 %, besonders bevorzugt mindestens 95 %, ganz besonders bevorzugt mindestens 98 %, weiter bevorzugt mindestens 99 %, noch weiter bevorzugt mindestens 99,5 %, des von Poren mit Porendurchmessern im Bereich von 2 nm bis 100 nm, insbesondere im Bereich von 2 nm bis 50 nm, gebildeten Gesamtporenvolumens der Aktivkohle, und/oder des von Poren mit Porendurchmessern im Bereich von 2 nm bis 100 nm, insbesondere im Bereich von 2 nm bis 50 nm, gebildeten Gesamtporenvolumens nach Gurvich der Aktivkohle durch Poren mit Porendurchmessern im Bereich von 2 nm bis 20 nm, insbesondere im Bereich von 2 nm bis 10 nm, vorzugsweise im Bereich von 2 nm bis 5 nm, bevorzugt im Bereich von 2,5 nm bis 4,5 nm, gebildet sind.

11. Verwendung der Aktivkohle nach Anspruch 9 oder 10
für die Adsorption von Giftstoffen, Schadstoffen und Gerüchen, insbesondere aus Gas- oder Luftströmen, oder zur Reinigung oder Aufbereitung von Gasen, insbesondere Luft oder Flüssigkeiten
insbesondere Wasser, und/oder
zur Verwendung in Adsorptionsfiltermaterialien, insbesondere für die Herstellung von Schutzbekleidung, und/oder
als Sorptionsspeicher für Gase oder Flüssigkeiten und/oder
im Bereich der Lebensmittelindustrie, insbesondere zur Aufbereitung und/oder Entfärbung von Lebensmitteln, und/oder
im Bereich der Medizin oder Pharmazie, insbesondere als Arzneimittel oder Arzneimittelbestandteil, und/oder
zur Herstellung von Schutzausrüstung und/oder Schutzgegenständen aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise allen vorgenannten Schutzmaterialien für den ABC-Einsatz und/oder mit Schutzfunktion gegenüber radioaktiven Schad- und/oder Giftstoffen und/oder gegenüber biologischen Schad- und/oder Giftstoffen und/oder gegenüber chemischen Schad- und/oder Giftstoffen, und/oder
zur Herstellung von Filtern und Filtermaterialien aller Art, insbesondere zur Entfernung von Schad-, Geruchs- und Giftstoffen aller Art, vorzugsweise zur Entfernung von radioaktiven Schad- und/oder Giftstoffen und/oder von biologischen Schad- und/oder Giftstoffen und/oder von chemischen Schad- und/oder Giftstoffen, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

12. Schutzausrüstungen und/oder Schutzgegenstände aller Art, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, vorzugsweise alle vorgenannten Schutzausrüstungen und/oder Schutzgegenstände für den ABC-Einsatz und/oder mit Schutzfunktion gegenüber radioaktiven Schad- und/oder Giftstoffen und/oder gegenüber biologischen Schad- und/oder Giftstoffen und/oder gegenüber chemischen Schad- und/oder Giftstoffen, hergestellt unter Verwendung einer Aktivkohle, wie in Anspruch 9 oder 10 definiert, und/oder aufweisend eine Aktivkohle, wie in Anspruch 9 oder 10 definiert.

13. Filter und Filtermaterialien aller Art, insbesondere zur Entfernung von Schad-, Geruchs- und Giftstoffen aller Art, vorzugsweise zur Entfernung von radioaktiven Schad- und/oder Giftstoffen und/oder von biologischen Schad- und/oder Giftstoffen und/oder von chemischen Schad- und/oder Giftstoffen, insbesondere aus Luft- und/oder Gasströmen, wie Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung einer Aktivkohle, wie in Anspruch 9 oder 10 definiert, und/oder aufweisend eine Aktivkohle, wie in Anspruch 9 oder 10 definiert.

## Claims

1. Process for the preparation of particulate activated carbon with an increased mesopore volume fraction, wherein 25 % to 85 % of the total pore volume according to Gurvich of the activated carbon is formed by pores with pore diameters in the range of from 2 nm to 50 nm,
wherein the method comprises the following steps:
(a) sulfonation of a particulate polymeric organic starting material by bringing the starting material into contact with at least one sulfonating agent and subsequently allowing the sulfonating agent to act upon and react with the starting material, namely for periods of time in the range of from 0.5 h to 24 h and at temperatures in the range of from 50 °C to 330 °C, in such a way that the sulfonation takes place with simultaneous volume expansion (volume increase) of the starting material, wherein the volume expansion of the starting material takes place in such a way that the particle size of the sulphonated starting material is increased by at least 2 %, relative to the particle size of the non-sulphonated starting material, wherein sulphur trioxide (SO₃) is used as the sulphonating agent and wherein the sulphonating agent is used in an amount in the range of from 10 % by weight to 95 % by weight, based on the total weight of the resulting composition (mixture) of sulphonating agent and starting material; then
(b) carbonisation of the sulfonated starting material (sulfonate) obtained in step (a), wherein the carbonisation is carried out at temperatures in the range of from 100 °C to 1,200 °C and wherein the carbonisation is carried out for a period of time in the range of from 0.5 h to 20 h; then
(c) activation of the carbonised starting material (carbonisate) obtained in step (b), in particular to obtain the activated carbon (activate), wherein the activation is carried out at temperatures in the range of from 700 °C to 1200 °C and wherein the activation is carried out for a period of time in the range of from 0.5 h to 20 h;
wherein prior to carrying out step (b), a step of allowing the sulphonated starting material to stand and/or storing the sulphonated starting material is carried out, wherein the allowing to stand and/or storing of the sulphonated starting material is carried out for a period of time in the range of from 0.5 days to 12 months.

2. Method according to claim 1,
wherein in step (a) the sulphonation, in particular allowing the sulphonating agent to act upon and react with the starting material, is carried out for a period of time in the range of from 0.5 h to 20 h, preferably in the range of from 0.5 h to 20 h, preferably in the range of from 0,5 h to 16 h, particularly preferably in the range of from 0.75 h to 14 h, most preferably in the range of from 1 h to 12 h, even more preferably in the range of from 1.5 h to 10 h, most preferably in the range of from 2 h to 8 h, and/or
wherein in step (a) the sulphonation, in particular allowing the sulphonating agent to act upon and react with the starting material, is carried out at temperatures in the range of from 75 °C to 330 °C, preferably in the range of from 90 °C to 320 °C, particularly preferably in the range of from 95 °C to 310 °C, most preferably in the range of from 100 °C to 300 °C, and/or
wherein in step (a) the sulphonating agent is used in the form of oleum and/or preferably concentrated sulphuric acid, preferably in the form of a mixture of oleum and preferably concentrated sulphuric acid, in particular wherein the sulphonating agent is used in liquid form, in particular in the form of an aqueous solution and/or using water as solvent, and/or
wherein in step (a) the sulphonating agent, preferably in the form of oleum and/or preferably concentrated sulphuric acid, is used in an amount in the range of from 20 % to 90 % by weight, preferably in the range of from 30 % to 85 % by weight, preferably in the range of from 40 % to 80 % by weight, particularly preferably in the range of from 50 % to 80 % by weight, based on the total weight of the resulting composition (mixture) of sulphonating agent and starting material, and/or
wherein in step (a) the sulphonating agent in the form of oleum and preferably concentrated sulphuric acid on the one hand and the starting material on the other hand are present in a weight ratio (oleum : sulphuric acid : starting material) in the range of from (1 to 6) : (1 to 4) : (1 to 10), in particular in the range of (1 to 5) : (1 to 3) : (1 to 6), is used.

3. Method according to claim 1 or 2,
wherein in step (a) the sulphonation, in particular allowing the sulphonating agent to act upon and react with the starting material, is carried out at a constant temperature, or
wherein in step (a) the sulphonation, in particular the exposure to and reaction of the sulphonation agent with the starting material, is carried out using a temperature gradient and/or a temperature profile, in particular wherein the formation of the temperature gradient and/or the temperature profile is time-dependent.

4. Method according to one of the preceding claims,
wherein, in particular in step (a), the sulphonated starting material is dried, in particular wherein any excess liquid, in particular aqueous, portion of the sulphonating agent is at least substantially removed, and/or
wherein in step (a), after allowing the sulphonating agent to act upon and react with the starting material and/or after drying the sulphonated starting material and/or after carrying out step (a) and/or before carrying out step (b), the sulphonated starting material is cooled, in particular to temperatures in the range of from 15 °C to 30 °C, and/or
wherein the sulphonated starting material is left to stand and/or stored at temperatures in the range of from 15 °C to 30 °C and/or in an ambient atmosphere, in particular (ambient) air, or in an inert atmosphere, in particular a nitrogen atmosphere, and/or
wherein the sulphonated starting material is left to stand and/or stored for a period of time in the range of from 1 day to 6 months, preferably in the range of from 2 days to 3 months, preferably in the range of from 5 days to 1 month, and/or
wherein a post-sulphonation and/or a subsequent and/or further increase in volume (subsequent and/or further volume expansion) of the sulphonated starting material takes place during the leaving to stand and/or storage, and/or
wherein in step (a) and/or when the sulphonated starting material is left to stand and/or stored, the starting material is provided with chemical groups, in particular strongly acidic chemical groups, preferably sulphonic acid groups, in particular wherein the chemical groups lead to free radicals and thus to chemical cross-linking during their thermal decomposition.

5. Method according to one of the preceding claims,
wherein the starting material is used in the form of a granular and/or spherical, in particular spherical, starting material and/or wherein the starting material is used in granular form and/or in spherical form, in particular in spherical form, and/or
wherein the starting material has a particle size, in particular a particle diameter, in the range of from 0.01 mm to 2.5 mm, in particular in the range of from 0.02 mm to 2 mm, preferably in the range of from 0.05 mm to 1.5 mm, preferably in the range of from 0.1 mm to 1.25 mm, more preferably in the range of from 0.15 mm to 1 mm, most preferably in the range of from 0.2 mm to 0.9 mm, in particular wherein at least 70 % by weight, in particular at least 80 % by weight, preferably at least 85 % by weight, preferably at least 90 % by weight, particularly preferably at least 95 % by weight, of the particles of the starting material have particle sizes, in particular particle diameters, in the aforementioned ranges, and/or
wherein the volume expansion (volume increase) of the starting material takes place in such a way that the particle size, in particular the particle diameter, and/or the mean particle size (D50), in particular the mean particle diameter (D50), of the sulfonated starting material is increased by at least 5 %, preferably at least 10 %, relative to the particle size, in particular the particle diameter, of the non-sulfonated starting material and/or relative to the mean particle size (D50), in particular the mean particle diameter (D50), of the sulfonated starting material, preferably at least 10 %, in relation to the particle size, in particular the particle diameter, of the non-sulphonated starting material and/or in relation to the mean particle size (D50), in particular the mean particle diameter (D50), of the non-sulphonated starting material and/or
wherein the starting material, in particular in the form of the granular and/or spherical, in particular spherical, starting material, is porous, in particular microporous, and/or gel-like, and/or
wherein the starting material has a micropore volume fraction, relative to the total pore volume of the starting material, of at least 30 %, in particular at least 40 %, preferably at least 50 %, preferably at least 60 %, particularly preferably at least 70 %, and/or
wherein the starting material has a micropore volume fraction, relative to the total pore volume of the starting material, in the range of from 30 % to 85 %, in particular in the range of from 40 % to 80 %, preferably in the range of from 50 % to 75 %.

6. Method according to one of the preceding claims,
wherein step (a) is carried out separately and/or separately, in particular spatially and/or temporally separated, from step (b) and/or step (c), in particular separately and/or separately from step (b) and step (c), and/or
wherein step (a) precedes step (b) and/or step (c) as a separate, in particular spatially and/or temporally separate, and/or separate step, and/or
wherein step (a) is carried out in a separate apparatus, in particular sulphonation and/or reaction apparatus, and/or
wherein in step (b) the carbonisation of the sulphonated starting material is carried out in a separate apparatus and/or spatially and/or temporally separated from the sulphonation and/or
wherein in step (b) a carbonisation device, in particular a rotary kiln, preferably a rotary kiln, and/or a belt kiln, is used.

7. Method according to one of the preceding claims,
wherein in step (b) the carbonisation is carried out in such a way that the chemical groups, in particular strongly acidic chemical groups, preferably sulphonic acid groups, are thermally decomposed and/or split off from the sulphonated starting material, in particular with the formation of free radicals and/or with the formation of cross-links, so that in particular carbonisation and/or thermal decomposition of the starting material occurs, preferably with cross-linking of the polymers of the starting material and/or formation of carbon, and/or
wherein in step (b) the carbonisation is carried out in such a way that, in particular after the thermal decomposition and/or the elimination of the chemical groups, in particular the strongly acidic chemical groups, preferably the sulphonic acid groups, a further and/or in particular complete carbonisation of the starting material takes place,
in particular wherein the thermal decomposition and/or the cleavage of the chemical groups, in particular the strongly acidic chemical groups, preferably the sulphonic acid groups, takes place in particular in a first temperature zone of the carbonisation device and/or at temperatures in the range of from 100 °C to 600 °C, in particular in the range of from 150 °C to 500 °C, and/or
in particular wherein the further and/or complete carbonisation of the starting material takes place in a second temperature zone of the carbonisation device, in particular wherein the second temperature zone is arranged downstream of the first temperature zone, and/or wherein the further and/or complete carbonisation of the starting material takes place at temperatures in the range of from 400 °C to 1,200 °C, in particular in the range of from 500 °C to 1,000 °C.

8. Method according to one of the preceding claims,
wherein in step (c) the activation of the carbonised starting material is likewise carried out in the carbonisation device (carbonisation or activation device), in particular as defined in claim 6, or else wherein in step (c) the activation of the carbonised starting material is carried out in a separate activation device and/or spatially and/or temporally separated from the carbonisation, and/or
wherein in step (c) the activation is carried out in the presence of at least one activation gas, in particular oxygen, in particular in the form of air, water vapour and/or carbon dioxide or mixtures of these activation gases, and/or in the presence of an inert gas/water vapour mixture, preferably nitrogen/water vapour mixture, and/or in the presence of in particular pure carbon dioxide or an inert gas/carbon dioxide mixture, in particular a nitrogen/carbon dioxide mixture, and/or
wherein in step (c) the activation is carried out in several stages, in particular in two stages, wherein the carbonised starting material is first subjected to activation in an atmosphere containing water vapour in a first activation step, followed by activation in an atmosphere containing carbon dioxide in a second activation step.

9. Particulate activated carbon, preferably granular and/or spherical, preferably spherical activated carbon, having an increased mesopore volume fraction, wherein the activated carbon is obtainable by a process according to any one of claims 1 to 8,
wherein the activated carbon has a total pore volume, in particular a total pore volume according to Gurvich, of at least 0.5 cm³/g, in particular at least 0.75 cm³/g, preferably at least 1 cm³/g, preferably at least 1.25 cm³/g, particularly preferably at least 2 cm³/g,
wherein 25 % to 85 %, preferably 25 % to 75 %, preferably 30 % to 70 %, of the total pore volume, in particular the total pore volume according to Gurvich, of the activated carbon are formed by pores with pore diameters in the range of from 2 nm to 50 nm; and wherein the activated carbon has an abrasion resistance of at least 95 %, in particular at least 96 %, preferably at least 97 %, preferably at least 98 %, particularly preferably at least 99 %, very particularly preferably at least 99.5 %, determined according to modified CEFIC standard.

10. Activated carbon according to claim 9,
wherein 60 % to 99.5 %, in particular 60 % to 99 %, preferably 80 % to 98 %, preferably 90 % to 95 %, of the total pore volume formed by pores with pore diameters in the range of from 2 nm to 50 nm, in particular the total pore volume formed by pores with pore diameters in the range of from 2 nm to 50 nm according to Gurvich, of the activated carbon are formed by pores with pore diameters in the range of from 2 nm to 20 nm, in particular in the range of from 2 nm to 10 nm, preferably in the range of from 2 nm to 5 nm, preferably in the range of from 2.5 nm to 4.5 nm, and/or
wherein at least 60 %, in particular at least 70 %, preferably at least 80 %, preferably at least 90 %, more preferably at least 95 %, most preferably at least 98 %, more preferably at least 99 %, still more preferably at least 99.5 %, of the total pore volume of the activated carbon formed by pores with pore diameters in the range of from 2 nm to 100 nm, in particular in the range of from 2 nm to 50 nm, and/or of the total pore volume formed by pores with pore diameters in the range of from 2 nm to 100 nm, in particular in the range of from 2 nm to 50 nm, according to Gurvich of the activated carbon are formed by pores with pore diameters in the range of from 2 nm to 20 nm, in particular in the range of from 2 nm to 10 nm, preferably in the range of from 2 nm to 5 nm, preferably in the range of from 2.5 nm to 4.5 nm.

11. Use of the activated carbon according to claim 9 or 10
for the adsorption of toxic substances, pollutants and odours, in particular from gas or air flows, or for the purification or treatment of gases, in particular air or liquids in particular water, and/or
for use in adsorption filter materials, in particular for the manufacture of protective clothing, and/or
as sorption storage for gases or liquids and/or
in the food industry, in particular for the preparation and/or decolourisation of food, and/or
in the field of medicine or pharmacy, in particular as a medicinal product or medicinal product component, and/or
for the manufacture of protective equipment and/or protective articles of all kinds, in particular protective clothing, in particular for the civilian or military sector, such as protective suits, protective gloves, protective footwear, protective socks, protective headwear and the like, and protective covers of all kinds, preferably all the aforementioned protective materials for NBC use and/or with a protective function against radioactive pollutants and/or toxic substances and/or against biological pollutants and/or toxic substances and/or against chemical pollutants and/or toxic substances, and/or
for the production of filters and filter materials of all kinds, in particular for the removal of harmful, odorous and toxic substances of all kinds, preferably for the removal of radioactive harmful and/or toxic substances and/or of biological harmful and/or toxic substances and/or of chemical harmful and/or toxic substances, in particular from air and/or gas streams, such as NBC protective mask filters, odour filters, surface filters, air filters, in particular filters for room air purification, adsorbable carrier structures and filters for the medical field.

12. Protective equipment and/or protective articles of all kinds, in particular for civilian or military use, in particular protective clothing, such as protective suits, protective gloves, protective footwear, protective socks, protective headgear and the like, as well as protective covers, preferably all the aforementioned protective equipment and/or protective articles for NBC use and/or with a protective function against radioactive pollutants and/or toxic substances and/or against biological pollutants and/or toxic substances and/or against chemical pollutants and/or toxic substances, manufactured using an activated carbon as defined in claim 9 or 10 and/or comprising an activated carbon as defined in claim 9 or 10.

13. Filters and filter materials of all kinds, in particular for the removal of pollutants, odours and toxic substances of all kinds, preferably for the removal of radioactive pollutants and/or toxic substances and/or of biological pollutants and/or toxic substances and/or of chemical pollutants and/or toxic substances, in particular from air and/or gas flows, such as protective mask filters, odour filters, surface filters, air filters, in particular filters for room air purification, adsorption-capable carrier structures and filters for the medical field, produced using an activated carbon as defined in claim 9 or 10 and/or comprising an activated carbon as defined in claim 9 or 10.

## Revendications

1. Procédé de préparation de charbon actif particulaire ayant une proportion accrue de volume de mésopores, où 25 % à 85 % du volume total de pores selon Gurvich du charbon actif sont formés par des pores ayant des diamètres de pores dans la plage de 2 nm à 50 nm,
ledit procédé comprenant les étapes suivantes:
(a) sulfonation d'un matériau de départ organique polymère particulaire par mise en contact du matériau de départ avec au moins un agent de sulfonation et ensuite action et réaction de l'agent de sulfonation avec le matériau de départ de telle manière, à savoir pendant des durées dans la plage de 0,5 h à 24 h et sous des températures dans la plage de 50°C à 330°C, que la sulfonation s'effectue avec une expansion de volume simultanée (augmentation de volume) du matériau de départ, l'expansion de volume du matériau de départ s'effectuant de telle sorte que la taille des particules du matériau de départ sulfoné est augmentée d'au moins 2 %, par rapport à la taille des particules du matériau de départ non sulfoné, du trioxyde de soufre (SO₃) étant utilisé comme agent de sulfonation et l'agent de sulfonation étant présent en une quantité de l'ordre de 10 % en poids.-% à 95 % en poids, par rapport au poids total de la composition résultante (mélange) d'agent de sulfonation et de matière première; puis
(b) carbonisation de la matière première sulfonée (sulfonate) obtenue dans l'étape (a), où la carbonisation est effectuée à des températures dans la plage de 100 °C à 1200 °C et où la carbonisation est effectuée pendant une durée dans la plage de 0,5 h à 20 h; puis
(c) activation du matériau de départ carbonisé (carbonisat) obtenu dans l'étape (b), en particulier pour obtenir le charbon actif (activat), l'activation étant réalisée à des températures dans la plage de 700 °C à 1200 °C et l'activation étant réalisée pendant une durée dans la plage de 0,5 h à 20 h;
où, avant d'effectuer l'étape (b), une étape consistant à laisser reposer et/ou à conserver la matière première sulfonée est effectuée, où le fait de laisser reposer et/ou de conserver la matière première sulfonée est effectué pendant une période de temps dans la plage de 0,5 jour à 12 mois.

2. Procédé selon la revendication 1,
où, dans l'étape (a), la sulfonation, en particulier le fait de laisser agir et de faire réagir l'agent de sulfonation avec le matériau de départ, est effectuée pendant une durée comprise dans la plage de 0,5 h à 20 h, de préférence dans la plage de 0,5 h à 20 h, de préférence dans la plage de 0,5 h à 16 h, de préférence de 0,75 h à 14 h, de préférence encore de 1 h à 12 h, de préférence encore de 1,5 h à 10 h, de préférence encore de 2 h à 8 h, et/ou
où, dans l'étape (a), la sulfonation, en particulier le fait de laisser agir et réagir l'agent de sulfonation avec le matériau de départ, est effectuée à des températures dans la plage de 75°C à 330°C, de préférence dans la plage de 90°C à 320°C, de manière particulièrement préférée dans la plage de 95°C à 310°C, de manière tout à fait préférée dans la plage de 100°C à 300°C, et/ou
où, dans l'étape (a), l'agent de sulfonation est utilisé sous forme d'oléum et/ou de préférence d'acide sulfurique concentré, de préférence sous forme d'un mélange d'oléum et de préférence d'acide sulfurique concentré, en particulier où l'agent de sulfonation est utilisé sous forme liquide, en particulier sous forme d'une solution aqueuse et/ou en utilisant de l'eau comme solvant, et/ou
où l'agent de sulfonation est utilisé dans l'étape (a), de préférence sous forme d'oléum et/ou de préférence d'acide sulfurique concentré, en une quantité dans la plage de 20 % en poids à 90 % en poids, de préférence dans la plage de 30 % en poids à 85 % en poids, de préférence dans la plage de 40 % en poids à 80 % en poids, de manière particulièrement préférée dans la plage de 50 % en poids à 80 % en poids, par rapport au poids total de la composition résultante (mélange) d'agent de sulfonation et de matière de départ, et/ou
où, dans l'étape (a), l'agent de sulfonation sous forme d'oléum et de préférence d'acide sulfurique concentré, d'une part, et la matière première, d'autre part, sont présents dans un rapport pondéral (oléum : acide sulfurique : matière première) compris dans la plage de (1 à 6) : (1 à 4) : (1 à 10), en particulier dans la plage de (1 à 5) : (1 à 3) : (1 à 6).

3. Procédé selon la revendication 1 ou 2,
où, dans l'étape (a), la sulfonation, en particulier le fait de laisser agir et de faire réagir l'agent de sulfonation avec le matériau de départ, est effectuée à température constante ou
où, dans l'étape (a), la sulfonation, en particulier le fait de laisser agir et de faire réagir l'agent de sulfonation avec le matériau de départ, est effectuée en utilisant un gradient de température et/ou un profil de température, en particulier où la formation du gradient de température et/ou du profil de température est effectuée en fonction du temps.

4. Procédé selon l'une quelconque des revendications précédentes,
où, en particulier dans l'étape (a), on effectue un séchage du matériau de départ sulfoné, en particulier où la partie liquide, en particulier aqueuse, éventuellement en excès de l'agent de sulfonation est au moins essentiellement éliminée, et/ou
où, dans l'étape (a), après avoir laissé agir et réagir l'agent de sulfonation avec le matériau de départ et/ou après avoir séché le matériau de départ sulfoné et/ou après avoir effectué l'étape (a) et/ou avant d'effectuer l'étape (b), on effectue un refroidissement du matériau de départ sulfoné, en particulier à des températures dans la plage de 15 °C à 30 °C, et/ou
où le repos et/ou la conservation de la matière première sulfonée est effectués à des températures comprises entre 15 °C et 30 °C et/ou dans une atmosphère ambiante, en particulier de l'air (ambiant), ou sous une atmosphère inerte, en particulier sous une atmosphère d'azote, et/ou
où le repos et/ou le stockage de la matière première sulfonée est effectué pendant une période de temps dans la plage de 1 jour à 6 mois, de préférence dans la plage de 2 jours à 3 mois, de préférence dans la plage de 5 jours à 1 mois, et/ou
où une post-sulfonation et/ou une augmentation de volume ultérieure et/ou supplémentaire (expansion de volume ultérieure et/ou supplémentaire) de la matière de départ sulfonée a lieu lors de la mise au repos et/ou de la conservation, et/ou
où, dans l'étape (a) et/ou en laissant reposer et/ou en conservant le matériau de départ sulfoné, le matériau de départ est équipé de groupes chimiques, en particulier de groupes chimiques fortement acides, de préférence de groupes d'acide sulfonique, en particulier où les groupes chimiques, lors de leur décomposition thermique, conduisent à des radicaux libres et donc à des réticulations chimiques.

5. Procédé selon l'une quelconque des revendications précédentes,
le matériau de départ étant utilisé sous la forme d'un matériau de départ granulaire et/ou sphérique, en particulier sphérique, et/ou le matériau de départ étant utilisé sous la forme de grains et/ou sous la forme d'une sphère, en particulier sphérique, et/ou
le matériau de départ présentant une taille de particules, en particulier un diamètre de particules, dans la plage de 0,01 mm à 2,5 mm, en particulier dans la plage de 0,02 mm à 2 mm, de préférence dans la plage de 0,05 mm à 1,5 mm, de préférence dans la plage de 0,1 mm à 1,25 mm, de manière particulièrement préférée dans la plage de 0,15 mm à 1 mm, de manière tout à fait préférée dans la plage de 0,2 mm à 0,9 mm, en particulier où au moins 70 % en poids de la taille de particules, en particulier le diamètre de particules, est compris dans la plage de 0,02 mm à 2 mm.%, en particulier au moins 80 % en poids, de préférence au moins 85 % en poids, de préférence au moins 90 % en poids, de manière particulièrement préférée au moins 95 % en poids, des particules du matériau de départ présentent des tailles de particules, en particulier des diamètres de particules, dans les plages susmentionnées, et/ou
l'expansion de volume (augmentation de volume) du matériau de départ s'effectuant de telle sorte que la taille des particules, en particulier le diamètre des particules, et/ou la taille moyenne des particules (D50), en particulier le diamètre moyen des particules (D50), du matériau de départ sulfoné soit augmentée d'au moins 5 %, de préférence au moins 10 %, par rapport à la taille des particules, en particulier le diamètre des particules, du matériau de départ non sulfoné et/ou par rapport à la taille moyenne des particules (D50), en particulier le diamètre moyen des particules (D50), du matériau de départ non sulfoné et/ou
le matériau de départ, en particulier sous la forme du matériau de départ granuleux et/ou sphérique, en particulier sphérique, étant poreux, en particulier microporeux, et/ou sous forme de gel et/ou
le matériau de départ présentant un pourcentage de volume de micropores, par rapport au volume total de pores du matériau de départ, d'au moins 30 %, en particulier d'au moins 40 %, de préférence d'au moins 50 %, de préférence d'au moins 60 %, de manière particulièrement préférée d'au moins 70 %, et/ou
le matériau de départ présentant un pourcentage de volume de micropores, par rapport au volume total de pores du matériau de départ, dans la plage de 30 % à 85 %, en particulier dans la plage de 40 % à 80 %, de préférence dans la plage de 50 % à 75 %.

6. Procédé selon l'une quelconque des revendications précédentes,
l'étape (a) étant exécutée séparément et/ou séparément, en particulier séparée dans l'espace et/ou dans le temps, de l'étape (b) et/ou de l'étape (c), en particulier séparée et/ou séparée de l'étape (b) et de l'étape (c), et/ou
l'étape (a) précédant l'étape (b) et/ou l'étape (c) en tant qu'étape séparée, en particulier séparée dans l'espace et/ou dans le temps, et/ou séparée
l'étape (a) étant réalisée dans un dispositif séparé, en particulier un dispositif de sulfonation et/ou de réaction, et/ou
où, dans l'étape (b), la carbonisation du matériau de départ sulfoné est effectuée dans un dispositif séparé et/ou de manière séparée dans l'espace et/ou dans le temps de la sulfonation et/ou
un dispositif de carbonisation, en particulier un tube rotatif, de préférence un four rotatif, et/ou dans un four à bande, étant utilisé dans l'étape (b).

7. Procédé selon l'une quelconque des revendications précédentes,
où, dans l'étape (b), la carbonisation est effectuée de telle sorte que les groupes chimiques, en particulier les groupes chimiques fortement acides, de préférence les groupes d'acide sulfonique, en particulier avec formation de radicaux libres et/ou avec formation de réticulations, sont décomposés thermiquement et/ou séparés de la matière de départ sulfonée, de sorte qu'il se produit en particulier un début de carbonisation et/ou une décomposition thermique de la matière de départ, de préférence avec réticulation des polymères de la matière de départ et/ou formation de matière carbonée, et/ou
la carbonisation étant effectuée dans l'étape (b) de telle sorte qu'en particulier après la décomposition thermique et/ou la séparation des groupes chimiques, en particulier des groupes chimiques fortement acides, de préférence des groupes d'acide sulfonique, il se produit une carbonisation en particulier plus poussée et/ou en particulier complète du matériau de départ,
en particulier la décomposition thermique et/ou la séparation des groupes chimiques, en particulier des groupes chimiques fortement acides, de préférence des groupes d'acide sulfonique, s'effectuant en particulier dans une première zone de température du dispositif de carbonisation et/ou à des températures dans la plage de 100 °C à 600 °C, en particulier dans la plage de 150 °C à 500 °C, et/ou
en particulier où la carbonisation plus poussée et/ou complète du matériau de départ a lieu dans une deuxième zone de température du dispositif de carbonisation, en particulier où la deuxième zone de température est disposée en aval de la première zone de température, et/ou où la carbonisation plus poussée et/ou complète du matériau de départ a lieu à des températures dans la plage de 400 °C à 1200 °C, en particulier dans la plage de 500 °C à 1000 °C.

8. Procédé selon l'une quelconque des revendications précédentes,
où, à l'étape (c), l'activation du matériau de départ carbonisé est effectuée de la même manière dans le dispositif de carbonisation (dispositif de carbonisation ou d'activation), en particulier comme défini dans la revendication 6, ou bien où, à l'étape (c), l'activation du matériau de départ carbonisé est effectuée dans un dispositif d'activation séparé et/ou de manière séparée dans l'espace et/ou dans le temps de la carbonisation et/ou
l'activation étant effectuée dans l'étape (c) en présence d'au moins un gaz d'activation, en particulier de l'oxygène, notamment sous forme d'air, de vapeur d'eau et/ou de dioxyde de carbone ou de mélanges de ces gaz d'activation, et/ou en présence d'un mélange gaz inerte/vapeur d'eau, de préférence un mélange azote/vapeur d'eau, et/ou en présence de dioxyde de carbone notamment pur ou d'un mélange gaz inerte/dioxyde de carbone, notamment un mélange azote/dioxyde de carbone, et/ou
où, dans l'étape (c), l'activation est réalisée en plusieurs étapes, en particulier en deux étapes, le matériau de départ carbonisé étant d'abord soumis, dans une première étape d'activation, à une activation dans une atmosphère contenant de la vapeur d'eau, suivie d'une deuxième étape d'activation dans une atmosphère contenant du dioxyde de carbone.

9. Charbon actif particulaire, de préférence granulaire et/ou sphérique, de préférence sphérique, avec une proportion accrue de volume de mésopores, le charbon actif pouvant être obtenu par un procédé selon l'une quelconque des revendications 1 à 8,
le charbon actif présentant un volume poreux total, en particulier un volume poreux total selon Gurvich, d'au moins 0,5 cm³/g, en particulier d'au moins 0,75 cm³/g, de préférence d'au moins 1 cm^{(3)/g}, de préférence d'au moins 1,25 cm³/g, de manière particulièrement préférée d'au moins 2 cm³/g,
où 25 % à 85 %, de préférence 25 % à 75 %, de préférence 30 % à 70 %, du volume total de pores, en particulier du volume total de pores selon Gurvich, du charbon actif sont formés par des pores ayant des diamètres de pores dans la plage de 2 nm à 50 nm; et
où le charbon actif présente une résistance à l'abrasion d'au moins 95 %, en particulier d'au moins 96 %, de préférence d'au moins 97 %, de préférence d'au moins 98 %, de manière particulièrement préférée d'au moins 99 %, de manière tout particulièrement préférée d'au moins 99,5 %, déterminée selon la norme CEFIC modifiée.

10. Charbon actif selon la revendication 9,
où 60 % à 99,5 %, en particulier 60 % à 99 %, de préférence 80 % à 98 %, de préférence 90 % à 95 %, du volume total des pores formés par des pores ayant des diamètres de pores dans la plage de 2 nm à 50 nm, en particulier du volume total des pores formés par des pores ayant des diamètres de pores dans la plage de 2 nm à 50 nm selon Gurvich, du charbon actif sont formés par des pores ayant des diamètres de pores dans la plage de 2 nm à 20 nm, en particulier dans la plage de 2 nm à 10 nm, de préférence dans la plage de 2 nm à 5 nm, de préférence dans la plage de 2,5 nm à 4,5 nm, et/ou
où au moins 60 %, en particulier au moins 70 %, de préférence au moins 80 %, de préférence au moins 90 %, de manière particulièrement préférée au moins 95 %, de manière tout particulièrement préférée au moins 98 %, de manière encore plus préférée au moins 99 %, de manière encore plus préférée au moins 99,5 %, du volume poreux total du charbon actif formé par des pores ayant des diamètres de pores dans la plage de 2 nm à 100 nm, en particulier dans la plage de 2 nm à 50 nm, et/ou du volume poreux total formé par des pores ayant des diamètres de pores dans la plage de 2 nm à 100 nm, en particulier dans la plage de 2 nm à 50 nm, après Gurvich du charbon actif, sont formés par des pores ayant des diamètres de pores dans la plage de 2 nm à 20 nm, en particulier dans la plage de 2 nm à 10 nm, de préférence dans la plage de 2 nm à 5 nm, de préférence dans la plage de 2,5 nm à 4,5 nm.

11. Utilisation du charbon actif selon la revendication 9 ou 10
pour l'adsorption de substances toxiques, de polluants et d'odeurs, notamment dans des flux de gaz ou d'air, ou pour la purification ou le traitement de gaz, notamment d'air ou de liquides
en particulier de l'eau, et/ou
à utiliser dans des matériaux filtrants d'adsorption, notamment pour la fabrication de vêtements de protection, et/ou
comme réservoir de sorption pour les gaz ou les liquides et/ou dans le domaine de l'industrie alimentaire, en particulier pour le traitement et/ou la décoloration des aliments, et/ou
dans le domaine de la médecine ou de la pharmacie, notamment en tant que médicament ou composant de médicament, et/ou
pour la fabrication d'équipements et/ou d'objets de protection de toutes sortes, en particulier de vêtements de protection, notamment pour le domaine civil ou militaire, tels que des combinaisons de protection, des gants de protection, des chaussures de protection, des chaussettes de protection, des vêtements de protection de la tête et similaires, et de couvertures de protection de toutes sortes, de préférence tous les matériaux de protection susmentionnés pour l'utilisation ABC et/ou ayant une fonction de protection contre des substances radioactives nocives et/ou toxiques et/ou contre des substances biologiques nocives et/ou toxiques et/ou contre des substances chimiques
pour la fabrication de filtres et de matériaux filtrants de tous types, en particulier pour l'élimination de substances nocives, odorantes et toxiques de tous types, de préférence pour l'élimination de substances nocives et/ou toxiques radioactives et/ou de substances nocives et/ou toxiques biologiques et/ou de substances nocives et/ou toxiques chimiques, en particulier à partir de flux d'air et/ou de gaz, tels que des filtres de masques de protection ABC, des filtres anti-odeurs, des filtres de surface, des filtres à air, en particulier des filtres pour la purification de l'air ambiant, des structures de support adsorbantes et des filtres pour le domaine médical.

12. Équipements et/ou objets de protection de toutes sortes, en particulier pour le domaine civil ou militaire, notamment les vêtements de protection tels que les combinaisons de protection, les gants de protection, les chaussures de protection, les chaussettes de protection, les vêtements de protection de la tête et similaires, ainsi que les couvertures de protection, de préférence tous les équipements et/ou objets de protection précités pour l'utilisation NBC et/ou ayant une fonction de protection contre des substances radioactives nocives et/ou toxiques et/ou contre des substances biologiques nocives et/ou toxiques et/ou contre des substances chimiques nocives et/ou toxiques, fabriqués en utilisant un charbon actif tel que défini dans la revendication 9 ou 10 et/ou présentant un charbon actif tel que défini dans la revendication 9 ou 10.

13. Filtres et matériaux filtrants de tous types, notamment pour l'élimination de substances nocives, odorantes et toxiques de toutes sortes, de préférence pour l'élimination de substances radioactives nocives et/ou toxiques et/ou de substances biologiques nocives et/ou toxiques et/ou de substances chimiques nocives et/ou toxiques, en particulier dans des flux d'air et/ou de gaz, tels que des filtres de masque de protection, des filtres d'odeur, des filtres de surface, des filtres à air, en particulier des filtres pour la purification de l'air ambiant, des structures de support adsorbantes et des filtres pour le domaine médical, fabriqués en utilisant un charbon actif tel que défini dans la revendication 9 ou 10 et/ou présentant un charbon actif tel que défini dans la revendication 9 ou 10.
